# EUROPEAN PATENT APPLICATION

(11) **EP 1 382 624 A1**
(43) Date of publication of application: **21.01.2004**
(21) Application number: 03015987.5
(22) Date of filing: 14.07.2003
(51) Int. Cl.: C08G 18/09, C08G 18/50, C08G 18/18, C08G 18/16

(54) **Catalyst and process for producing a rigid polyurethane foam**

(30) Priority: 15.07.2002 JP 2002205506; 26.08.2002 JP 2002245644; 06.09.2002 JP 2002261282; 15.04.2003 JP 2003110020
(71) Applicant: Tosoh Corporation, Shunan-shi Yamaguchi-ken 746-8501 (JP)
(72) Inventor: Kiso, Hiroyuki, Shunan-shi, Yamaguchi-ken, 746-0021 (JP); Tokumoto, Katsumi, Shunan-shi, Yamaguchi-ken, 746-0044 (JP); Tamano, Yutaka, Shunan-shi, Yamaguchi-ken, 746-0081 (JP)
(74) Representative: Leson, Thomas Johannes Alois, Dipl.-Ing.

(57) **Abstract**

The present invention relates to:
(1) a catalyst for producing a rigid polyurethane foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises:
   (A) an aliphatic amine compound and at least one amine compound selected from the group consisting of triethylenediamine, N,N,N',N'-tetramethyl-1,6-hexanediamine and N,N-dimethylcyclohexylamine: or
   (B) an amine compound having an alkyl ether group and/or an aryl ether group in its molecule;
(2) a catalyst for producing a rigid polyisocyanurate foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises an aliphatic amine compound and a polyisocyanurate catalyst and
(3) a process for producing a rigid polyurethane foam excellent in the adhesive strength and flame retardancy of the foam and
(4) a process for producing a rigid polyisocyanurate foam excellent in the flame retardancy, adhesive strenght and dimensional stability of the foam.

## Description

The present invention relates to a catalyst for producing a rigid polyurethane foam and a process for producing a rigid polyurethane foam by means of such a catalyst. In the present invention, the rigid polyurethane foam includes an isocyanurate ring-containing polyurethane foam (hereinafter referred to as a rigid polyisocyanurate foam). More particularly, the present invention relates to:
(1) a catalyst for producing a rigid polyurethane foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises:
   (A) an aliphatic amine compound and at least one amine compound selected from the group consisting of triethylenediamine, N,N,N',N'-tetramethyl-1,6-hexanediamine and N,N-dimethylcyclohexylamine: or
   (B) an amine compound having an alkyl ether group and/or an aryl ether group in its molecule;
(2) a catalyst for producing a rigid polyisocyanurate foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises an aliphatic amine compound and a polyisocyanurate catalyst;
(3) a process for producing a rigid polyurethane foam excellent in the adhesive strength and flame retardancy of the foam, by means of the above-mentioned catalyst for forming a rigid polyurethane foam and, as a blowing agent, at least one blowing agent selected from the group consisting of 1,1,1,3,3-pentafluoropropane (HFC-245fa), 1,1,1,3,3-pentafluorobutane (HFC-365mfc) and a low boiling point hydrocarbon; and
(4) a process for producing a rigid polyisocyanurate foam excellent in the flame retardancy, adhesive strength and dimensional stability of the foam, by means of the above-mentioned catalyst for producing a rigid polyisocyanurate foam and, as a blowing agent, at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

Polyurethane foams are widely used as flexible foams to be used for seat cushions for automobiles, mattresses, furnitures, etc., as semirigid foams to be used for instrument panels for automobiles, headrests, armrests, etc., and as rigid foams to be used for electric refrigerators, building materials, etc.

The reaction for forming a rigid polyurethane foam consists mainly of a urethane bond-forming reaction (gelling reaction) by a reaction of a polyol with an isocyanate, and a urea group-forming reaction (blowing reaction) by a reaction of an isocyanate with water. The reaction for forming a rigid polyisocyanurate foam comprises, in addition to the above two types of reactions, an isocyanurate ring-forming reaction (trimerization reaction) by trimerization of an isocyanate. A catalyst presents a substantial influence not only to the rates of such reactions but also to the thermal conductivity of the foam, the curing rate of the foam surface, the adhesive strength, the moldability, the dimensional stability and the physical properties.

In recent years, in the production of rigid polyurethane foams, it is strongly desired to improve the thermal conductivity from the viewpoint of reduction of costs or energy saving, to attain an excellent curing rate to improve the productivity, and to secure excellent moldability to improve the yield.

Further, dichloromonofluoroethanes (HCFC analogues) which used to be employed as blowing agents in the production of rigid polyurethane foams, have an ozone depletion problem. Accordingly, as substitute blowing agents, in recent years, it has been proposed to use 1,1,1,3,3-pentafluoropropane (HFC-245fa) or 1,1,1,3,3-pentafluorobutane (HFC-365mfc) as a hydrofluorocarbon (HFC) free from the ozone depletion problem, or a hydrocarbon such as 2-methylpropane, pentane, 2-methylbutane or cyclopropane (e.g. JP-A-2001-158815).

Further, the flame retardancy, safety, etc. of rigid polyurethane foams have become important to satisfy Product Liability (PL) Law, Responsible Care (RC), etc. Among rigid polyurethane foams, an isocyanurate ring-containing polyurethane foam is a foam having an isocyanurate structure formed by a trimerization of an isocyanate and has been widely used as a flame retardant material, since the decomposition temperature of the isocyanurate ring is as high as at least 300°C.

As a catalyst for producing a polyurethane foam, it is common to employ a catalyst which accelerates the reaction of a polyisocyanate with a polyol (gelling reaction) and/or the reaction of a polyisocyanate with water (blowing reaction). Heretofore, an organic metal catalyst or a tertiary amine catalyst has been used, and particularly, it is already widely known that a tertiary amine catalyst will be a catalyst excellent for the production of a polyurethane foam. Among such tertiary amine catalysts, those industrially used as catalysts for production of polyurethanes, may, for example, be compounds such as triethylenediamine, N,N,N',N'-tetramethyl-1,6-hexanediamine, N,N-dimethylcyclohexylamine, bis(2-dimethylaminoethyl) ether, N,N,N',N",N"-pentamethyldiethylenetriamine, N-methylmorpholine and N-ethylmorpholine (e.g. JP-A-01-168717, or "Polyurethane Resin Handbook", edited by Keiji Iwata, published by Nikkan Kogyo Shinbunsha K.K. in 1987, p. 118).

On the other hand, as catalysts to accelerate the polyisocyanurate reaction (trimerization of a polyisocyanate), heretofore, organic metal type catalysts such as alkali metal salts of carboxylic acids, alkaline earth metal salts or carboxylic acids, metal alcoholates, metal phenolates and metal hydroxides, tertiary amines, tertiary phosphines, onium salt compounds of phosphorus and quaternary ammonium salts, have been used. Among such polyisocyanurate catalysts, alkali metal salts of carboxylic acids, such as potassium acetate and potassium 2-ethylhexanoate, quaternary ammonium salts such as a hydroxyalkyltrimethyl quaternary ammonium 2-ethylhexanoate, S-triazine compounds such as 1,3,5-tris(N,N-dimethylaminopropyl)hexahydro-S-triazine, or specific tertiary amines such as 2,4,6-tris(dimethylaminomethyl)phenol, are industrially widely used, since their isocyanurate activities are high.

Further, it is known that a hydroxyalkylquaternary ammonium compound of the following formula (7) has a high isocyanurate activities (e.g. JP-A-52-17484): 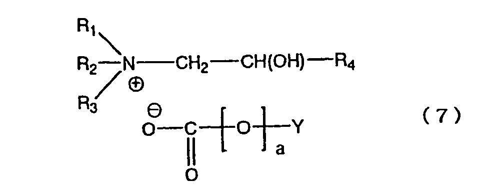 wherein a is 0 or 1; each of R₁, R₂ and R₃ which are independent of one another, is a C₁₋₂₀ alkyl or hydroxyalkyl group, a C₃₋₈ cycloalkyl group, an aralkyl group, an aryl group, a C₂₋₂₀ alkenyl group, or a C₂₋₆ alkynyl group, or R₁, R₂ and R₃ together form a heterocyclic structure selected from the group consisting of triethylenediamine, quinuclidine, N-methylmorpholine, N-ethylmorpholine and N,N'-dimethylpiperazine; R₄ is hydrogen, a phenyl group, a C₁₋₁₅ alkyl group, a C₂₋₁₅ alkenyl group, a C₁₋₉ hydroxyalkyl group, a ketoalkyl group having a total carbon number of from 3 to 15, or an alkoxyalkyl group having a total carbon number of from 2 to 20; Y is hydrogen, a C₁₋₂₀ alkyl group, a C₂₋₁₅ alkenyl group, a C₃₋₆ cycloalkyl group, a phenyl group, an alkylphenyl group having one or more C₁₋₉ alkyl groups attached to the phenyl ring, a benzyl group, an alkylbenzyl group having one or more C₁₋₉ alkyl groups attached to the ring, or a CH_{(3-b)}Z_{(b)} group (wherein b=1 to 3; Z=OH, CN, Cl, a C₁₋₅ alkoxy group, a phenyl or methoxyphenyl group, or a (CH₂)_{d}COOR group, wherein d=0 to 4; R=hydrogen or an alkyl group having at most 20 carbon atoms).

Further, a process for producing a rigid polyisocyanurate foam has been proposed wherein a hydroxyalkyl type quaternary ammonium organic salt such as a quaternary ammonium salt of the following formula (8), or a quaternary ammonium organic salt of the following formula (9) is used as a catalyst (e.g. JP-A-10-017638, JP-A-09-124760): 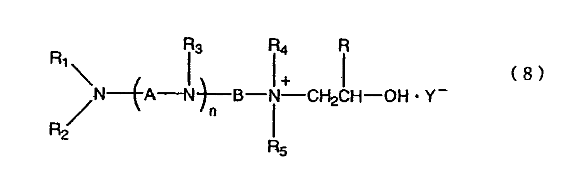 wherein each of A and B which are independent of each other, is a linear or branched alkylene group having 2 or 3 carbon atoms, n is an integer of from 1 to 3, each of R₁, R₂, R₃, R₄, and R₄ which are independent of one another, is a C₁₋₆ alkyl group, or R₁, R₂ and R₃, or R₃, R₄ and R₅ may be bonded to one another to form a heterocyclic structure of a piperazine ring, R is hydrogen, a phenyl group, a C₁₋₁₀ alkyl group, a C₂₋₁₀ alkenyl group or a C₂₋₁₀ alkynyl group, and Y- is a C₁₋₂₀ alkyl or hydroxyalkyl group, a C₂₋₁₀ alkenyl group, a C₃₋₇ cycloalkyl group, a C₆₋₂₄ aryl group, a C₇₋₂₄ aralkyl group, or a carboxylic acid anion having a methoxybenzyl group; 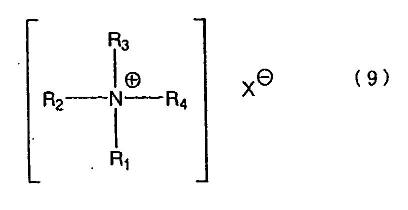 wherein each of R₁ to R₃ is a C₁₋₁₁ linear or branched, saturated or unsaturated hydrocarbon group, provided that two among R₁ to R₃ may form a hetero ring via a carbon, oxygen or nitrogen atom, R₄ is a C₁₋₈ alkyl group or an aromatic hydrocarbon group, and X is an organic acid group.

As a catalyst for the production of a polyisocyanurate foam, it is already known to use in combination a catalyst to accelerate the reaction of a polyisocyanate with a polyol (gelling reaction) and/or a catalyst to accelerate the reaction of a polyisocyanate with water (blowing reaction), and a catalyst to accelerate the polyisocyanurate reaction (trimerization of a polyisocyanate).

For example, JP-A-11-140150 discloses, as examples of such a catalyst, an amine type catalyst such as triethylamine, N,N-dimethylcyclohexylamine, dimethylpropylamine, N,N,N',N'-tetramethylethylenediamine, N,N,N',N'-tetramethylpropane, 1,3-diamine, N,N,N',N'-tetramethylhexane-1,6-diamine, pentamethyldiethylenetriamine, tetramethylguanidine or triethylenediamine; an alcohol amine type catalyst such as dimethylaminoethanol or dimethylaminoethoxyethanol; an ether amine type catalyst such as aminopropyl ether, bis(2-dimethylaminoethyl) ether, ethylene glycol bis(3-diethyl)-aminopropyl ether; an organic metal catalyst, such as stannous octoate, dibutyltin diacetate, dibutyltin laurate, dibutyltin mercaptide, dibutyltin dimaleate, dioctyltin mercaptide, dioctyltin thiocarboxylate, phenylmercury propionate, an octenate or an organic metal catalyst which can be represented by the formula R₃Si-SR' or RZn-OR'; a metal oxide type catalyst such as lithium oxide or tributyltin oxide; a hydride type catalyst such as sodium borohydride; an alkoxide type catalyst such as sodium methoxide; a hydroxide type catalyst containing an element such as quaternary nitrogen or phosphorus; and a carboxylate type catalyst such as sodium acetate, sodium carbonate, potassium acetate, nickel naphthenate, cobalt naphthenate and an alkali soap. It is disclosed that such catalysts may be used alone or in combination as a mixture.

Further, as such a catalyst, JP-A-2002-121252 discloses to use in combination a trimerization catalyst (isocyanurate catalyst) such as an alkali metal salt of a carboxylic acid such as potassium octylate, potassium acetate or potassium propionate, a lead compound such as lead octylate or lead naphthenate, or a s-triazine compound such as N,N',N"-tris(diaminopropyl)hexahydro-s-triazine, and a tertiary amine catalyst such as triethylamine, dimethylethanolamine or pentamethyldiethylenetriamine (PMDETA).

However, HFC-245fa, HFC-365mfc or a hydrocarbon such as 2-methylpropane, pentane, 2-methylbutane or cyclopropane, is hardly soluble in a polyol as compared with HCFC analogues and is expensive, and as such, it may be used only in a small amount in an admixture. Accordingly, in a formulation of a rigid polyurethane foam using HFC-245fa, HFC-365mfc or a hydrocarbon such as 2-methylpropane, pentane, 2-methylbutane or cyclopropane, as a blowing agent, if the above-mentioned tertiary amine catalyst is used, the amount of water to be used will be substantial, whereby there will be a problem that as compared with a rigid polyurethane foam using conventional HCFC or the like as a blowing agent, the foam will be inferior in flowability, adhesive strength and dimensional stability, and it has been strongly desired to improve such properties.

Further, in the process for the production of a rigid polyisocyanurate foam, in a case where the above-mentioned conventional polyisocyanurate catalyst, is used alone or in combination with the above-mentioned catalyst for producing a polyurethane foam, the urethane and isocyanurate activities are high at a relatively high temperature, but under a low temperature reaction condition, such activities are not high enough for curing, and there has been a problem that brittleness of the surface of the foam (friability) tends to deteriorate, and the adhesive strength with a face material will deteriorate, or the flame retardancy will be substantially poor.

In a case where a HFC analogue such as HFC-245fa or HFC-365mfc is used as a blowing agent in the process for producing a rigid polyisocyanurate foam, as mentioned above, it is hardly soluble in a polyol and expensive from the viewpoint of the price, as compared with a HCFC analogue, whereby it may be used only in a small amount in an admixture. Accordingly, a formulation is being studied wherein the amount of the HFC analogue is reduced, and instead, the amount of water is increased. However, in a case where the above-mentioned conventional catalyst for producing a polyurethane foam and polyisocyanurate catalyst are used in combination, as the amount of water used is increased, the curing rate, moldability and flowability of the foam will deteriorate, and brittleness of the surface of the rigid foam (friability) will increase, whereby the adhesive strength and the dimensional stability, flame retardancy, etc. will substantially deteriorate. Therefore, it is strongly desired to develop a catalyst suitable for a formulation wherein the amount of a HFC analogue is reduced and the amount of water is increased.

Further, it is common to add a flame retardant in order to improve the flame retardancy of a polyurethane foam. However, in the case of a rigid polyisocyanurate foam, it is important to have highly thermally stable isocyanurate rings properly formed in the foam structure in combination with proper use of a flame retardant. For this purpose, it is strongly desired to develop a catalyst which has a high polyisocyanurate activity (trimerization activity) and which is capable of improving the flame retardancy of the polyisocyanurate foam.

The present invention has been made in view of the above problems, and it is an object of the present invention to solve the problems of the prior art and to provide a process for producing a rigid polyurethane foam having the flowability, adhesive strength and dimensional stability of the foam improved in a case where HFC-245fa, HFC-365mfc or a hydrocarbon is used as a blowing agent, and a catalyst composition for such a process.

As a result of an extensive study to solve the above problems, the present inventors have found a catalyst composition for producing a rigid polyurethane foam by means of HFC-245fa, HFC-365mfc or a hydrocarbon as a blowing agent, and have found that by using the catalyst composition, it is possible to obtain a rigid polyurethane foam excellent in the flowability, adhesive strength and dimensional stability of the foam. Further, it has been found that by using a specific aliphatic amine compound and a polyisocyanurate catalyst in combination, it is possible to obtain a rigid polyisocyanurate foam excellent in the curing rate, adhesive strength, dimensional stability and flame retardancy of the foam surface. The present invention has been accomplished on the basis of these discoveries.

Namely, the present invention provides:
(1) A catalyst for producing a rigid polyurethane foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises:
   (A) an amine compound of the following formula (1): 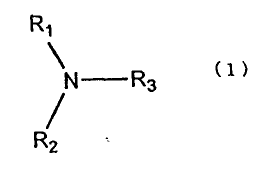 wherein each of R₁, R₂ and R₃ which are independent of one another, is a C₁₋₂₀ alkyl group, and at least one amine compound selected from the group consisting of triethylenediamine, N,N,N',N'-tetramethyl-1,6-hexanediamine and N,N-dimethylcyclohexylamine; or
   (B) an amine compound having an alkyl ether group and/or an aryl ether group in its molecule;
(2) A catalyst for producing a rigid
   polyisocyanurate foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises an aliphatic amine compound of the following formula (1): 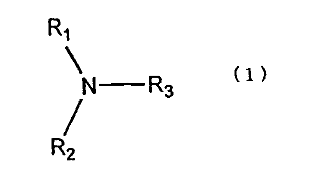 wherein each of R₁, R₂ and R₃ which are independent of one another, is a C₁₋₂₀ alkyl group, and a polyisocyanurate catalyst;
(3) A process for producing a rigid polyurethane foam, which comprises reacting a polyol with a polyisocyanate in the presence of an amine catalyst and a blowing agent, wherein the amine catalyst is:
   (A) a catalyst composition comprising an amine compound of the following formula (1): 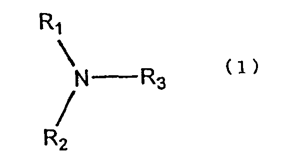 wherein each of R₁, R₂ and R₃ which are independent of one another, is a C₁₋₂₀ alkyl group, and at least one compound selected from the group consisting of triethylenediamine, N,N,N',N'-tetramethyl-1,6-hexanediamine and N,N-dimethylcyclohexylamine; or
   (B) a catalyst comprising an amine compound having an alkyl ether group and/or an aryl ether group in its molecule; and the blowing agent is:
      at least one blowing agent selected from the group consisting of 1,1,1,3,3-pentafluoropropane (HFC-245fa), 1,1,1,3,3-pentafluorobutane (HFC-365mfc) and a low boiling point hydrocarbon; and
(4) A process for producing a rigid polyisocyanurate foam, which comprises reacting a polyol with a polyisocyanate in the presence of a catalyst and a blowing agent, wherein the catalyst is a catalyst composition comprising an aliphatic amine compound of the following formula (1): 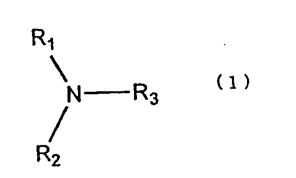
wherein each of R₁, R₂ and R₃ which are independent of one another, is a C₁₋₂₀ alkyl group, and a polyisocyanurate catalyst, and the blowing agent is at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

Now, the present invention will be described in detail with reference to the preferred embodiments.

In the present invention, the rigid urethane foam means a foam having a highly crosslinked closed cell structure, which is not reversibly deformable as disclosed by Gunter Oertel, "Polyurethane Handbook" (1985) Hanser Publishers (Germany), p. 234-313 or by Keiji Iwata "Polyurethane Resin Handbook" (first edition in 1987) published by Nikkan Kogyo Shinbunsha, p. 224-283. The physical properties of the rigid urethane foam are not particularly limited. However, the density is usually within a range of from 10 to 100 kg/m³, and the compressive strength is within a range of from 50 to 1,000 kPa. Further, in the present invention, the rigid polyurethane foam includes an isocyanurate ring-containing polyurethane foam (hereinafter referred to as a rigid polyisocyanurate foam).

Firstly, the rigid polyurethane foam catalyst of the present invention will be described.

The amine catalyst in the present invention is:
(A) A catalyst composition comprising an amine compound of the following formula (1): 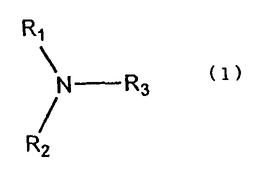 wherein each of R₁, R₂ and R₃ which are independent of one another, is a C₁₋₂₀ alkyl group, and at least one amine compound selected from the group consisting of triethylenediamine, N,N,N',N'-tetramethyl-1,6-hexanediamine and N,N-dimethylcyclohexylamine; or
(B) A catalyst comprising an amine compound having an alkyl ether group and/or an aryl ether group in its molecule.

In the amine compound of the formula (1) in the present invention, each of R₁, R₂ and R₃ which are independent of one another, is preferably a C₁₋₁₆ alkyl group, such as, a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

In the present invention, the amine compound of the formula (1) is not particularly limited so long as it corresponds to the above-described amine compound. Specifically, it may, for example, be trimethylamine, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine, dimethylhexadecylamine, dimethylheptadecylamine, dimethyloctadecylamine, diethylmethylamine, triethylamine, diethylpropylamine, diethylbutylamine, diethylpentylamine, diethylhexylamine, diethylheptylamine, diethyloctylamine, diethylnonylamine, diethyldecylamine, diethylundecylamine, diethyldodecylamine, diethyltridecylamine, diethyltetradecylamine, diethylpentadecylamine, diethylhexadecylamine, diethylheptadecylamine, diethyloctadecylamine, methylethylpropylamine, methylethylbutylamine, methylethylpentylamine, methylethylhexylamine, methylethylheptylamine, methylethyloctylamine, methylethylnonylamine, methylethyldecylamine, methylethylundecylamine, methylethyldodecylamine, methylethyltridecylamine, methylethyltetradecylamine, methylethylpentadecylamine, methylethylhexadecylamine, methylethylheptadecylamine or methylethyloctadecylamine.

Among these aliphatic amine compounds, an aliphatic amine compound wherein each of R₁ and R₂ is a methyl group, and R₃ is a C₂₋₁₆ alkyl group, is particularly preferred, since its catalytic activities are high, and it can industrially advantageously be used. Specifically, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine or dimethylhexadecylamine may, for example, be mentioned as a particularly preferred aliphatic amine compound.

The amine compound of the formula (1) to be used for the catalyst composition of the present invention, can easily be produced by a method known in literature. For example, a method by reductive methylation of a monoamine or amination of an alcohol, or a method by a reaction of an alkyl halide with a dialkylamine, may be mentioned. The composition of the amine compound of the above formula (1) and at least one amine compound selected from the group consisting of triethylenediamine, N,N,N',N'-tetramethyl-1,6-hexanediamine and N,N-dimethylcyclohexylamine, to be used in the present invention, is not particularly limited, but it preferably comprises from 10 to 95 wt% of the amine compound of the formula (1) and from 90 to 5 wt% of at least one amine compound selected from the group consisting of triethylenediamine, N,N,N',N'-tetramethyl-1,6-hexanediamine and N,N-dimethylcyclohexylamine. If the amine compound of the formula (1) is less than 10 wt%, the adhesive strength of the foam is likely to be poor. On the other hand, if the amine compound of the formula (1) exceeds 95 wt%, the flowability or dimensional stability of the foam is likely to deteriorate, or the amount of the catalyst to be used, will increase, and such may be disadvantageous from the viewpoint of the cost.

Further, the rigid polyurethane production catalyst of the present invention which comprises an amine compound having an alkyl ether group and/or an aryl ether group in its molecule, is not particularly limited. However, at least one amine compound having an alkyl ether group and/or an aryl ether group in its molecule, selected from the group consisting of an amine compound of the following formula (2): 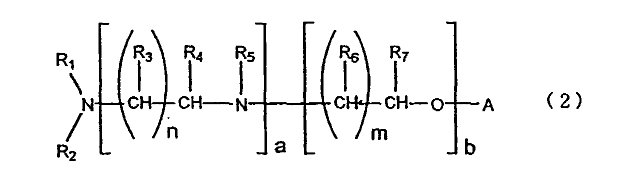 wherein each of R₁ to R₇ which are independent of one another, is hydrogen, a C₁₋₁₆ alkyl group, a C₁₋₁₆ aryl group, a C₁₋₆ dimethylaminoalkyl group or a C₁₋₁₆ alkoxyalkyl group, A is a C₁₋₁₆ alkyl group or a C₁₋₁₆ aryl group, n is an integer of from 1 to 11, m is an integer of from 1 to 11, a is an integer of from 0 to 10, b is an integer of from 1 to 10, provided that R₅ and R₁ or R₂ may bond to form a 5- to 7-membered ring, and an amine compound of the following formula (3): 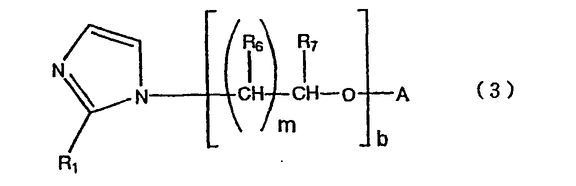 wherein R₁, R₆, R₇, A, m and b are as defined in the above formula (2), may, for example, be mentioned as a preferred compound.

Among these, an amine compound of the above formula (2) wherein each of R¹ to R⁷ which are independent of one another, is a hydrogen atom, a C₁₋₁₀ alkyl group, a C₁₋₁₀ aryl group, a C₁₋₆ dimethylaminoalkyl group or a C₁₋₁₀ alkoxyalkyl group, n is an integer of from 1 to 11, m is an integer of from 1 to 11, a is an integer of from 0 to 5, b is an integer of from 1 to 5, provided that R₅ and R₁ or R₂ may be bonded to form a 5- to 7-membered ring, or an amine compound of the above formula (3) wherein each of R₁, R₆ and R₇ which are independent of one another, is a hydrogen atom, a C₁₋₁₀ alkyl group, a C₁₋₁₀ aryl group, a C₁₋₆ dimethylaminoalkyl group or a C₁₋₁₀ alkoxyalkyl group, m is an integer of from 1 to 11, and b is an integer of from 1 to 5, is preferred as the catalyst for producing a rigid polyurethane foam of the present invention.

In the present invention, each of R₁ to R₇ in the amine compound of the above formula (2), which are independent of one another, is preferably a hydrogen atom, a methyl group, a dimethylaminoethyl group, a dimethylaminopropyl group, a methoxyethyl group, a methoxypropyl group, a methoxyisopropyl group, an ethoxyethyl group, an ethoxypropyl group, an ethoxyisopropyl group, a propoxyethyl group, a propoxypropyl group, a propoxyisopropyl group, a butoxyethyl group, a butoxypropyl group or a butoxyisopropyl group, provided that R₅ and R₁ or R₂ may be bonded to form a 5- to 7-membered ring.

In the present invention, each of R₁, R₆ and R₇ in the amine compound of the above formula (3), which are independent of one another, is preferably a hydrogen atom, a methyl group, a dimethylaminoethyl group, a dimethylaminopropyl group, a methoxyethyl group, a methoxypropyl group, a methoxyisopropyl group, an ethoxyethyl group, an ethoxypropyl group, an ethoxyisopropyl group, a propoxyethyl group, a propoxypropyl group, a propoxyisopropyl group, a butoxyethyl group, a butoxypropyl group or a butoxyisopropyl group.

In the present invention, substituent A in the amine compound of the above formula (2) or (3) is preferably a methyl group, an ethyl group, a propyl group, a butyl group, an amyl group, a hexyl group, a phenyl group or a benzyl group, particularly preferably a methyl group or an ethyl group, in order to obtain a rigid polyurethane foam excellent in the adhesive strength and dimensional stability.

The amine compound of the above formula (2) wherein R₅ and R₁ or R₂ are bonded to form a 5- to 7-membered ring, may, for example, be an amine compound of the following formula (4): 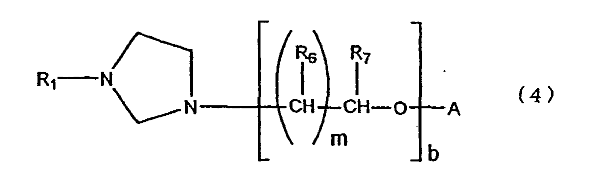 wherein R₁, R₆, R₇, A, m and b are as defined in the above formula (2), an amine compound of the following formula (5): 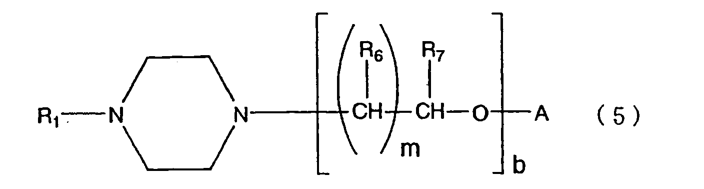 wherein R₁, R₆, R₇, A, m and b are as defined in the above formula (2), or an amine compound of the following formula (6): 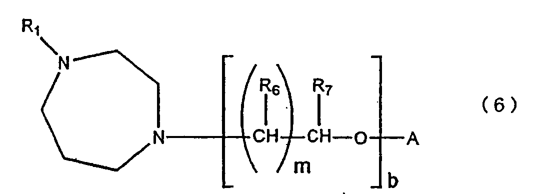 wherein R₁, R₆, R₇, A, m and b are as defined in the above formula (2).

In the present invention, the catalyst for producing a rigid polyurethane foam is not particularly limited so long as it corresponds to the above-mentioned amine compound. Specifically, the compound of the above formula (1) may, for example, be N,N-dimethylaminoethyl methyl ether, N,N-dimethylaminoethyl ethyl ether, N,N-dimethylaminopropyl methyl ether, N,N-dimethylaminopropyl ethyl ether, N,N-dimethylaminobutyl methyl ether, N,N-dimethylaminobutyl ethyl ether, N,N-dimethylaminopentyl methyl ether, N,N-dimethylaminopentyl ethyl ether, N,N-dimethylaminohexyl methyl ether, N,N-dimethylaminohexyl ethyl ether, N,N-dimethylaminoheptyl methyl ether, N,N-dimethylaminoheptyl ethyl ether, N,N-dimethylaminooctyl methyl ether, N,N-dimethylaminooctyl ethyl ether, N,N-dimethylaminononyl methyl ether, N,N-dimethylaminononyl ethyl ether, N,N-dimethylaminodecyl methyl ether, N,N-dimethylaminodecyl ethyl ether, N,N-dimethylaminoethoxyethyl methyl ether, N,N-dimethylaminoethoxyethyl ethyl ether, N,N-dimethylaminoethoxyisopropyl methyl ether, N,N-dimethylaminoethoxyisopropyl ethyl ether, N,N-dimethylaminoethoxyethoxyethyl methyl ether, N,N-dimethylaminoethoxyethoxyethyl ethyl ether, N,N-dimethylaminoethoxyethoxyisopropyl methyl ether, N,N-dimethylaminoethoxyethoxyisopropyl ethyl ether, N,N-dimethylaminoethyl-N'-methylaminoethoxy methyl ether, N,N-dimethylaminoethyl-N'-methylaminoethoxy ethyl ether, N,N-dimethylaminoethyl-N'-methylaminoisopropyl methyl ether, N,N-dimethylaminoethyl-N'-methylaminoisopropyl ethyl ether, N,N-dimethylaminopropyl-N'-methylaminoethyl methyl ether, N,N-dimethylaminopropyl-N'-methylaminoethyl ethyl ether, N,N-dimethylaminopropyl-N'-methylaminoisopropyl methyl ether, N,N-dimethylaminopropyl-N'-methylaminoisopropyl ethyl ether, N,N,N'-trimethyl-N'-methoxyethyl bisaminoethyl ether, N,N,N'-trimethyl-N'-ethoxyethyl bisaminoethyl ether, N,N,N'-trimethyl-N'-methoxyisopropyl bisaminoethyl ether, N,N,N'-trimethyl-N'-ethoxyisopropyl bisaminoethyl ether, N,N-dimethylaminoethyl-N'-methylaminoethyl-N"-methylaminoethyl methyl ether, N,N-dimethylaminoethyl-N'-methylaminoethyl-N"-methylaminoethyl ethyl ether, N,N-dimethylaminoethyl-N'-methylaminoethyl-N"- methylaminoisopropyl methyl ether, N,N-dimethylaminoethyl-N'-methylaminoethyl-N"-methylaminoisopropyl ethyl ether, N,N-dimethylaminoethyl-N' -methylaminoethyl-N"-methylaminoethyl-N‴-methylaminoethyl methyl ether, N,N-dimethylaminoethyl-N'-methylaminoethyl-N"-methylaminoethyl-N‴-methylaminoethyl ethyl ether, N,N-dimethylaminoethyl-N'-methylaminoethyl-N"-methylaminoethyl-N‴-methylaminoisopropyl methyl ether, N,N-dimethylaminoethyl-N'-methylaminoethyl-N"-methylaminoethyl-N‴-methylaminoisopropyl ethyl ether, N,N-bis(3-dimethylaminopropyl)-N-isopropyl methyl ether, N,N-bis(3-dimethylaminopropyl)-N-isopropyl ethyl ether, N-(2-methoxyethyl)-N'-methylpiperazine, N-(2-ethoxyethyl)-N'-methylpiperazine, 5-dimethylamino-3-methyl-1-pentyl methyl ether or 5-dimethylamino-3-methyl-1-pentyl ethyl ether. Further, the amine compound of the above formula (3) may, for example, be 1-(2'-methoxyethyl)imidazole, 1-(2'-ethoxyethyl)imidazole, 1-(2'-methoxyethyl)-2-methylimidazole, 1-(2'-ethoxyethyl)-2-methylimidazole, 1-(2'-methoxypropyl)-2-methylimidazole or 1-(2'-ethoxypropyl) -2-methylimidazole.

Among these amine compounds, particularly preferred from the viewpoint of high catalytic activities are N,N-dimethylaminoethyl methyl ether, N,N-dimethylaminoethyl ethyl ether, N,N-dimethylaminopropyl methyl ether, N,N-dimethylaminopropyl ethyl ether, N,N-dimethylaminobutyl methyl ether, N,N-dimethylaminobutyl ethyl ether, N,N-dimethylaminopentyl methyl ether, N,N-dimethylaminopentyl ethyl ether, N,N-dimethylaminohexyl methyl ether, N,N-dimethylaminohexyl ethyl ether, N,N-dimethylaminoethoxyethyl methyl ether, N,N-dimethylaminoethoxyethyl ethyl ether, N,N-dimethylaminoethyl-N'-methylaminoethyl methyl ether, N,N-dimethylaminoethyl-N'-methylaminoethyl ethyl ether, N,N-dimethylaminopropyl-N'-methylaminoethyl methyl ether, N,N-dimethylaminopropyl-N'-methylaminoethyl ethyl ether, N,N,N'-trimethyl-N'-methoxyethylbisaminoethyl ether, N,N,N'-trimethyl-N'-ethoxyethylbisaminoethyl ether, N,N-dimethylaminoethyl-N'-methylaminoethyl-N"-methylaminoisopropyl methyl ether, N,N-dimethylaminoethyl-N'-methylaminoethyl-N"-methylaminoisopropyl ethyl ether, N,N-bis(3-dimethylaminopropyl) -N-isopropyl methyl ether, N,N-bis(3-dimethylaminopropyl) -N-isopropyl ethyl ether, N-(2-methoxyethyl)-N'-methylpiperazine, N-(2-ethoxyethyl)-N'-methylpiperazine, 5-dimethylamino-3-methyl-1-pentyl methyl ether and 5-dimethylamino-3-methyl-1-pentyl ethyl ether.

The amine compound of the above formula (1) or (2) to be used as the catalyst for producing a rigid polyurethane foam of the present invention, can be easily produced by a method known in literature. For example, a method by etherification of a dialkylamino alcohol or by a reaction of an alkyl ether containing a halogenated group with a dialkylamine, may be mentioned.

Now, the catalyst for producing a rigid polyisocyanurate foam of the present invention will be described.

The catalyst for producing a rigid polyisocyanurate foam of the present invention comprises an aliphatic amine compound of the following formula (1): 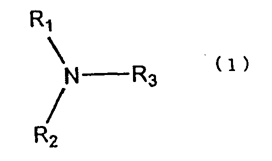 wherein each of R₁, R₂ and R₃ which are independent of one another, is a C₁₋₂₀ alkyl group, and a polyisocyanurate catalyst.

In the aliphatic amine compound of the above formula (1), each of R₁, R₂ and R₃ which are independent of one another, is preferably a C₁₋₁₆ alkyl group, such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

The aliphatic amine compound of the above formula (1) is not particularly limited so long as it corresponds to the above-mentioned amine compound. Specifically, it may, for example, be trimethylamine, triethylamine, tributylamine, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine, dimethylhexadecylamine, dimethylheptadecylamine, dimethyloctadecylamine, diethylmethylamine, triethylamine, diethylpropylamine, diethylbutylamine, diethylpentylamine, diethylhexylamine, diethylheptylamine, diethyloctylamine, diethylnonylamine, diethyldecylamine, diethylundecylamine, diethyldodecylamine, diethyltridecylamine, diethyltetradecylamine, diethylpentadecylamine, diethylhexadecylamine, diethylheptadecylamine, diethyloctadecylamine, methylethylpropylamine, methylethylbutylamine, methylethylpentylamine, methylethylhexylamine, methylethylheptylamine, methylethyloctylamine, methylethylnonylamine, methylethyldecylamine, methylethylundecylamine, methylethyldodecylamine, methylethyltridecylamine, methylethyltetradecylamine, methylethylpentadecylamine, methylethylhexadecylamine, methylethylheptadecylamine or methylethyldiethyloctadecylamine.

Among these aliphatic amine compounds, particularly preferred is an aliphatic amine compound wherein each of R₁ and R₂ is a methyl group, and R₃ is a C₂₋₁₆ alkyl group, since its catalytic activities are high, and it can be industrially advantageously used. Specifically, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine or dimethylhexadecylamine may, for example, be mentioned as a particularly preferred aliphatic amine compound.

As mentioned above, the amine compound of the above formula (1) to be used for the catalyst composition of the present invention, can easily be produced by a method known in literature. Namely, a method by reductive methylation of a monoamine or by amination of an alcohol, or a method by a reaction of an alkyl halide with a dialkylamine, may be mentioned.

The polyisocyanurate catalyst of the present invention is not particularly limited so long as it is a catalyst to accelerate the polyisocyanurate reaction (trimerization of a polyisocyanate). For example, as mentioned above, a conventional organic metal type catalyst, such as an alkali metal salt of a carboxylic acid, an alkaline earth metal salt of a carboxylic acid, a metal alcoholate, a metal phenolate or a metal hydroxide, a tertiary amine, a tertiary phosphine, an onium salt compound of phosphorus or a quaternary ammonium salt, may, for example, be used.

Among them, as an alkali metal salt of a carboxylic acid, potassium acetate or potassium 2-ethylhexanoate may, for example, be preferably employed, since the isocyanurate activities are high. Further, as the tertiary amine, a S-triazine compound such as 1,3,5-tris(N,N-dimethylaminopropyl)hexahydro-S-triazine, or 2,4,6-tris(dimethylaminomethyl)phenol, is preferably employed, since the catalytic activities and isocyanurate activities are high, and the total amount of the catalyst to be used, can be reduced.

Further, as the quaternary ammonium salt, a tetraalkylammonium halide such as tetramethylammonium chloride, a tetraalkylammonium hydroxide such as tetramethylammonium hydroxide, a hydroxyalkyl quaternary ammonium compound of the above formula (7) (JP-A-52-17484), a hydroxyalkyl type quaternary ammonium organic salt such as a quaternary ammonium salt of the above formula (8) (JP-A-10-017638), a quaternary ammonium organic salt of the above formula (9) (JP-A-09-124760), a tetraalkylammonium carbonate such as a quaternary ammonium carbonate of the following formula (10): 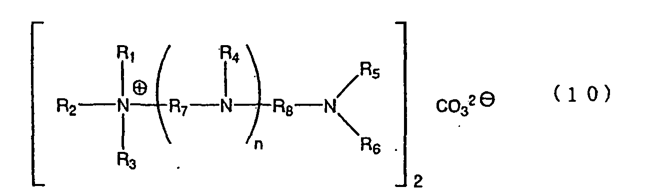 wherein each of R₁ to R₈ is a C₁₋₁₂ linear or branched, saturated or unsaturated hydrocarbon group, n is from 0 to 3, provided that when n=0, any of R₁ to R₃ may be optionally bonded to R₅ or R₆ to form a hetero ring, or in a case where n is from 1 to 3, R₅ or R₆ may be bonded to R₄ to form a hetero ring, (JP-A-11-199644), may, for example, be preferably employed, since the catalytic activities and the isocyanurate activities are high, and the total amount of the catalyst to be used can be reduced.

In the present invention, the composition of the aliphatic amine compound of the above formula (1) and the polyisocyanurate catalyst, is not particularly limited, but it preferably comprises from 10 to 90 wt% of the aliphatic amine compound of the formula (1) and from 90 to 10 wt% of the polyisocyanurate catalyst. More preferably, it comprises from 20 to 90 wt% of the amine compound and from 80 to 10 wt% of the polyisocyanurate catalyst. If the polyisocyanurate catalyst exceeds 80 wt%, the adhesive strength of the foam is likely to deteriorate. On the other hand, if it is less than 10 wt%, the flame retardancy and dimensional stability of the foam tends to deteriorate, and the amount of the catalyst to be used, tends to increase, such being disadvantageous from the viewpoint of the cost.

Now, the process for producing a rigid polyurethane foam of the present invention will be described.

The catalyst for producing a rigid polyurethane foam of the present invention is used as an amine catalyst in the process for producing a rigid polyurethane foam which comprises reacting a polyol with a polyisocyanate in the presence of an amine catalyst and a blowing agent.

In the process of the present invention, in a case where a catalyst composition comprising the amine compound of the above formula (1) and at least one member selected from the group consisting of triethylenediamine, N,N,N',N'-tetramethyl-1,6-hexanediamine and N,N-dimethylcyclohexylamine, is used as the amine catalyst, its amount is usually within a range of from 0.01 to 20 parts by weight, preferably from 0.05 to 10 parts by weight, per 100 parts by weight of the polyol to be used. If the amount of the amine catalyst is less than 0.01 part by weight, the moldability of the foam tends to deteriorate, and the dimensional stability is likely to be poor. On the other hand, if the amount of the amine catalyst exceeds 20 parts by weight, not only the effect corresponding to the increase of the catalyst can not be obtained, but also the flowability of the foam is likely to deteriorate.

Further, in the process of the present invention, in a case where the catalyst comprising an amine compound having an alkyl ether group and/or an aryl ether group in its molecule, is used as the amine catalyst, its amount is usually within a range of from 0.01 to 20 parts by weight, preferably from 0.05 to 10 parts by weight, per 100 parts by weight of the polyol to be used. If it is less than 0.01 part by weight, the moldability and adhesive strength of the foam may deteriorate, and the dimensional stability may deteriorate. On the other hand, if it exceeds 20 parts by weight, not only the effect corresponding to the increase of the catalyst can not be obtained, but also the flowability of the foam may deteriorate.

The amine catalyst used for the process for producing a rigid polyurethane foam of the present invention, is the above-described catalyst for producing a rigid polyurethane foam of the present invention. However, in addition, other catalysts may be used within a range not to depart from the present invention. As such other catalysts, a conventional organic metal catalyst, a metal carboxylate, a tertiary amine or a quaternary ammonium salt, may, for example, be mentioned.

The organic metal catalyst may be conventional one and is not particularly limited. For example, stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octanoate, lead naphthenate, nickel naphthenate or cobalt naphthenate, may, for example, be mentioned.

The metal carboxylate may be conventional one and is not particularly limited. For example, an alkali metal salt or alkaline earth metal salt of a carboxylic acid may be mentioned. The carboxylic acid is not particularly limited, and it may, for example, be an aliphatic mono- or dicarboxylic acid such as acetic acid, propionic acid, 2-ethylhexanoic acid or adipic acid, or an aromatic mono- or dicarboxylic acid such as benzoic acid or phthalic acid. Further, the metal to form a carboxylate is preferably an alkali metal such as lithium, sodium or potassium, or an alkaline earth metal such as calcium or magnesium, as a preferred example.

The tertiary amine may be conventional one and is not particularly limited. For example, it may be a tertiary amine compound such as N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl) hexahydro-S-triazine, 1,8-diazabicyclo[5.4.0]undecene-7, N,N'-dimethylpiperazine, N-methylmorpholine, N-ethylmorpholine, bis(2-dimethylaminoethyl)ether, 1-methylimidazole, 1,2-dimethylimidazole, 1-isobutyl-2-methylimidazole or 1-dimethylaminopropylimidazole.

The quaternary ammonium salt may be conventional one and is not particularly limited. For example, it may be a tetraalkylammonium halide such as tetramethylammonium chloride, a tetraalkylammonium hydroxide such as tetramethylammonium hydroxide, or a tetraalkylammonium organic acid salt such as tetramethylammonium 2-ethylhexanoate, 2-hydroxypropyltrimethylammonium formate or 2-hydroxypropyltrimethylammonium 2-ethylhexanoate.

As mentioned above, the catalyst for producing a rigid polyurethane foam of the present invention may be used alone or as mixed with other catalyst. To prepare a mixture, if necessary, a solvent such as dipropylene glycol, ethylene glycol, 1,4-butanediol or water may be used. The amount of the solvent is not limited, but preferably at most 3 times by weight the total amount of the catalyst. If it exceeds 3 times by weight, the physical properties of the foam may be influenced, and such is not desirable also from the economical reason. In the present invention, the catalyst thus formulated may be added to a polyol, or various amine catalysts may be separately added to a polyol. Thus, the manner of its use is not particularly limited.

The polyol to be used in the present invention may, for example, be a conventional polyether polyol, polyester polyol or polymer polyol, and it may further be a flame retardant polyol such as a phosphorus-containing polyol or a halogen-containing polyol. These polyols may be used alone or in combination as a mixture, as the case requires.

The polyether polyol to be used in the process of the present invention may, for example, be one produced by a method disclosed e.g. by Gunter Oertel, "Polyurethane Handbook" (1985) Hanser Publishers (Germany), p. 42-53 by using as a starting material a compound having at least two active hydrogen groups, such as a polyhydric alcohol such as ethylene glycol, propylene glycol, glycerol, trimethylolpropane, pentaerythritol, sorbitol or sucrose, an amine such as ethylenediamine, an aromatic amine compound such as toluenediamine or diphenylmethane-4,4-diamine, or an alkanolamine such as ethanolamine or diethanolamine, and by subjecting such a starting material to addition reaction with an alkylene oxide such as ethylene oxide or propylene oxide.

The polyester polyol to be used in the process of the present invention may, for example, be one obtained from a reaction of a dibasic acid with glycol, a polyester polyol obtained from a DMT residue or phthalic anhydride as the starting material, or a polyester polyol led by a waste from the production of nylon, a waste of pentaerythritol or trimethylolpropane, a waste of a phthalic acid type polyester, or derivatives from these waste products, as disclosed by Keiji Iwata "Polyurethane Resin Handbook" (first edition in 1987), Nikkan Kogyo Shinbunsha, p.116-p.117.

The polymer polyol to be used in the process of the present invention may, for example, be a polymer polyol obtained by reacting the above-mentioned polyether polyol with an ethylenically unsaturated monomer such as butadiene, acrylonitrile or styrene in the presence of a radical polymerization catalyst.

The flame retardant polyol to be used in the process of the present invention may, for example, be a phosphorus-containing polyol obtained by adding an alkylene oxide to a phosphoric acid compound, a halogen-containing polyol obtained by ring opening polymerization of epichlorohydrin or trichlorobutylene oxide, or phenol polyol.

In the process of the present invention, a polyol having an average hydroxyl value of from 100 to 800 mgKOH/g is preferred, and a polyol having an average hydroxyl value of from 200 to 700 mgKOH/g is particularly preferred.

The polyisocyanate to be used in the present invention may be conventional one and is not particularly limited. For example, it may be an aromatic polyisocyanate such as toluene diisocyanate (TDI), diphenylmethane diisocyanate (MDI), naphthylene diisocyanate or xylylene diisocyanate, an aliphatic polyisocyanate such as hexamethylene diisocyanate, an alicyclic polyisocyanate such as dicyclohexyl diisocyanate or isophorone diisocyanate, or a mixture thereof. Among these, preferred is TDI or its derivative, or MDI or its derivative, and they may be used in combination as a mixture.

TDI and its derivative may, for example, be a mixture of 2,4-TDI and 2,6-TDI, or a terminal isocyanate prepolymer derivative of TDI. MDI or its derivative may, for example, be a mixture of MDI and its polymer polyphenylpolymethylene diisocyanate, and/or a diphenylmethane diisocyanate derivative having a terminal isocyanate group.

The mixing ratio of the polyisocyanate and the polyol is not particularly limited, but as represented by the isocyanate index (isocyanate groups/active hydrogen groups reactive with isocyanate groups), it is usually preferably within a range of from 60 to 400.

The blowing agent to be used in the process of the present invention is at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

In the present invention, the low boiling point hydrocarbon means a hydrocarbon having a boiling point of from -30 to 90°C. Among such, preferred is propane, butane, 2-methylpropane, pentane, cyclopentane, 2-methylbutane, 2,2-dimethylpropane, cylopropane, hexane, 2-methylpentane, 3-methylpentane, 2,2-dimethylbutane, cyclohexane, 2,4-dimethylpropane, 3,3-dimethylpropane or 2,2,3-trimethylbutane, since it is inexpensive from the viewpoint of the price or since it is easy to handle. More preferred is propane, butane, pentane, cyclopentane or hexane, which is a hydrocarbon having a boiling point of from -30 to 70°C.

In the process of the present invention, as the blowing agent, it is possible to further use water or a flon compound other than 1,1,1,3,3-pentafluoropropane (HFC-245fa) or 1,1,1,3,3-pentafluorobutane (HFC-365mfc).

Such a flon compound may, for example, be a HCFC analogue such as 1,1-dichloro-1-fluoroethane (HCFC-141b), 1-chloro-1,1-difluoroethane (HCFC-142b) or chlorodifluoromethane (HCFC-22), a HFC-134 analogue such as 1,1,1,2-tetrafluoroethane (HFC-134a), a HFC-227 analogue such as 1,1,1,2,3,3,3-heptafluoropropane (HFC-227ea), or a HFE analogue such as 1,1,1-trifluoroethyldifluoromethyl ether (HFE-245mf), 1,1,2,2-tetrafluoroethyl methyl ether (HFE-254pc) or 1,1,2,2-tetrafluoroethyl-1,1,1-trifluoroethyl ether (HFE-347pc-f).

In the process of the present invention, a specific combination of blowing agents may, for example, be a mixture of HFC-245fa and water and/or a low boiling point hydrocarbon, a mixture of HFC-365mfc and water and/or a low boiling point hydrocarbon, a mixture of HFC-245fa, HFC-365mfc and water and/or a low boiling point hydrocarbon, or a mixture of water and a low boiling point hydrocarbon.

In the process of the present invention, the amount of the blowing agent is determined depending upon the desired density and physical properties of the foam and is not particularly limited. Specifically, however, it is selected so that the density of the obtained foam will usually be from 10 to 200 kg/m³, preferably from 20 to 100 kg/m³. The amount of water is not particularly limited, but it is usually from 0.1 to 10 parts by weight, preferably from 0.5 to 5 parts by weight, per 100 parts by weight of the polyol. If the amount of water is less than 0.1 part by weight, the amount of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, will increase, such being disadvantageous from the viewpoint of the cost. On the other hand, if the amount of water exceeds 10 parts by weight, the curing speed of the foam tends to be slow, and the friability of the foam surface tends to be large, whereby the adhesion with a face material is likely to be substantially poor.

In the process of the present invention, the polyol and the polyisocyanate may be reacted in the presence of the amine catalyst, the blowing agent and an auxiliary agent, as the case requires. Such an auxiliary agent may, for example, be a foam stabilizer, a crosslinking agent and/or a chain extender, or a flame retardant.

In the process of the present invention, as the foam stabilizer, a surfactant may be employed. As a useful surfactant, a conventional organic silicone type surfactant may, for example, be mentioned. Specifically, a nonionic surfactant such as an organic siloxane/polyoxyalkylene copolymer or a silicone/grease copolymer, or a mixture thereof, may, for example, be mentioned. The amount of such a foam stabilizer is usually from 0.1 to 10 parts by weight per 100 parts by weight of the polyol.

In the present invention, the crosslinking agent or the chain extender may, for example, be a polyhydric alcohol such as ethylene glycol, 1,4-butanediol or glycerol, an amine polyol having a low molecular weight such as diethanolamine or triethanolamine, or a polyamine such as ethylenediamine, xylylenediamine or methylenebisorthochloroaniline.

In the process of the present invention, the flame retardant may, for example, be a reactive flame retardant like a phosphorus-containing polyol such as propoxylated phosphoric acid or propoxylated dibutylpyrophosphoric acid obtainable by an addition reaction of phosphoric acid with an alkylene oxide, a tertiary phosphoric acid ester such as tricresyl phosphate, a halogen-containing tertiary phosphoric acid ester such as tris(2-chloroethyl) phosphate or tris(chloropropyl) phosphate, a halogen-containing organic compound such as dibromopropanol, dibromoneopentyl glycol or tetrabromobisphenol A, or an inorganic compound such as antimony oxide, magnesium carbonate, calcium carbonate or aluminum phosphate. The amount of the flame retardant is not particularly limited, since it varies depending upon the required flame retardancy, but it is usually from 4 to 20 parts by weight, per 100 parts by weight of the polyol.

In the present invention, a colorant, an age-preventing agent and other conventional known additives may further be used, as the case requires. The types and amounts of such additives may be within the usual ranges of the additives to be used.

The process of the present invention is carried out by rapidly mixing and stirring a mixed solution obtained by mixing the above-mentioned starting materials (the polyol, the polyisocyanate, the amine catalyst, the blowing agent, the auxiliary agent, the additives, etc.), and then injecting it into a suitable container or mold, followed by foam molding. The mixing and stirring may be carried out by using a common stirrer or dedicated polyurethane foaming machine. As the polyurethane foaming machine, high pressure, low pressure and spray type machines can be used.

The product produced by the process of the present invention may be used for various applications. For example, it may be applied to a freezer, a refrigerator, a heat shielding building material, etc.

Now, among processes for forming rigid polyurethane foams of the present invention, a process for forming a rigid polyisocyanurate foam will be described.

The catalyst for producing a rigid polyisocyanurate foam of the present invention is used as a catalyst when a rigid polyisocyanurate foam is produced by reacting a polyol with a polyisocyanate in the presence of a catalyst and a blowing agent.

In the process for producing a rigid polyisocyanurate foam of the present invention, the amount of the catalyst composition for producing a rigid polyisocyanurate foam, which comprises an aliphatic amine compound of the above formula (1) and a polyisocyanurate catalyst, is usually within a range of from 0.01 to 40 parts by weight, preferably from 0.1 to 20 parts by weight, per 100 parts by weight of the polyol to be used. If the amount is less than 0.01 part by weight, the moldability of the foam tends to deteriorate, and the dimensional stability is likely to be poor. On the other hand, if it exceeds 40 parts by weight, not only the effect of increasing the catalyst can not be obtained, but the flowability of the foam is likely to deteriorate.

The catalyst to be used in the process for producing a rigid polyisocyanurate foam of the present invention, is the above-mentioned catalyst for producing a rigid polyisocyanurate foam of the present invention. However, other catalysts may further be used in combination within a range not to depart from the present invention. As such other catalysts, a known tertiary amine or organic metal compound may, for example, be mentioned.

The tertiary amine may be conventional one and is not particularly limited. It may, for example, be N,N,N'.N'-tetramethylethylenediamine, N,N,N',N'-tetra methylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl)hexahydro-S-triazine, 1,8-diazabicyclo[5.4.0]undecene-7, N,N'-dimethylpiperazine, N-methylmorpholine, N-ethylmorpholine, bis(2-dimethylaminoethyl)ether, 1-methylimidazole, 1,2-dimethylimidazole, 1-isobutyl-2-methylimidazole or 1-dimethylaminopropylimidazole.

Further, the organic metal compound may be conventional one and is not particularly limited. It may, for example, be stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octylate, lead naphthenate, nickel naphthenate, cobalt naphthenate, or lithium, sodium or potassium carboxylate.

The catalyst composition comprising the aliphatic amine compound of the above formula (1) and the polyisocyanurate catalyst, of the present invention, may be used alone or as mixed with other catalysts, as mentioned above. To prepare a mixture, a solvent such as dipropylene glycol, ethylene glycol, 1,4-butanediol or water may be used, as the case requires. The amount of the solvent is not particularly limited, but it is preferably at most 3 times by weight to the total amount of the catalyst. If it exceeds 3 times by weight, the physical properties of the foam will be influenced, and such is undesirable also for an economical reason. The catalyst thus formulated, may be used by adding it to the polyol, or various amine catalysts may separately be added to the polyol. Thus, the manner of its use is not particularly limited.

The polyol to be used in the process of the present invention may, for example, be a conventional polyether polyol, polyester polyol or polymer polyol, and it may further be a flame retardant polyol such as a phosphorus-containing polyol or a halogen-containing polyol, or a phenol type polyol such as a Mannich base polyol. These polyols may be used alone or in combination as a mixture, as the case requires.

The polyether polyol may, for example, be one produced by a method disclosed, for example, by Gunter Oertel, "Polyurethane Handbook" (1985) Hanser Publishers (Germany), p. 42-53 by using as a starting material a compound having at least two active hydrogen groups, such as a polyhydric alcohol such as ethylene glycol, propylene glycol, glycerol, trimethylolpropane or pentaerythritol, an aliphatic amine such as ethylenediamine, an aromatic amine such as toluenediamine, an alkanolamine such as ethanolamine or diethanolamine, sorbitol or sucrose and by subjecting such a starting material to addition reaction with an alkylene oxide such as ethylene oxide or propylene oxide.

The polyester polyol to be used in the process of the present invention may, for example, be one obtained from a reaction of a dibasic acid with glycol, a polyester polyol obtained from a DMT residue or phthalic anhydride as the starting material, or a polyester polyol led by a waste from the production of nylon, a waste of pentaerythritol or trimethylolpropane, a waste of a phthalic acid type polyester, or derivatives from these waste products, as disclosed by Keiji Iwata "Polyurethane Resin Handbook" (first edition in 1987), Nikkan Kogyo Shinbunsha, p.116-p.117.

The polymer polyol may, for example, be a polymer polyol obtained by reacting the above-mentioned polyether polyol with an ethylenically unsaturated monomer such as butadiene, acrylonitrile or styrene in the presence of a radical polymerization catalyst.

The flame retardant polyol may, for example, be a phosphorus-containing polyol obtained by adding an alkylene oxide to a phosphoric acid compound, a halogen-containing polyol obtained by ring opening polymerization of epichlorohydrin or trichlorobutylene oxide, or phenol polyol such as Mannich base polyol.

Such a polyol is preferably a polyol having an average hydroxyl value of from 50 to 1,000 mgKOH/g, particularly preferably a polyol having an average hydroxyl value of from 100 to 800 mgKOH/g.

The polyisocyanate to be used in the present invention may be conventional one and is not particularly limited. It may, for example, be an aromatic polyisocyanate such as toluene diisocyanate (TDI), diphenylmethane diisocyanate (MDI), naphthylene diisocyanate or xylylene diisocyanate, an aliphatic polyisocyanate such as hexamethylene diisocyanate, an alicyclic polyisocyanate such as dicyclohexyl diisocyanate or isophorone diisocyanate, or a mixture thereof. Among these, preferred is TDI or its derivative, or MDI or its derivative, and they may be used in combination as a mixture.

TDI and its derivative may, for example, be a mixture of 2,4-TDI and 2,6-TDI, or a terminal isocyanate prepolymer derivative of TDI. MDI or its derivative may, for example, be a mixture of MDI and its polymer polyphenylpolymethylene diisocyanate, and/or a diphenylmethane diisocyanate derivative having a terminal isocyanate group.

The mixing ratio of the polyisocyanate and the polyol is not particularly limited, but as represented by the isocyanate index (isocyanate groups/active hydrogen groups reactive with isocyanate groups), it is usually preferably within a range of from 110 to 400.

The blowing agent to be used in the process of the present invention is at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

In the present invention, the low boiling point hydrocarbon means a hydrocarbon having a boiling point of from -30 to 90°C. Among such, preferred is propane, butane, 2-methylpropane, pentane, cyclopentane, 2-methylbutane, 2,2-dimethylpropane, cylopropane, hexane, 2-methylpentane, 3-methylpentane, 2,2-dimethylbutane, cyclohexane, 2,4-dimethylpropane, 3,3-dimethylpropane or 2,2,3-trimethylbutane, since it is inexpensive from the viewpoint of the price or since it is easy to handle. More preferred is propane, butane, pentane, cyclopentane or hexane.

In the process of the present invention, as the blowing agent, water or a flon compound other than 1,1,1,3,3-pentafluoropropane (HFC-245fa) or 1,1,1,3,3-pentafluorobutane (HFC-365mfc), may further be used.

Such a flon compound may, for example, be a HCFC analogue such as 1, 1-dichloro-1-fluoroethane (HCFC-141b), 1-chloro-1,1-difluoroethane (HCFC-142b) or chlorodifluoromethane (HCFC-22), a HFC-134 analogue such as 1,1,1,2-tetrafluoroethane (HFC-134a), a HFC-227 analogue such as 1,1,1,2,3,3,3-heptafluoropropane (HFC-227ea), or a HFE analogue such as 1,1,1-trifluoroethyldifluoromethyl ether (HFE-245mf), 1,1,2,2-tetrafluoroethyl methyl ether (HFE-254pc) or 1,1,2,2-tetrafluoroethyl-1,1,1-trifluoroethyl ether (HFE-347pc-f).

In the process of the present invention, a specific combination of blowing agents may, for example, be a mixture of HFC-245fa and water and/or a low boiling point hydrocarbon, a mixture of HFC-365mfc and water and/or a low boiling point hydrocarbon, a mixture of HFC-245fa, HFC-365mfc and water and/or a low boiling point hydrocarbon, or a mixture of water and a low boiling point hydrocarbon.

In the process of the present invention, the amount of the blowing agent is determined depending upon the desired density and physical properties of the foam and is not particularly limited. Specifically, however, it is selected so that the density of the obtained foam will usually be from 10 to 200 kg/m³, preferably from 20 to 100 kg/m³. The amount of water is not particularly limited, but it is usually from 0.1 to 10 parts by weight, preferably from 0.5 to 5 parts by weight, per 100 parts by weight of the polyol. If the amount of water is less than 0.1 part by weight, the amount of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, will increase, such being disadvantageous from the viewpoint of the cost.

In the process for producing a rigid polyisocyanurate foam of the present invention, an auxiliary agent other than the above may be used, as the case requires. Such an auxiliary agent may, for example, be a foam stabilizer, a crosslinking agent or a chain extender, or a flame retardant.

In the present invention, if required, as a foam stabilizer, a surfactant may be used. A useful surfactant may for example, be a conventional organic silicone type surfactant. Specifically, it may, for example, be a nonionic surfactant such as an organic siloxane/polyoxyalkylene copolymer or a silicone/grease copolymer, or a mixture thereof. The amount of such a foam stabilizer is usually from 0.1 to 10 parts by weight per 100 parts by weight of the polyol.

In the present invention, the crosslinking agent or the chain extender may, for example, be a polyhydric alcohol such as ethylene glycol, 1,4-butanediol or glycerol, an amine polyol having a low molecular weight such as diethanolamine or triethanolamine, or a polyamine such as ethylenediamine, xylylenediamine or methylenebisorthochloroaniline.

In the process of the present invention, a flame retardant may be employed as the case requires. A useful flame retardant may, for example, be a reactive flame retardant like a phosphorus-containing polyol such as a propoxylated phosphoric acid or a propoxylated dibutylpyrophosphoric acid, obtained by an addition reaction of phosphoric acid with an alkylene oxide, a tertiary phosphoric acid ester such as tricresyl phosphate, a halogen-containing tertiary phosphoric acid ester such as tris(2-chloroethyl) phosphate or tris(chloropropyl) phosphate, a halogen-containing organic compound such as dibromopropanol, dibromoneopentyl glycol or tetrabromobisphenol A, or an inorganic compound such as antimony oxide, magnesium carbonate, calcium carbonate or aluminum phosphate. Its amount is not particularly limited and varies depending upon the required flame retardancy, but it is usually from 4 to 20 parts by weight, per 100 parts by weight of the polyol.

In the present invention, a colorant, an age-preventing agent and other conventional known additives may further be used, as the case requires. The types and amounts of such additives may be within the usual ranges of the additives to be used.

The process of the present invention is carried out by rapidly mixing and stirring a mixed solution obtained by mixing the above-mentioned starting materials and then injecting it into a suitable container or mold, followed by foam molding. The mixing and stirring may be carried out by using a common stirrer or dedicated polyurethane foaming machine. As the polyurethane foaming machine, high pressure, low pressure and spray type machines can be used.

The product produced by the process of the present invention may be used for various applications. For example, it may be applied to a freezer, a refrigerator, a heat shielding building material, etc.

According to the process of the present invention, even if at least one blowing agent selected from the group consisting of 1,1,1,3,3-pentafluoropropane (HFC-245fa), 1,1,1,3,3-pentafluorobutane (HFC-365mfc) and a low boiling point hydrocarbon, is used as a blowing agent, it is possible to produce a rigid polyurethane foam excellent in the flowability, adhesive strength and dimensional stability of the foam, without impairing the physical properties of the foam. Further, according to the process of the present invention, it is possible to obtain a rigid polyurethane foam having physical properties comparable to a foam produced by means of a conventional blowing agent (HCFC-141b).

Further, according to the process of the present invention, even if at least one blowing agent selected from the group consisting of 1,1,1,3,3-pentafluoropropane (HFC-245fa), 1,1,1,3,3-pentafluorobutane (HFC-365mfc) and a low boiling point hydrocarbon, is used as a blowing agent, it is possible to produce a rigid polyisocyanurate foam excellent in the flame retardancy, adhesive strength and dimensional stability of the foam, without impairing the physical properties of the foam. Further, according to the process of the present invention, it is possible to obtain a rigid polyisocyanurate foam having physical properties comparable to a foam produced by a conventional process.

Now, with reference to Examples and Comparative Examples, the catalyst for producing a rigid polyurethane foam and the process for producing a rigid polyurethane foam by means of such a catalyst, will be described. However, it should be understood that the present invention is no by means restricted by such specific

### Examples.

In the following Examples and Comparative Examples, the various properties were measured by the following measuring methods.

### ·Measured items for the reactivity

Cream time: The time until the foam starts to rise was measured by visual observation.

Gel time: As the reaction proceeds, the time until the liquid substance changes to a resinous substance, was measured.

Tack free time: The time until tackiness of the foam surface disappears, was measured.

Rise time: The time until the rise of the foam stops, was measured by visual observation.

·Flowability of foam: A predetermined amount of a mixed liquid was injected into an aluminum mold of 100×25×3.0 cm, and the length (cm) of the formed foam was measured. The longer the length of the foam, the better the flowability.

### ·Core density of foam:

Free foaming was carried out by means of an aluminum mold of 50×50×4.5 cm, and the center portion of the formed foam was cut into a size of 20×20×3 cm, whereupon the size and weight were accurately measured, and core density was calculated.

### ·Adhesive strength of foam:

Forming was carried out by setting a zinc-lined iron plate of 5×5 cm on the upper side of an aluminum mold of 25×25×8.0 cm. After foaming for 1 hour, the peel strength at 90° of the set iron plate was measured and taken as the adhesive strength of the foam.

### ·Dimensional stability of foam:

A foam foamed in an aluminum mold of 50×50×4.5 cm was maintained under a condition of -30°C × 48 hours, whereby a change in the thickness direction was measured.

### EXAMPLES 1 to 12

A polyol, a blowing agent and a foam stabilizer were mixed in a blend ratio as identified in Table 1 to prepare Premix A. 47.1 g of Premix A was taken into a 300 ml polyethylene cup, and a catalyst as identified in Table 1 was added in an amount such that the reactivity as represented by the following gel time would be 90 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 2.

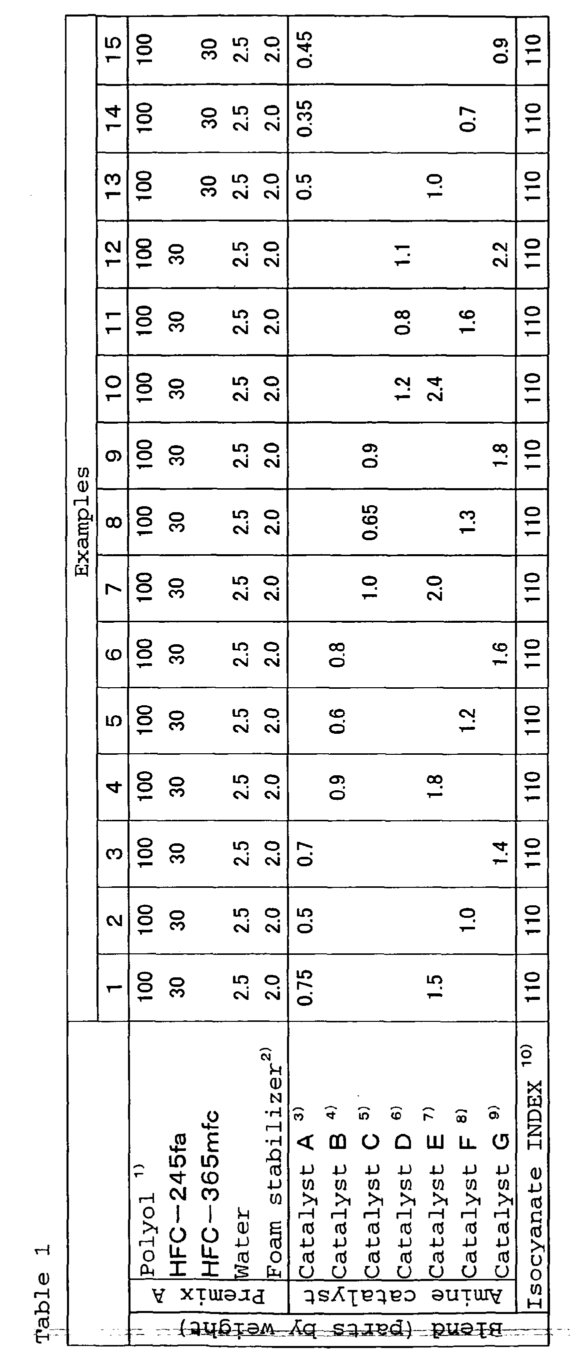

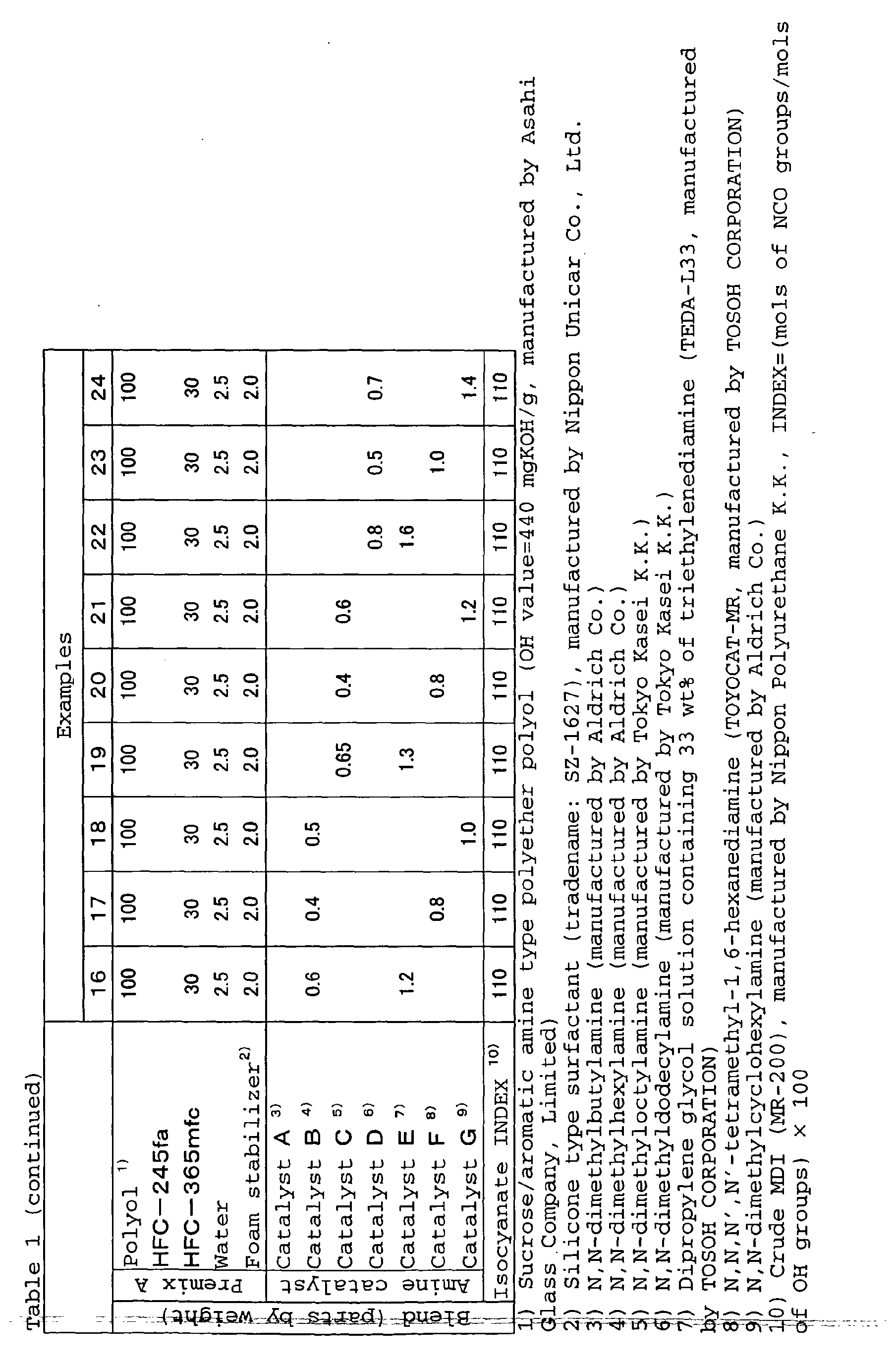

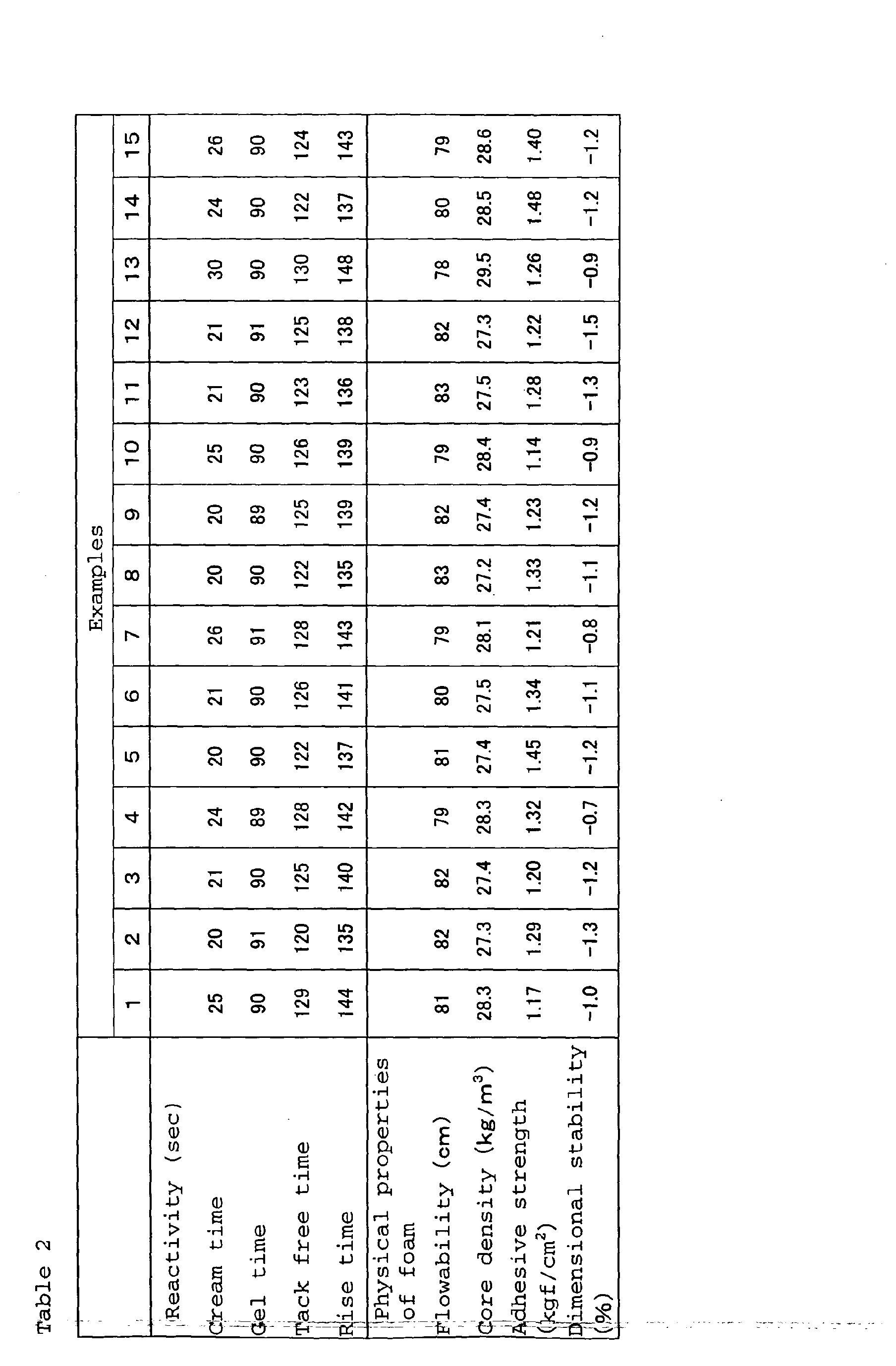

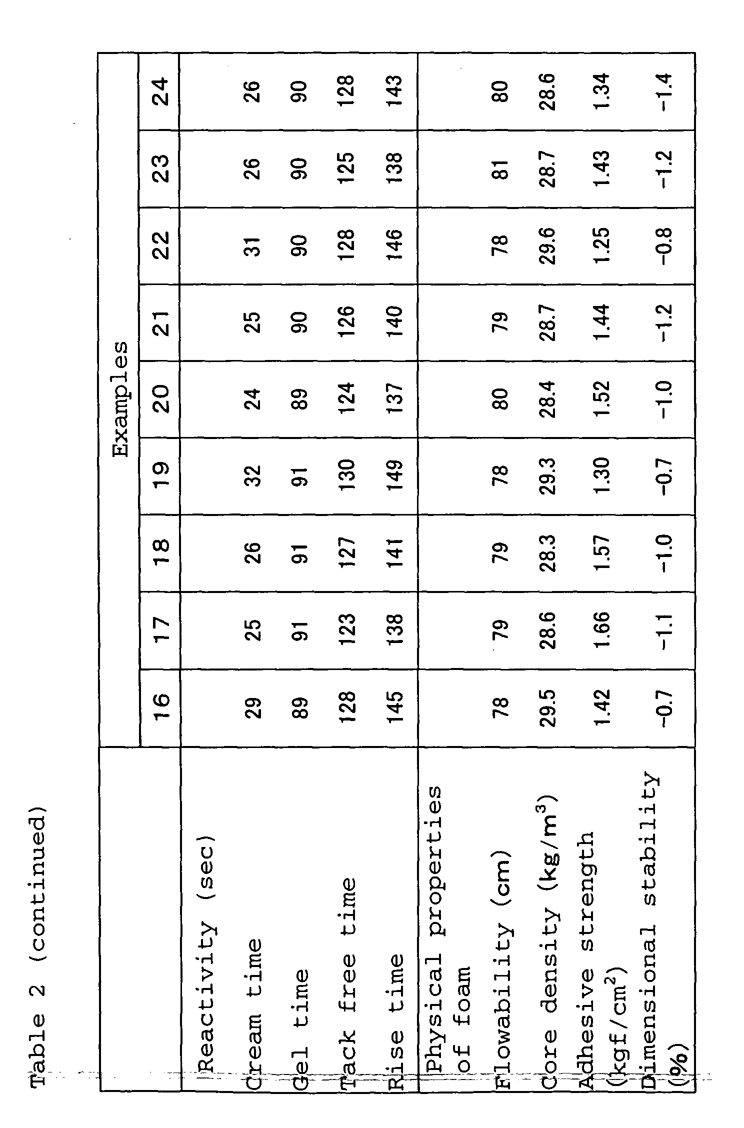

### COMPARATIVE EXAMPLES 1 to 7

A polyol, a blowing agent and a foam stabilizer were mixed in a blend ratio as identified in Table 3 to prepare Premix A. 47.1 g of Premix A was taken into a 300 ml polyethylene cup, and a catalyst as identified in Table 3 was added in an amount such that the reactivity as represented by the following gel time would be 90 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 4.

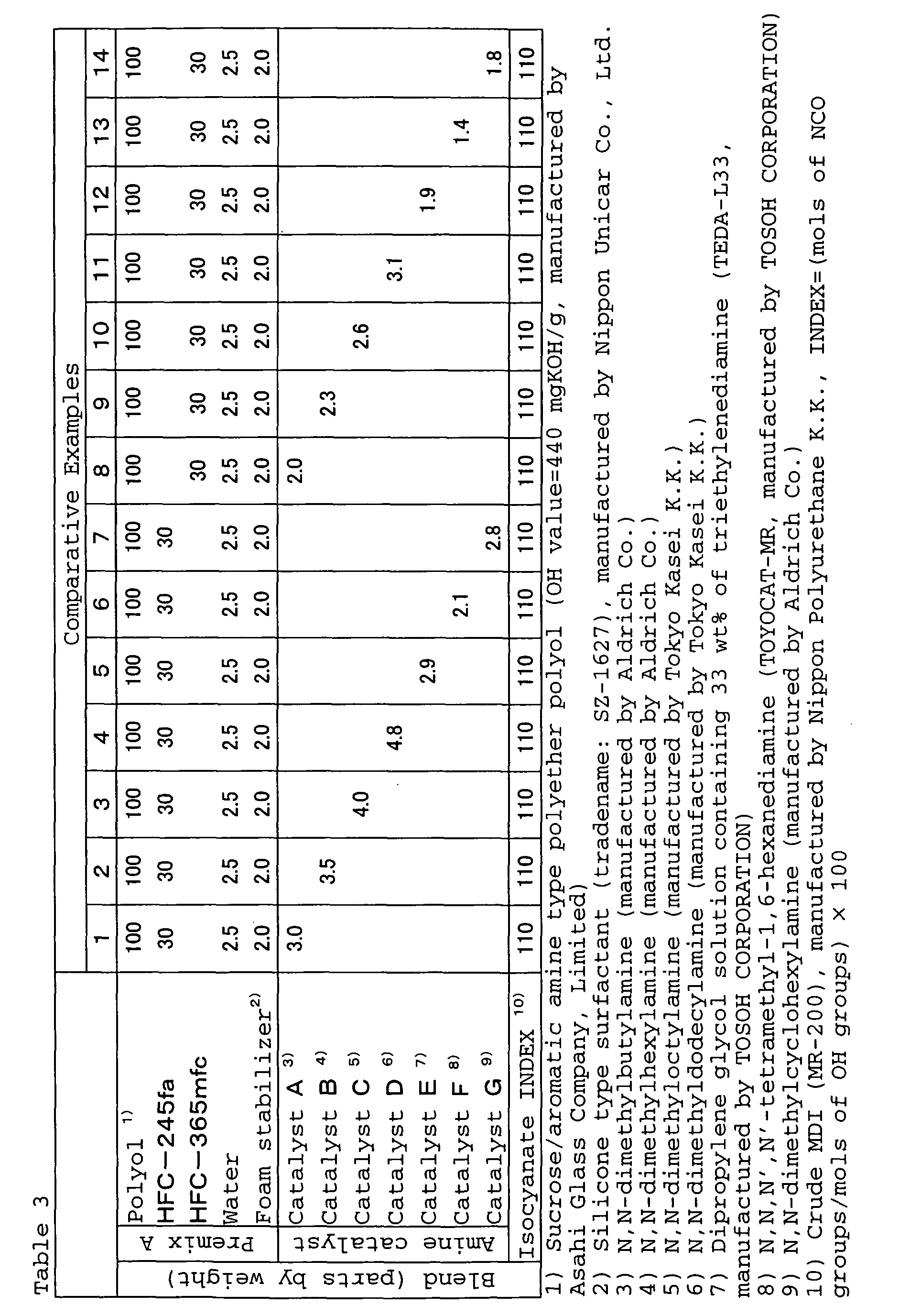

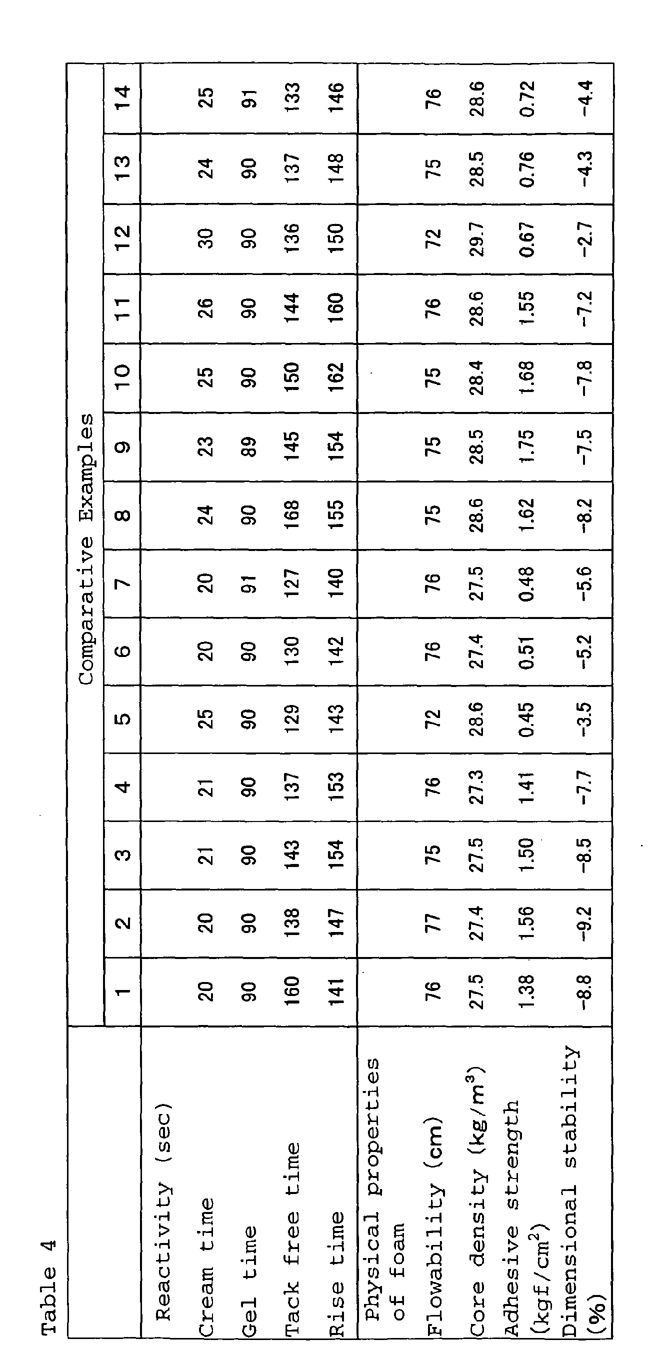

### EXAMPLES 13 to 24

A polyol, a blowing agent and a foam stabilizer were mixed in a blend ratio as identified in Table 1 to prepare Premix A. 47.1 g of Premix A was taken into a 300 ml polyethylene cup, and a catalyst as identified in Table 1 was added in an amount such that the reactivity as represented by the following gel time would be 90 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 2.

### COMPARATIVE EXAMPLES 8 to 14

A polyol, a blowing agent and a foam stabilizer were mixed in a blend ratio as identified in Table 3 to prepare Premix A. 47.1 g of Premix A was taken into a 300 ml polyethylene cup, and a catalyst as identified in Table 3 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 4.

### COMPARATIVE EXAMPLES 15 to 29

A polyol, a blowing agent and a foam stabilizer were mixed in a blend ratio as identified in Table 5 to prepare Premix A. 47.1 g of Premix A was taken into a 300 ml polyethylene cup, and a catalyst as identified in Table 5 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 6.

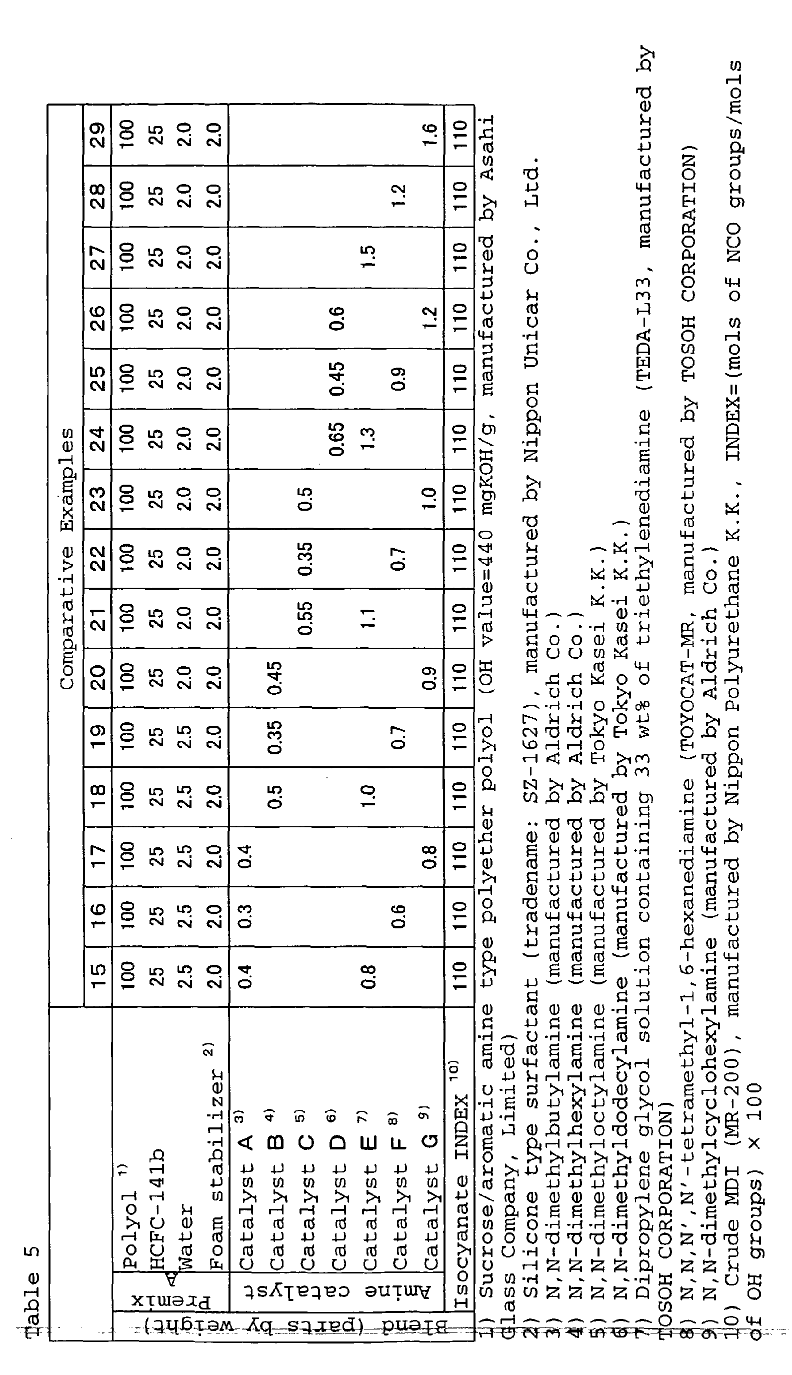

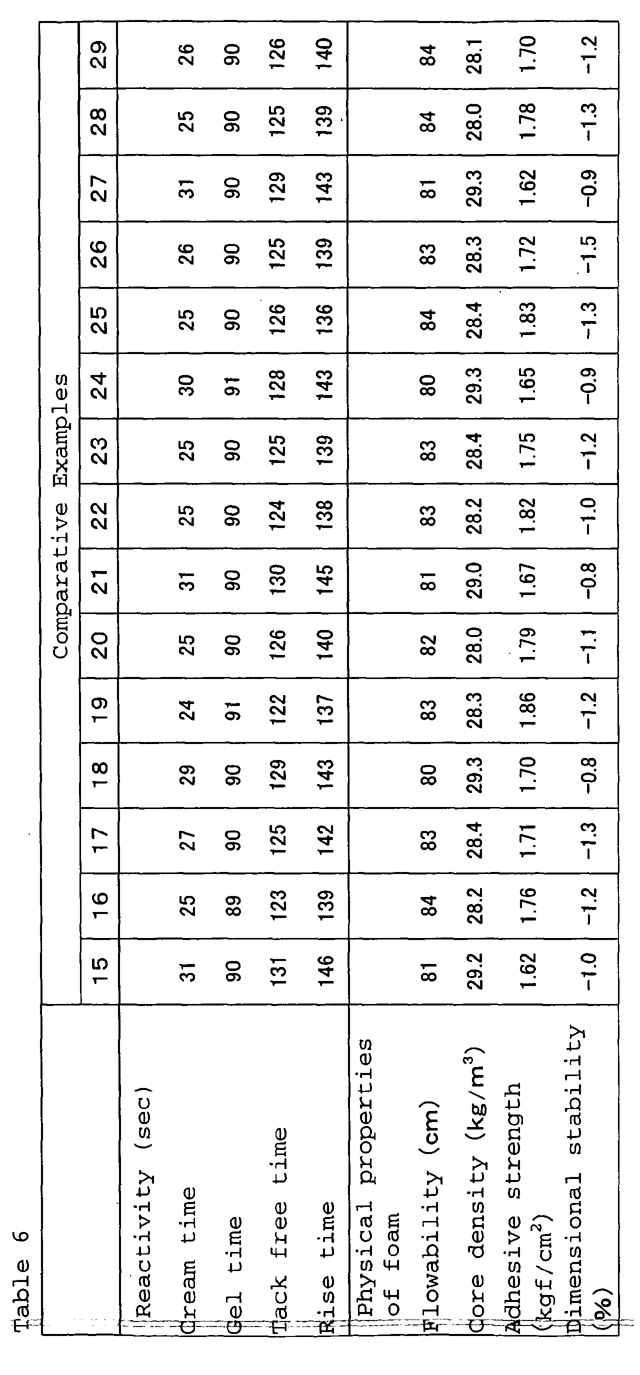

As is evident from Tables 2, 4 and 6, it is possible to produce foams excellent in flowability, adhesive strength and dimensional stability by using amine compounds of the present invention as catalysts.

Namely, Examples 1 to 12 are examples wherein rigid polyurethane foams were produced by using catalysts of the present invention and 1,1,1,3,3-pentafluoropropane (HFC-245fa) as a blowing agent. In each Example, a rigid urethane foam excellent in flowability, adhesive strength and dimensional stability, was obtained. Further, Examples 13 to 24 are Examples wherein rigid polyurethane foams were produced by using the catalysts of the present invention and 1,1,1,3,3-pentafluorobutane (HFC-365mfc) as a blowing agent. In each Example, a rigid urethane foam excellent in flowability, adhesive strength and dimensional stability, was obtained.

Whereas, Comparative Examples 1 to 4 and Comparative Examples 8 to 11 are examples wherein rigid polyurethane foams were produced by using only the aliphatic amine compounds of the above formula (1) as catalysts, whereby large amounts of the catalysts were required, and the foams were inferior in flowability and dimensional stability.

Further, Comparative Examples 5 to 7 and Comparative Examples 12 to 14 are examples wherein rigid polyurethane foams were produced by using triethylenediamine, N,N,N',N'-tetramethyl-1,6-hexanediamine or N,N-dimethylcyclohexylamine solely as the catalyst without using the aliphatic amine compound of the above formula (1), whereby the obtained foams were inferior in flowability, adhesive strength and dimensional stability.

Further, Comparative Examples 15 to 21 are examples in which 1,1-dichloro-1-fluoroethane (HCFC-141b) was used as a blowing agent, whereby even if the catalyst of the present invention was used, no remarkable effect was observed in the flowability, adhesive strength and dimensional stability of the foams.

### EXAMPLES 25 to 48

A polyol, a blowing agent and a foam stabilizer were mixed in a blend ratio as identified in Table 7 to prepare Premix A. 47.1 g of Premix A was taken into a 300 ml polyethylene cup, and a catalyst as identified in Table 7 was added in an amount such that the reactivity as represented by the following gel time would be 90 seconds, whereupon the temperature was adjusted to 20°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 8.

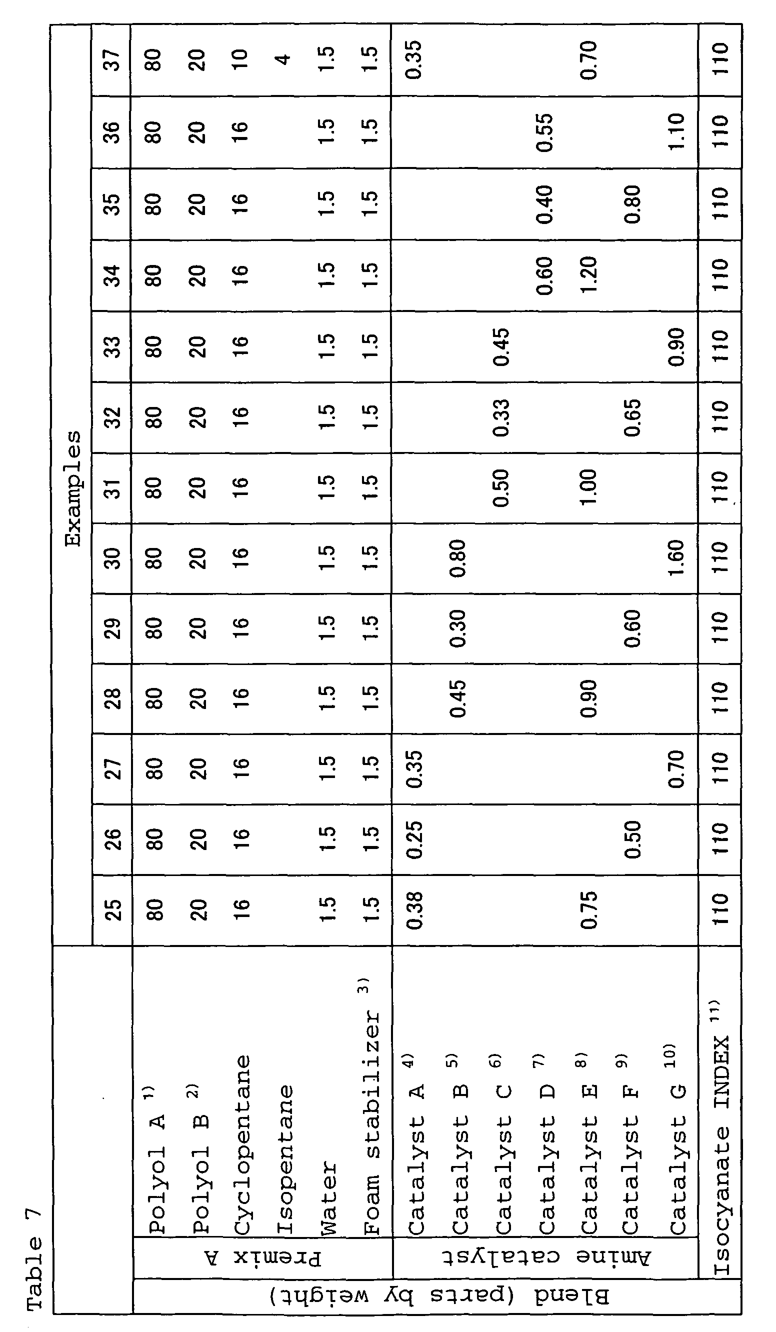

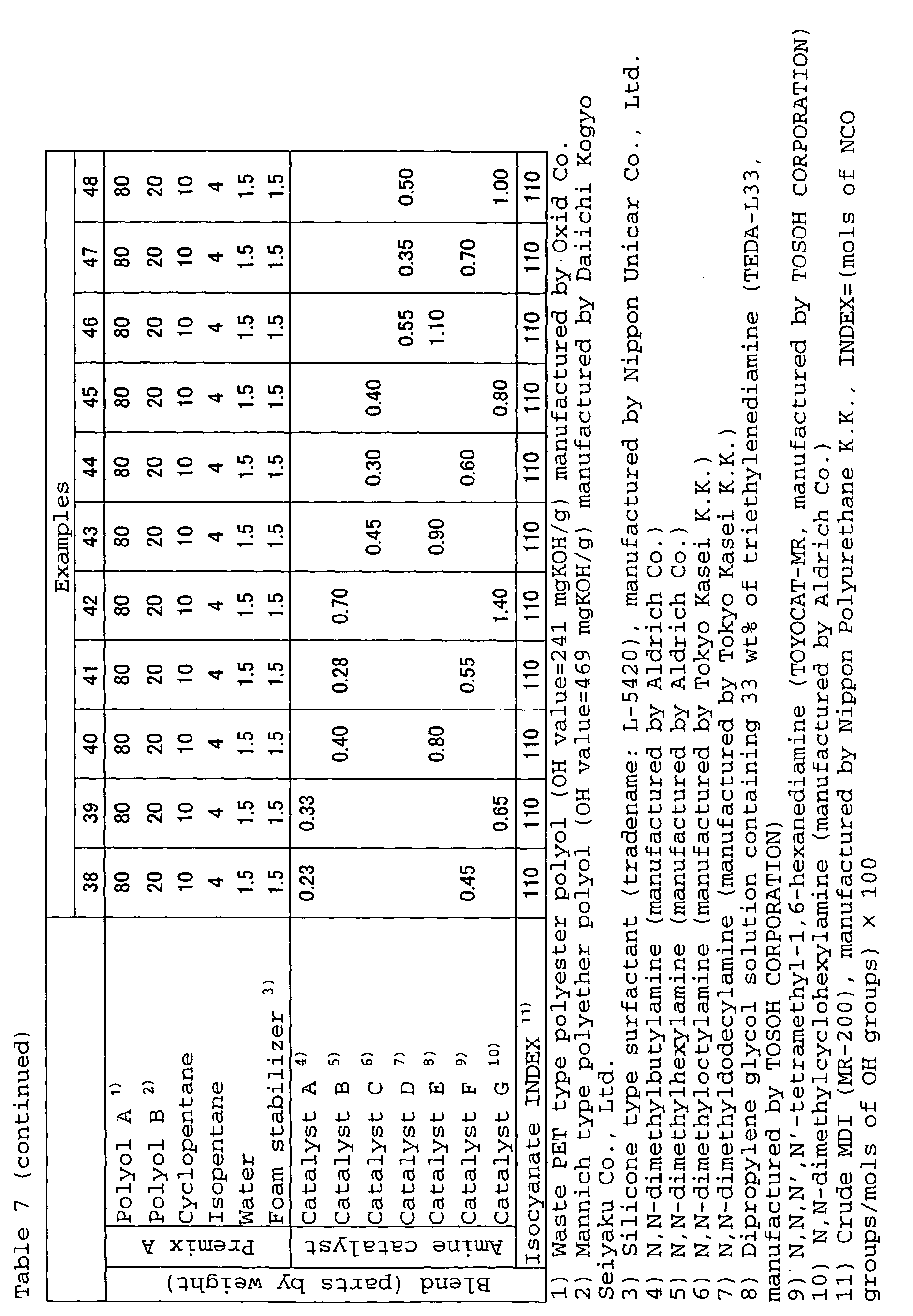

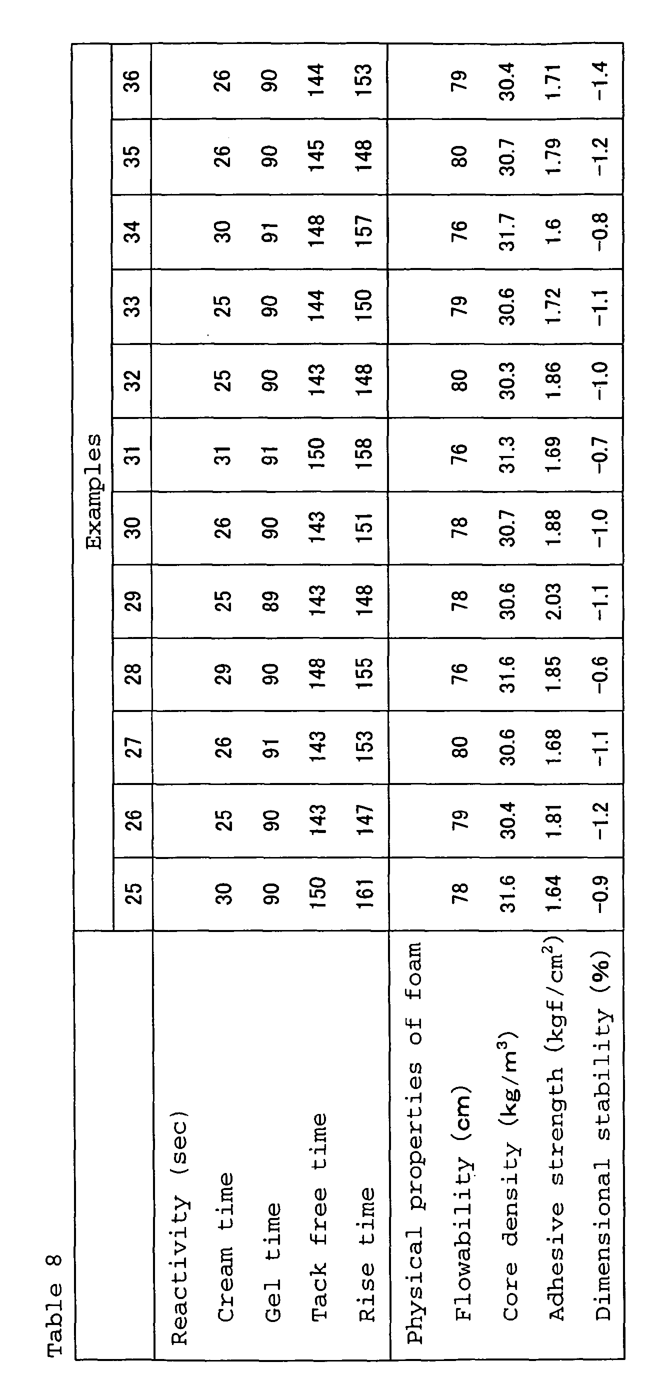

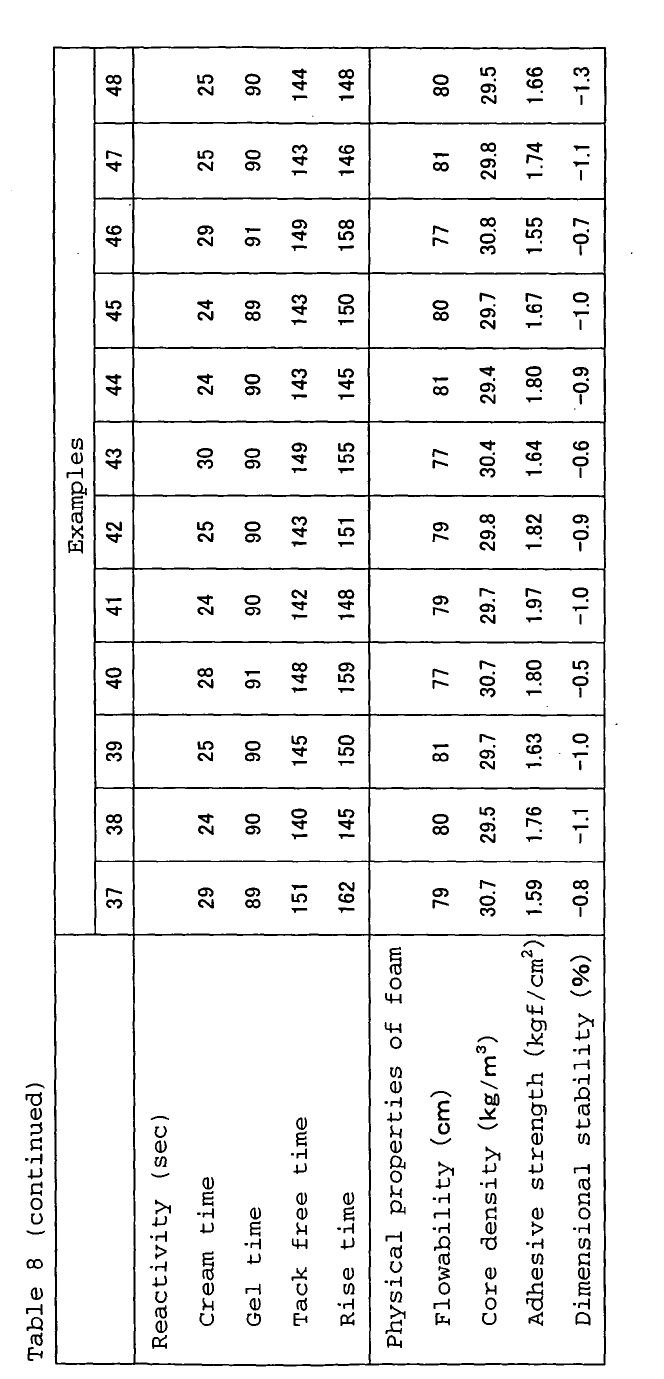

### COMPARATIVE EXAMPLES 30 to 43

A polyol, a blowing agent and a foam stabilizer were mixed in a blend ratio as identified in Table 9 to prepare Premix A. 47.1 g of Premix A was taken into a 300 ml polyethylene cup, and a catalyst as identified in Table 9 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 10.

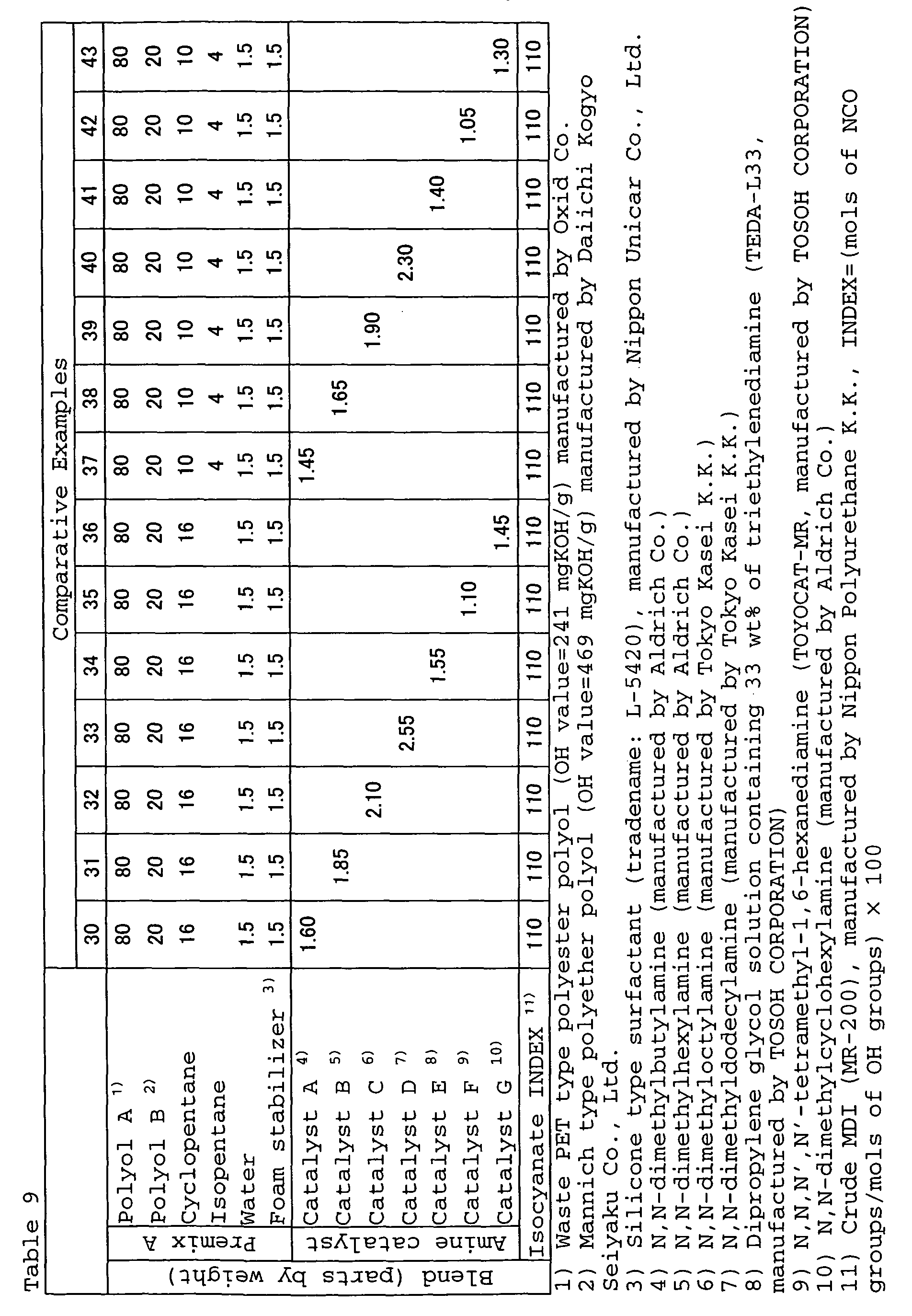

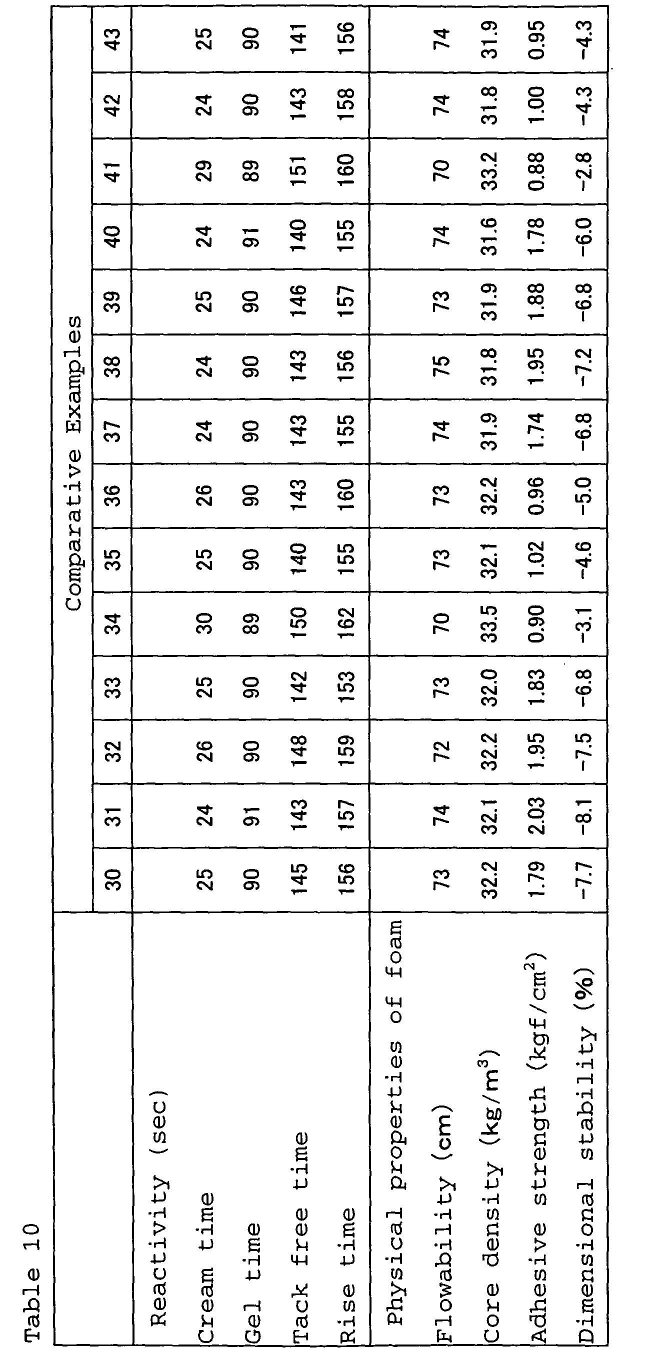

### COMPARATIVE EXAMPLES 44 to 58

A polyol, a blowing agent and a foam stabilizer were mixed in a blend ratio as identified in Table 11 to prepare Premix A. 47.1 g of Premix A was taken into a 300 ml polyethylene cup, and a catalyst as identified in Table 11 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 12.

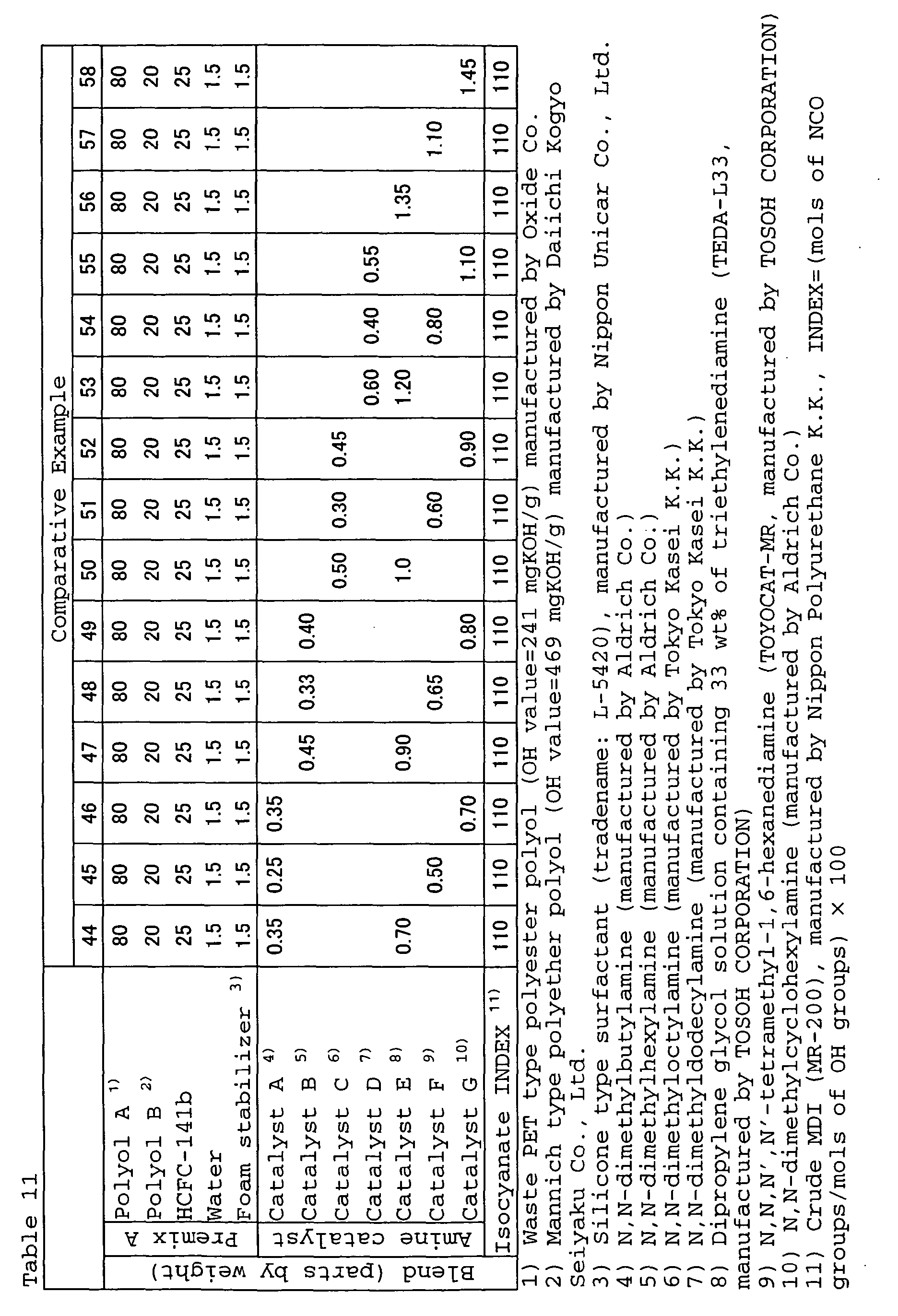

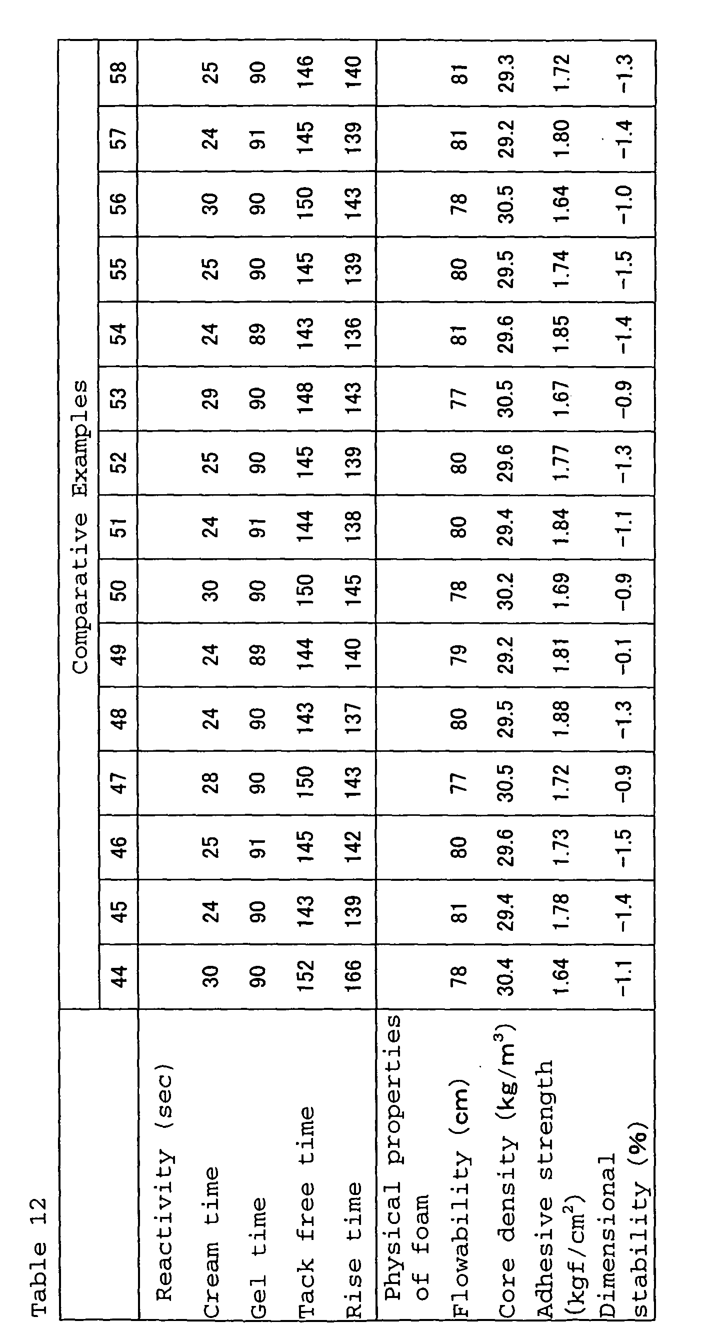

As is evident from Tables 8, 10 and 12, it is possible to produce foams excellent in flowability, adhesive strength and dimensional stability by using amine compounds of the present invention as catalysts.

Namely, Examples 25 to 48 are examples wherein rigid polyurethane foams were produced by using low boiling point hydrocarbons having boiling points of from -30 to 90°C as blowing agents. In each Example, a rigid urethane foam excellent in flowability, adhesive strength and dimensional stability, was obtained.

Whereas, Comparative Examples 30 to 33 and Comparative Examples 37 to 40 are examples wherein rigid polyurethane foams were produced by using only the aliphatic amine compounds of the above formula (1) as catalysts, whereby large amounts of the catalysts were required, and the foams were inferior in flowability and dimensional stability.

Further, Comparative Examples 34 to 36 and Comparative Examples 41 to 43 are examples wherein rigid polyurethane foams were produced by using triethylenediamine, N,N,N',N'-tetramethyl-1,6-hexanediamine or N,N-dimethylcyclohexylamine solely as the catalyst without using the aliphatic amine compound of the above formula (1), whereby the foams were inferior in flowability, adhesive strength and dimensional stability.

Further, Comparative Examples 44 to 58 are examples in which 1,1-dichloro-l-fluoroethane (HCFC-141b) was used as a blowing agent, whereby even if the catalyst of the present invention was used, no distinct effect to the flowability, adhesive strength and dimensional stability, was observed.

### EXAMPLES 49 to 52 and COMPARATIVE EXAMPLES 59 to 61

A polyol, a blowing agent and a foam stabilizer were mixed in a blend ratio as identified in Table 13 to prepare Premix A. 47.1 g of Premix A was taken into a 300 ml polyethylene cup, and a catalyst as identified in Table 13 was added in an amount such that the reactivity as represented by the following gel time would be 90 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 14.

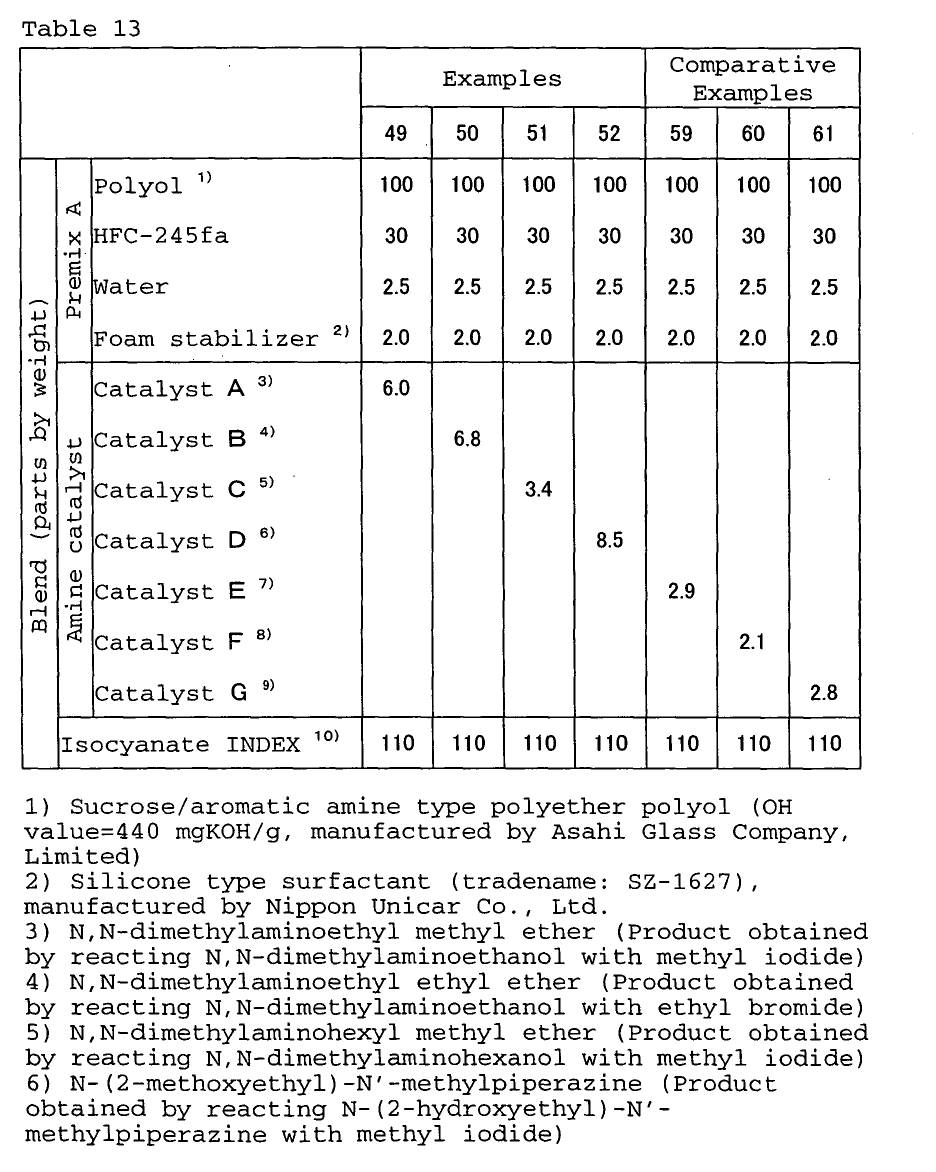

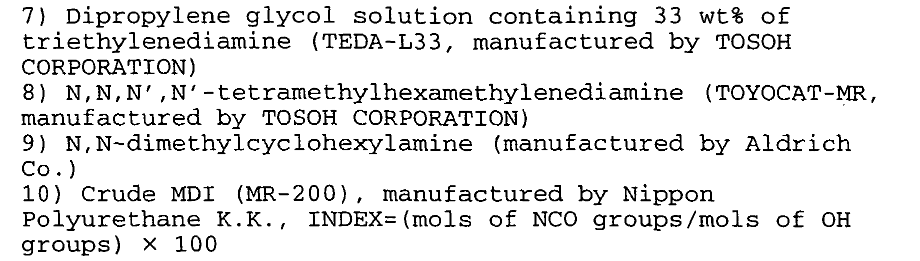

**Table 14**

| | Examples | | | | Comparative Examples | | |
|---|---|---|---|---|---|---|---|
| | 49 | 50 | 51 | 52 | 59 | 60 | 61 |
| Reactivity (sec) | | | | | | | |
| Cream time | 23 | 22 | 20 | 21 | 25 | 20 | 20 |
| Gel time | 91 | 90 | 90 | 91 | 90 | 90 | 91 |
| Tack free time | 151 | 146 | 135 | 148 | 129 | 130 | 127 |
| Rise time | 158 | 155 | 148 | 155 | 143 | 142 | 140 |

| Physical properties of foam | | | | | | | |
|---|---|---|---|---|---|---|---|
| Flowability (cm) | 83 | 82 | 80 | 81 | 72 | 76 | 76 |
| Core density (kg/m³) | 27.3 | 27.3 | 27.4 | 27.6 | 28.6 | 27.4 | 27.5 |
| Adhesive strength (kgf/cm²) | 1.14 | 1.18 | 1.25 | 0.96 | 0.45 | 0.51 | 0.48 |
| Dimensional stability (%) | -1.2 | -1.1 | -1.0 | -1.5 | -3.5 | -5.2 | -5.6 |

As is evident from Table 14, it is possible to produce foams excellent in flowability, adhesive strength and dimensional stability by using amine compounds of the present invention as catalysts.

Namely, Examples 49 to 52 are examples wherein rigid polyurethane foams were produced by using the catalysts of the present invention. In each Example, a rigid urethane foam excellent in flowability, adhesive strength and dimensional stability, was obtained.

Whereas, Comparative Examples 59 to 61 are examples wherein tertiary amine catalysts having no alkyl ether group or no aryl ether group in their molecules, were used, whereby the foams were inferior in flowability, adhesive strength and dimensional stability.

### EXAMPLES 53 to 56 and COMPARATIVE EXAMPLES 62 to 64

A polyol, a blowing agent and a foam stabilizer were mixed in a blend ratio as identified in Table 15 to prepare Premix A. 47.1 g of Premix A was taken into a 300 ml polyethylene cup, and a catalyst as identified in Table 15 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 16.

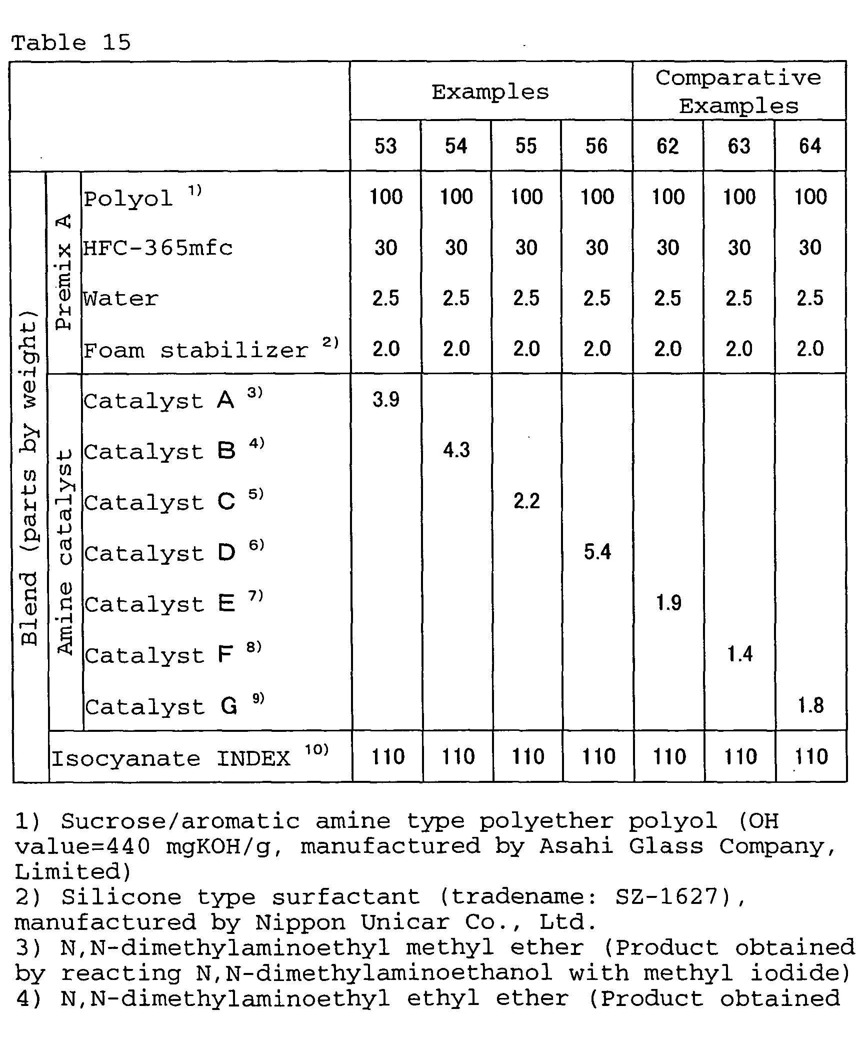

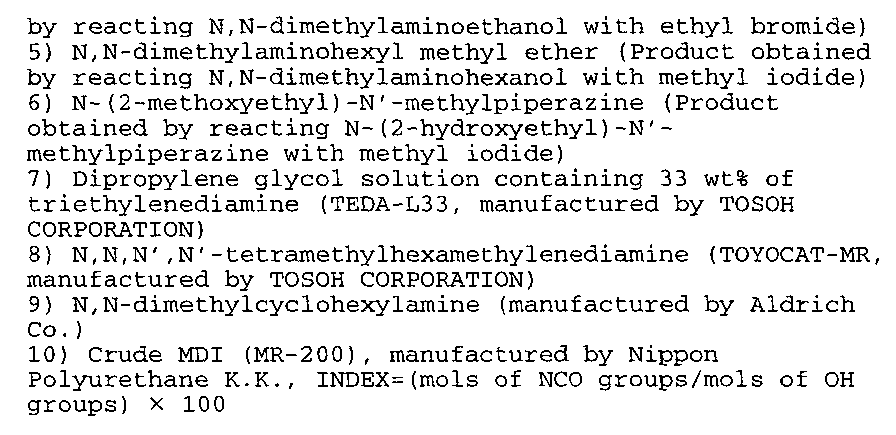

**Table 16**

| | Examples | | | | Comparative Examples | | |
|---|---|---|---|---|---|---|---|
| | 53 | 54 | 55 | 56 | 62 | 63 | 64 |
| Reactivity (sec) | | | | | | | |
| Cream time | 25 | 24 | 21 | 23 | 30 | 24 | 25 |
| Gel time | 90 | 90 | 89 | 90 | 90 | 90 | 91 |
| Tack free time | 155 | 150 | 141 | 153 | 136 | 137 | 133 |
| Rise time | 162 | 159 | 152 | 164 | 150 | 148 | 146 |

| Physical properties of foam | | | | | | | |
|---|---|---|---|---|---|---|---|
| Flowability (cm) | 81 | 81 | 80 | 80 | 72 | 75 | 76 |
| Core density (kg/m³) | 28.3 | 28.4 | 28.5 | 28.7 | 29.7 | 28.5 | 28.6 |
| Adhesive strength (kgf/cm²) | 1.38 | 1.43 | 1.50 | 1.18 | 0.67 | 0.76 | 0.72 |
| Dimensional stability (%) | -1.1 | -1.1 | -0.8 | -1.4 | -2.7 | -4.3 | -4.4 |

As is evident from Table 16, it is possible to produce foams excellent in flowability, adhesive strength and dimensional stability by using amine compounds of the present invention as catalysts.

Namely, Examples 53 to 56 are examples wherein rigid polyurethane foams were produced by using the catalysts of the present invention. In each Example, a rigid urethane foam excellent in flowability, adhesive strength and dimensional stability, was obtained.

Whereas, Comparative Examples 62 to 64 are examples wherein tertiary amine catalysts having no alkyl ether group or no aryl ether group in their molecules, were used, whereby the foams were inferior in flowability, adhesive strength and dimensional stability.

### EXAMPLES 57 to 60 and COMPARATIVE EXAMPLES 65 to 67

A polyol, a blowing agent and a foam stabilizer were mixed in a blend ratio as identified in Table 17 to prepare Premix A. 47.1 g of Premix A was taken into a 300 ml polyethylene cup, and a catalyst as identified in Table 17 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 18.

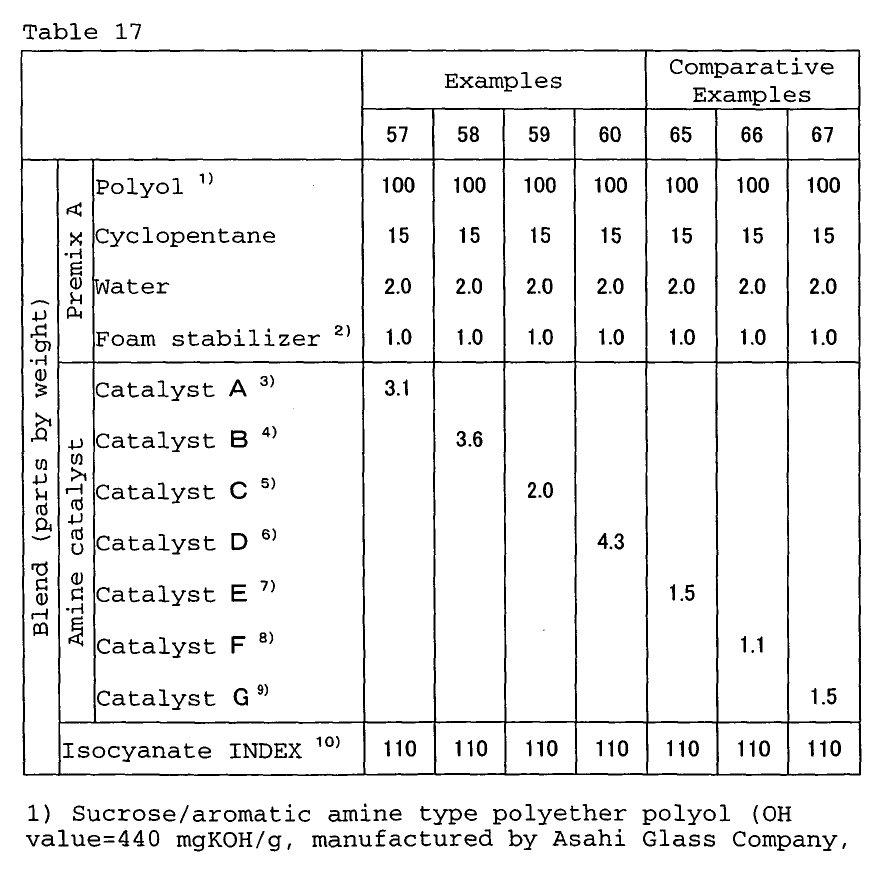

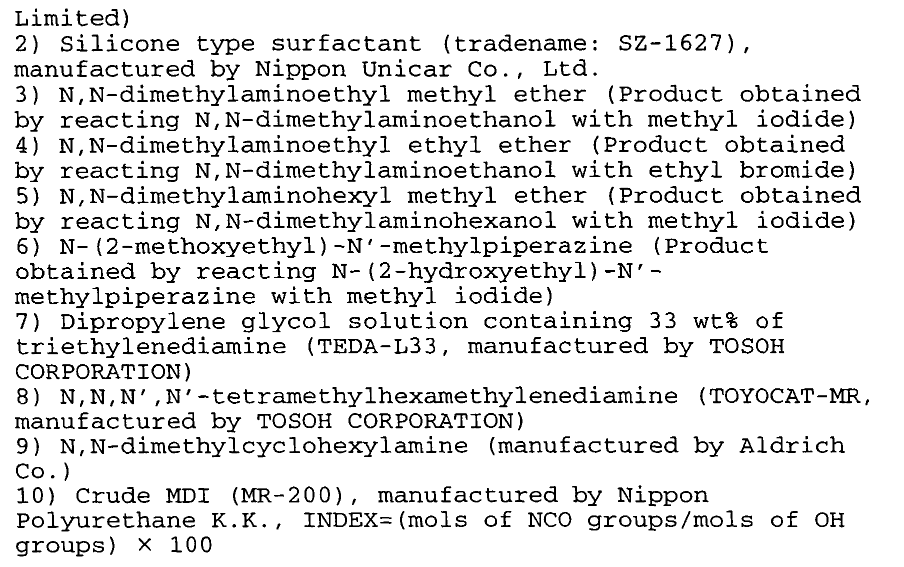

**Table 18**

| | Examples | | | | Comparative Examples | | |
|---|---|---|---|---|---|---|---|
| | 57 | 58 | 59 | 60 | 65 | 66 | 67 |
| Reactivity (sec) | | | | | | | |
| Cream time | 28 | 27 | 26 | 25 | 31 | 26 | 25 |
| Gel time | 91 | 90 | 90 | 90 | 90 | 90 | 90 |
| Tack free time | 153 | 148 | 136 | 150 | 132 | 132 | 128 |
| Rise time | 159 | 157 | 150 | 158 | 148 | 146 | 143 |

| Physical properties of foam | | | | | | | |
|---|---|---|---|---|---|---|---|
| Flowability (cm) | 79 | 78 | 77 | 78 | 70 | 72 | 72 |
| Core density (kg/m³) | 30.4 | 30.5 | 30.5 | 30.8 | 31.9 | 30.5 | 30.6 |
| Adhesive strength (kgf/cm²) | 1.66 | 1.72 | 1.81 | 1.43 | 0.94 | 1.07 | 1.01 |
| Dimensional stability (%) | -1.1 | -1.0 | -0.9 | -1.2 | -2.2 | -3.0 | -3.2 |

As is evident from Table 18, it is possible to produce foams excellent in flowability, adhesive strength and dimensional stability by using amine compounds of the present invention as catalysts.

Namely, Examples 57 to 60 are examples wherein rigid polyurethane foams were produced by using the catalysts of the present invention. In each Example, a rigid urethane foam excellent in flowability, adhesive strength and dimensional stability, was obtained.

Whereas, Comparative Examples 65 to 67 are examples wherein tertiary amine catalysts having no alkyl ether group or no aryl ether group in their molecules, were used, whereby the foams were inferior in flowability, adhesive strength and dimensional stability.

### EXAMPLES 61 to 64 and COMPARATIVE EXAMPLES 68 to 71

A polyol, a blowing agent and a foam stabilizer were mixed in a blend ratio as identified in Table 19 to prepare Premix A. 47.1 g of Premix A was taken into a 300 ml polyethylene cup, and a catalyst as identified in Table 19 was added in an amount such that the reactivity as represented by the following gel time would be 90 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 110, and immediately stirred by a stirrer at 6,500 rpm for 5 seconds. The mixed and stirred liquid was transferred to a 2 liter polyethylene cup having the temperature adjusted to 40°C, and the reactivity during foaming was measured. Then, the starting material scale was increased, and in the same manner, the mixed liquid was put into a mold having the temperature adjusted to 40°C, whereupon foam molding was carried out. Upon expiration of 10 minutes from the introduction of the mixed liquid, the foam was removed from the mold. From the molded foam, the flowability, core density, adhesive strength and dimensional stability of the foam were evaluated. The results are shown in Table 20.

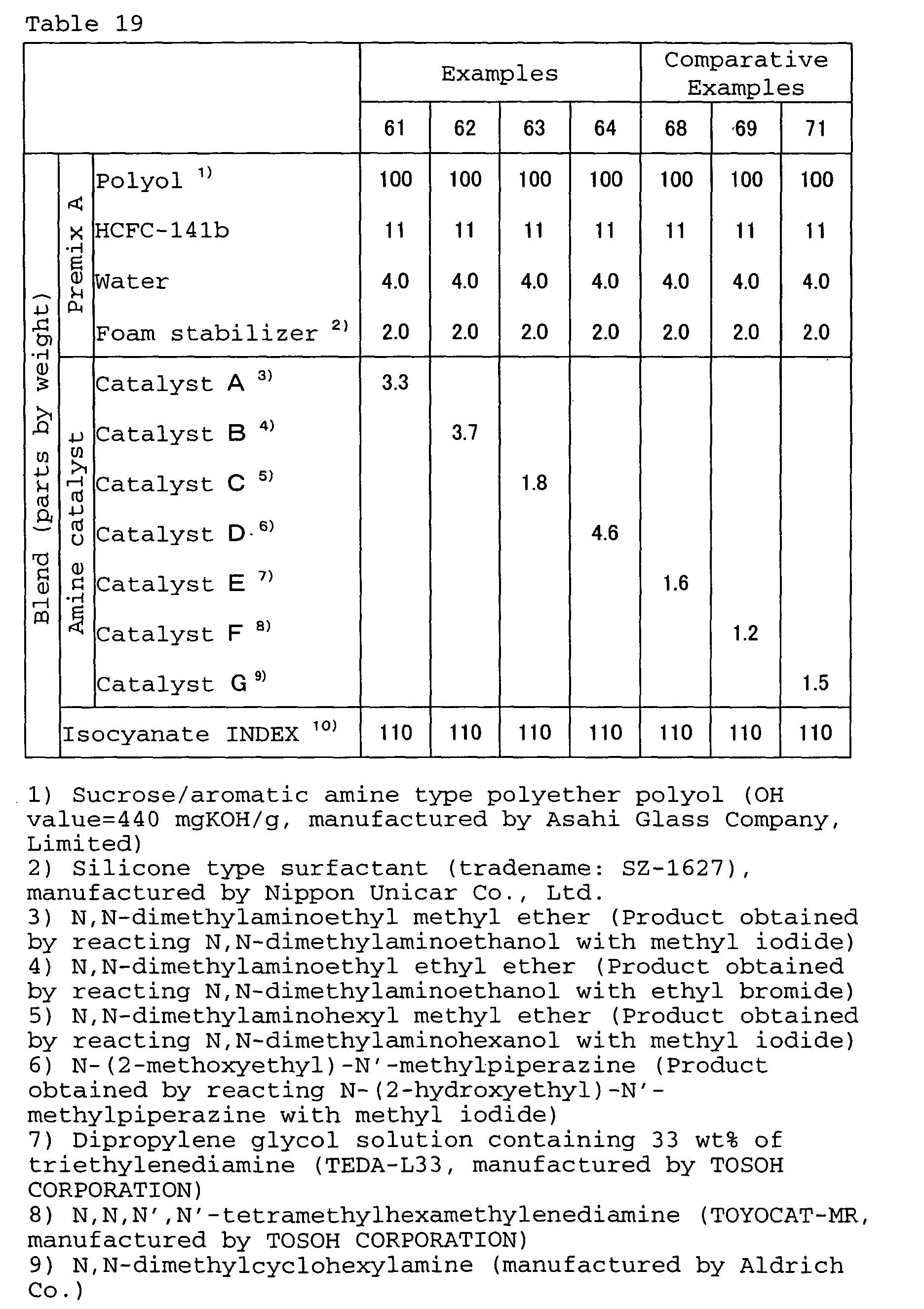

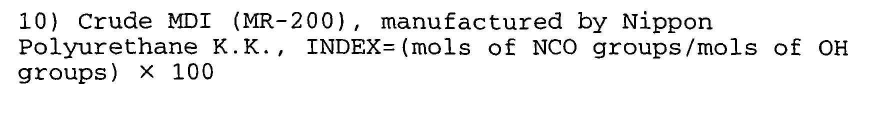

**Table 20**

| | Examples | | | | Comparative Examples | | |
|---|---|---|---|---|---|---|---|
| | 61 | 62 | 63 | 64 | 68 | 69 | 71 |
| Reactivity (sec) | | | | | | | |
| Cream time | 25 | 24 | 22 | 23 | 29 | 24 | 25 |
| Gel time | 91 | 90 | 90 | 90 | 90 | 90 | 90 |
| Tack free time | 156 | 151 | 148 | 152 | 146 | 147 | 143 |
| Rise time | 162 | 159 | 162 | 164 | 155 | 158 | 156 |

| Physical properties of foam | | | | | | | |
|---|---|---|---|---|---|---|---|
| Flowability (cm) | 84 | 83 | 82 | 82 | 73 | 77 | 77 |
| Core density (kg/m³) | 26.8 | 26.8 | 26.9 | 27.1 | 28.3 | 27.5 | 27.6 |
| Adhesive strength (kgf/cm²) | 1.43 | 1.48 | 1.55 | 1.22 | 0.69 | 0.78 | 0.75 |
| Dimensional stability (%) | -1.2 | -1.1 | -0.9 | -1.4 | -2.8 | -4.5 | -4.4 |

As is evident from Table 20, it is possible to produce foams excellent in flowability, adhesive strength and dimensional stability by using amine compounds of the present invention as catalysts.

Namely, Examples 61 to 64 are examples wherein rigid polyurethane foams were produced by using the catalysts of the present invention. In each Example, a rigid urethane foam excellent in flowability, adhesive strength and dimensional stability, was obtained.

Whereas, Comparative Examples 68 to 71 are examples wherein tertiary amine catalysts having no alkyl ether group or no aryl ether group in their molecules, were used, whereby the foams were inferior in flowability, adhesive strength and dimensional stability.

Now, referring to Examples and Comparative Examples, the catalyst for producing a rigid polyisocyanurate foam of the present invention, and the process for producing a rigid polyisocyanurate foam by using such a catalyst, will be described. However, it should be understood that the present invention is by no means restricted by such specific Examples.

### ·Measured items for the reactivity

Cream time: The time until the foam starts to rise was measured by visual observation.

Gel time: As the reaction proceeds, the time until the liquid substance changes to a resinous substance, was measured.

Tack free time: The time until tackiness of the foam surface disappears, was measured.

Rise time: The time until the rise of the foam stops, was measured by visual observation.

·Oxygen index: The oxygen index is an index to show the flame retardancy of a foam, and the combustion test method was carried out in accordance with ASTMD 2863D-74.

### ·Core density of foam:

Free foaming was carried out in a 0.5L polyethylene cup, and the center portion of the formed foam was cut into a size of 10×5×5 cm, whereupon the size and weight were accurately measured, and the core density was calculated.

### ·Adhesive strength of foam:

Free foaming was carried out by setting a zinc-lined iron plate of 5×5 cm on the upper side of a 0.5L polyethylene cup. After foaming for 1 hour, the peel strength at 90° of the set iron plate was measured and taken as the adhesive strength of the foam.

### ·Dimensional stability of foam:

A foam freely foam in a 0.5L polyethylene cup was maintained under a condition of -30°C × 48 hours, whereby a change in the thickness direction was measured. EXAMPLES 65 to 77 and 90

A polyol, a blowing agent and a foam stabilizer were mixed in a blend ratio as identified in Table 21 to prepare Premix A. As the blowing agent, 1,1,1,3,3-pentafluoropropane (HFC-245fa) was used. 24.0 g of Premix A was taken into a 0.5 L polyethylene cup, and a catalyst as identified in Table 21 was added in an amount such that the reactivity as represented by the following gel time would be 12 to 13 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 210, and immediately stirred by a stirrer at 7,000 rpm for 3 seconds. The reactivity during foaming of the mixed and stirred liquid, was measured. Then, using a foam freely foamed by the same operation as described above, the oxygen index, core density, adhesive strength and dimensional stability were evaluated.

### EXAMPLES 78 to 89

A polyol, a blowing agent and a foam stabilizer were mixed in a blend ratio as identified in Table 21 to prepare Premix A. As the blowing agent, 1,1,1,3,3-pentafluorobutane (HFC-365mfc) or 1,1-dichloro-1-fluoroethane (HCFC-141b) was used. 24.0 g of Premix A was taken into a 0.5 L polyethylene cup, and a catalyst as identified in Table 21 was added in an amount such that the reactivity as represented by the following gel time would be 12 to 13 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 210, and immediately stirred by a stirrer at 7,000 rpm for 3 seconds. The reactivity during foaming of the mixed and stirred liquid, was measured. Then, using a foam freely foamed by the same operation as described above, the oxygen index, core density, adhesive strength and dimensional stability were evaluated.

The results of Examples 65 to 90 are shown in Table 22.

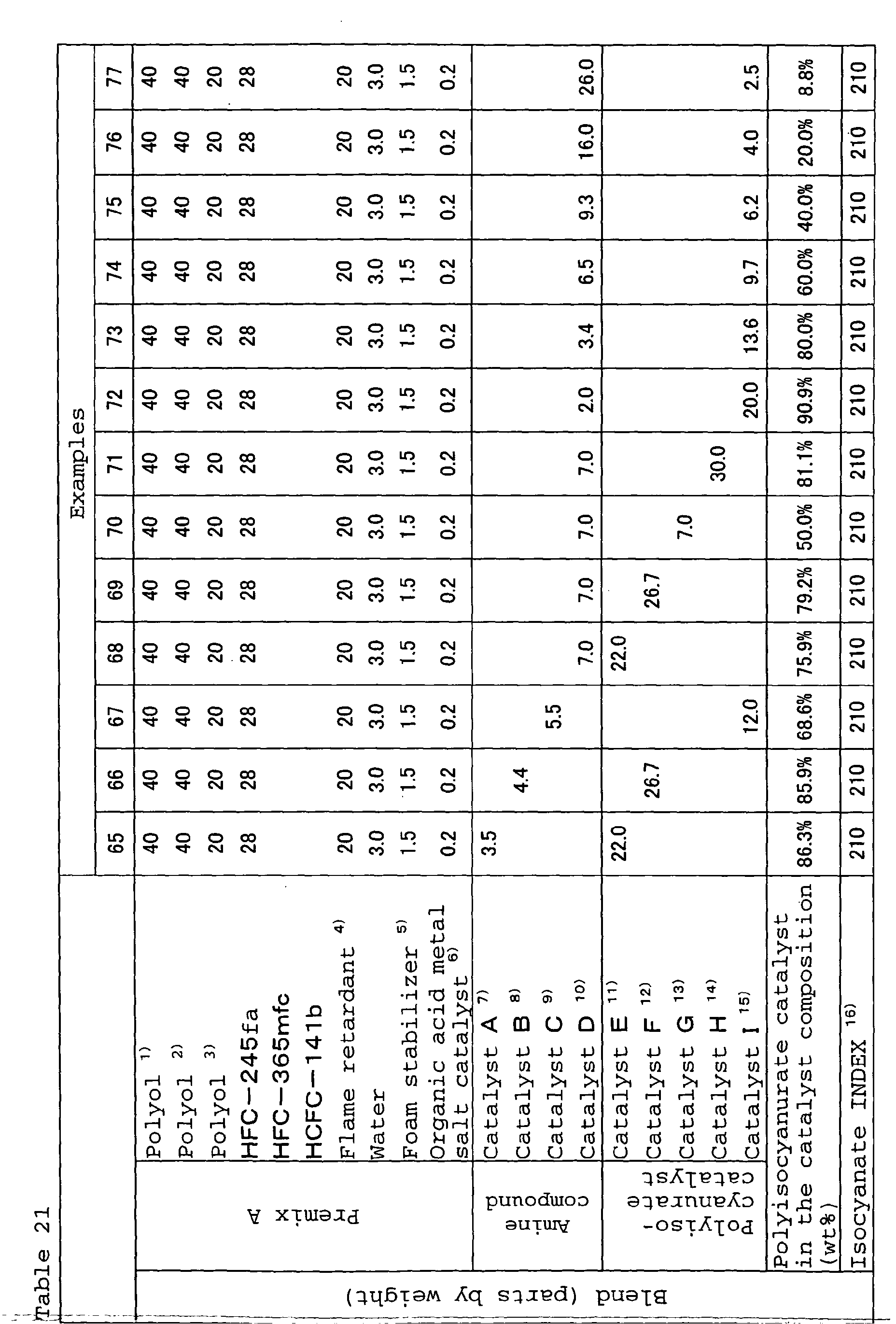

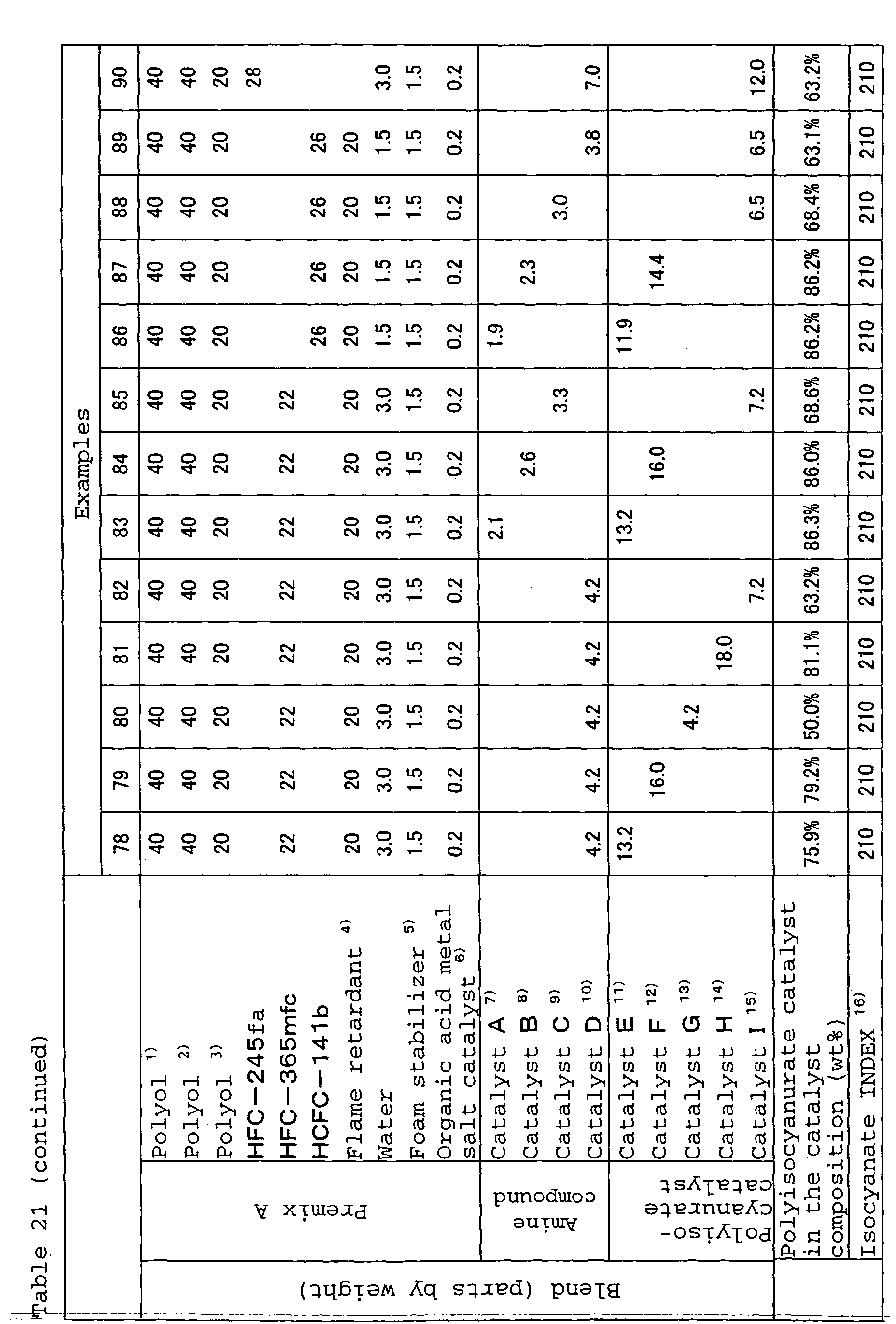

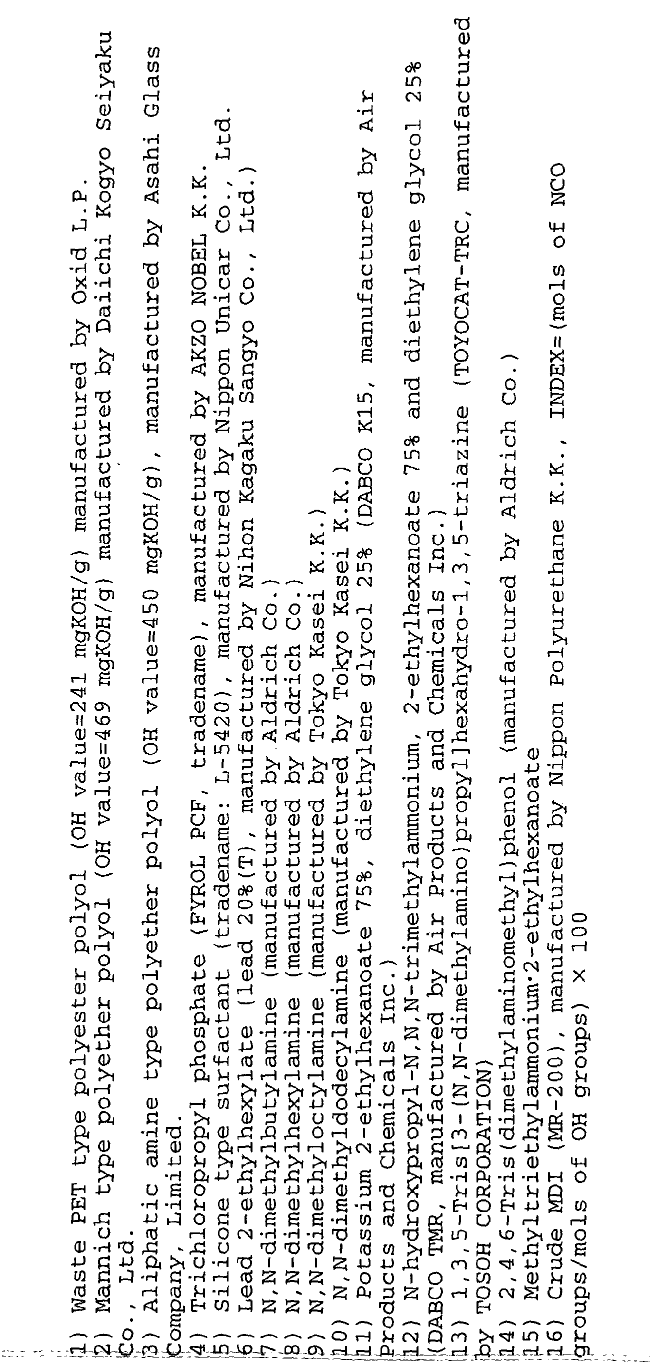

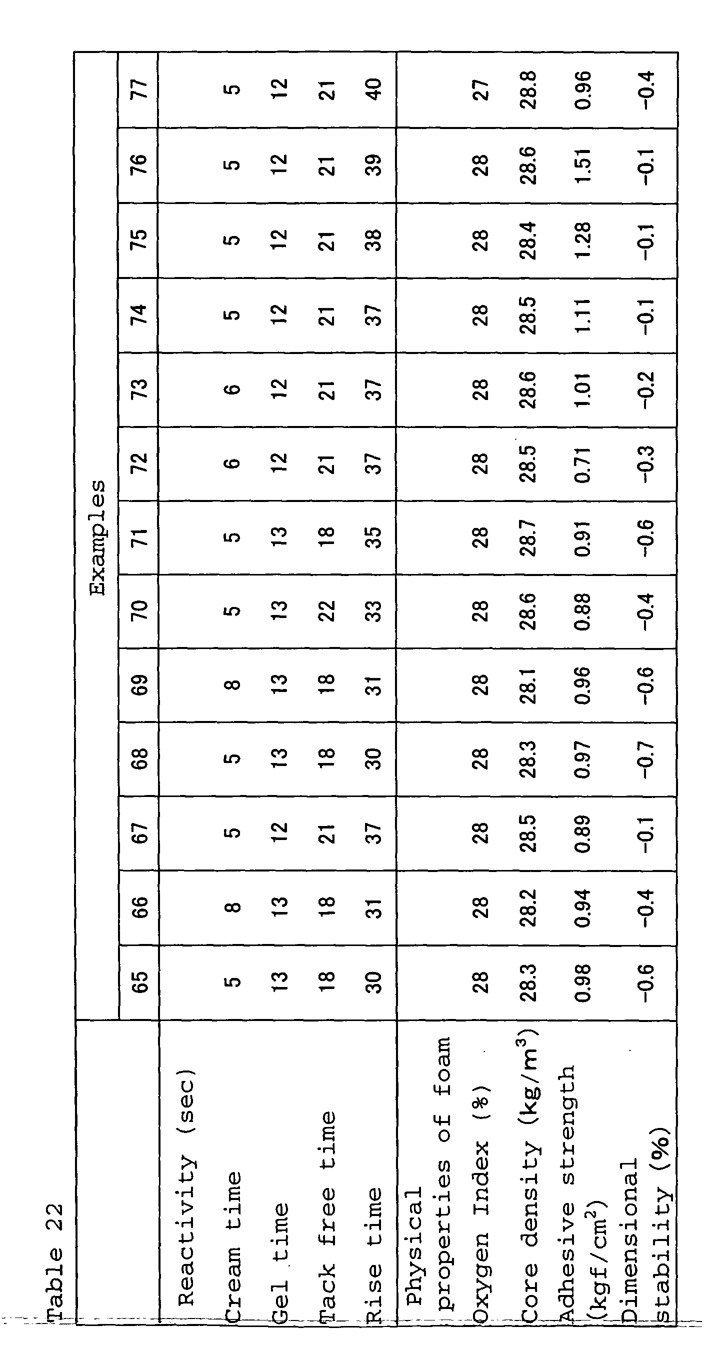

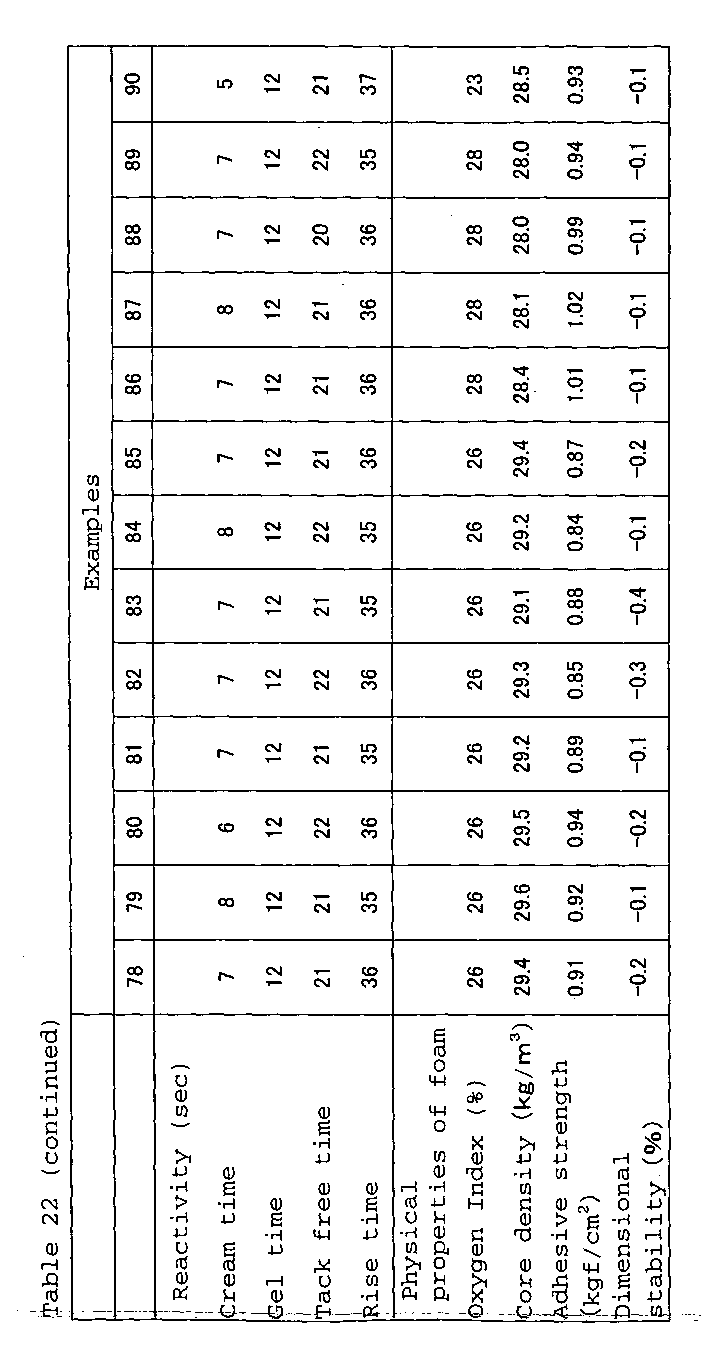

### COMPARATIVE EXAMPLES 72 to 79, 84 to 85, 88 to 89 and 92

A polyol, a blowing agent and a foam stabilizer were mixed in a blend ratio as identified in Table 23 to prepare Premix A. As the blowing agent, 1,1,1,3,3-pentafluoropropane (HFC-245fa) was used. 24.0 g of Premix A was taken into a 0.5 L polyethylene cup, and a catalyst as identified in Table 23 was added in an amount such that the reactivity as represented by the following gel time would be 12 to 13 seconds, whereupon the temperature was adjusted to 10°C. A polyisocyanate liquid (MR-200) having the temperature adjusted to 10°C in a separate container, was put into the cup of Premix A in such an amount that the isocyanate index [isocyanate groups/OH groups (molar ratio) × 100)] would be 210, and immediately stirred by a stirrer at 7,000 rpm for 3 seconds. The reactivity during foaming of the mixed and stirred liquid, was measured. Then, using a foam freely foamed by the same operation as described above, the oxygen index, core density, adhesive strength and dimensional stability were evaluated.

### COMPARATIVE EXAMPLES 80 to 83, 86 to 87, 90 and 91

A polyol, a blowing agent and a foam stabilizer were mixed in a blend ratio as identified in Table 23 to prepare Premix A. As the blowing agent, 1,1,1,3,3-pentafluorobutane (HFC-365mfc) or 1,1-dichloro-1-fluoroethane (HCFC-141b) was used. 24.0 g of Premix A was taken into a 0.5 L polyethylene cup, and a catalyst as identified in Table 23 was added in an amount such that the reactivity as represented by the following gel time would be 12 to 13 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 210, and immediately stirred by a stirrer at 7,000 rpm for 3 seconds. The reactivity during foaming of the mixed and stirred liquid, was measured. Then, using a foam freely foamed by the same operation as described above, the oxygen index, core density, adhesive strength and dimensional stability were evaluated.

The results of Comparative Examples 72 to 92 are shown in Table 24.

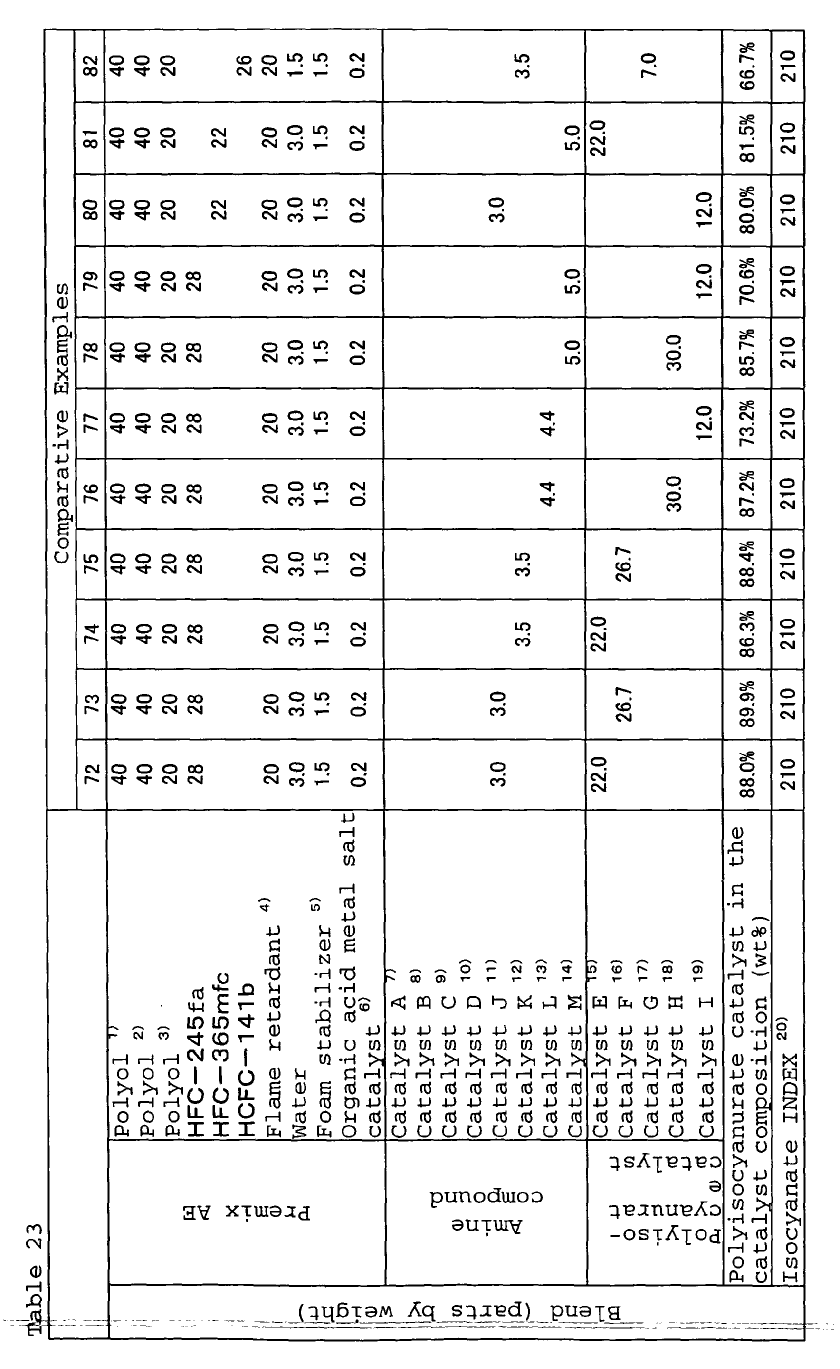

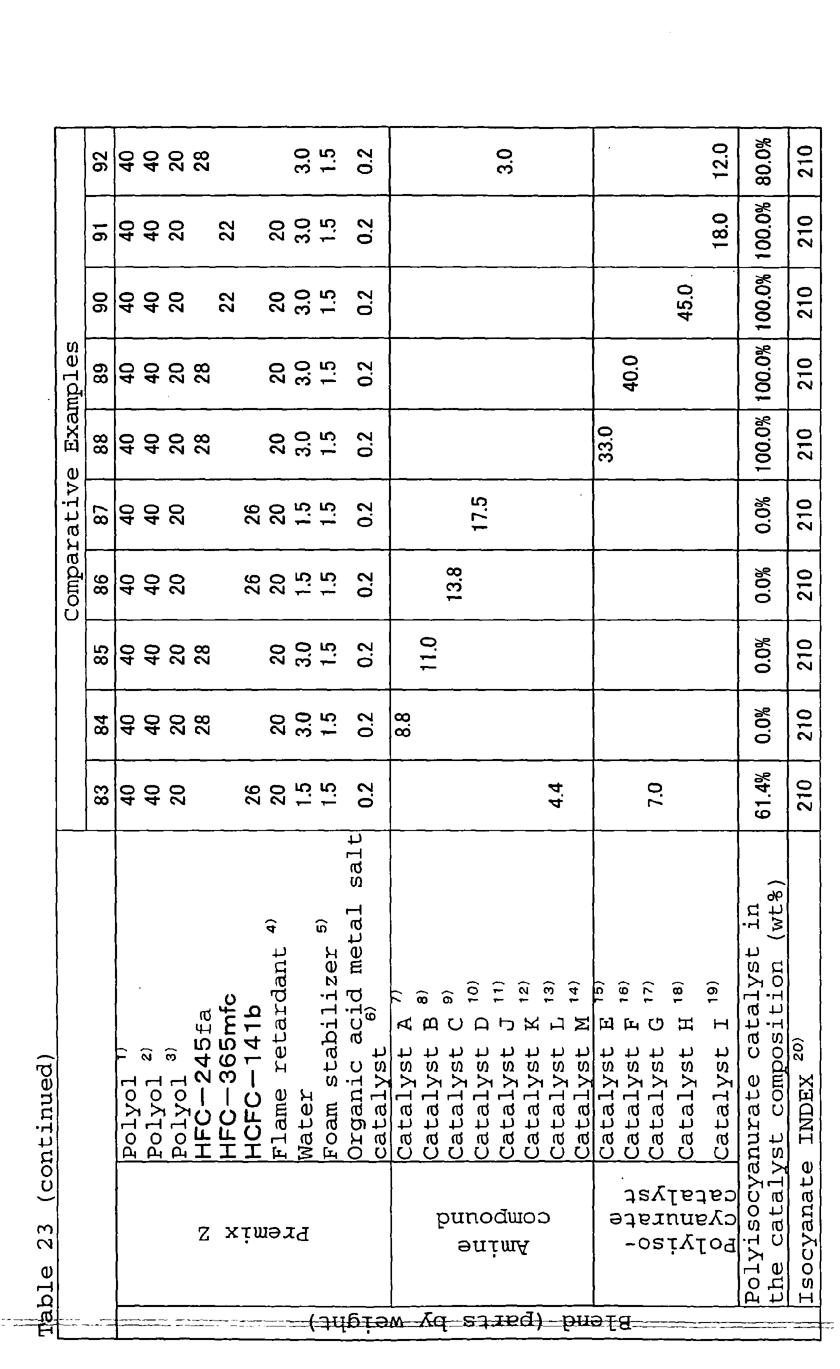

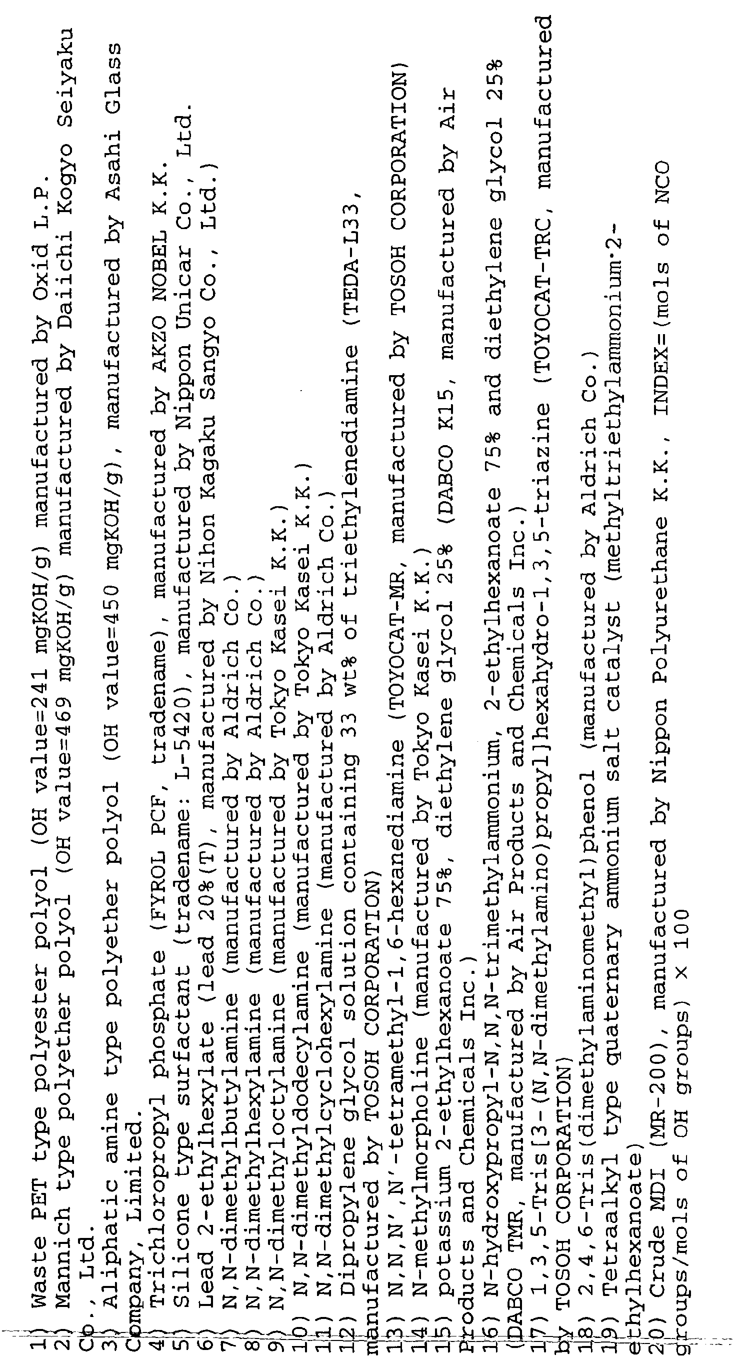

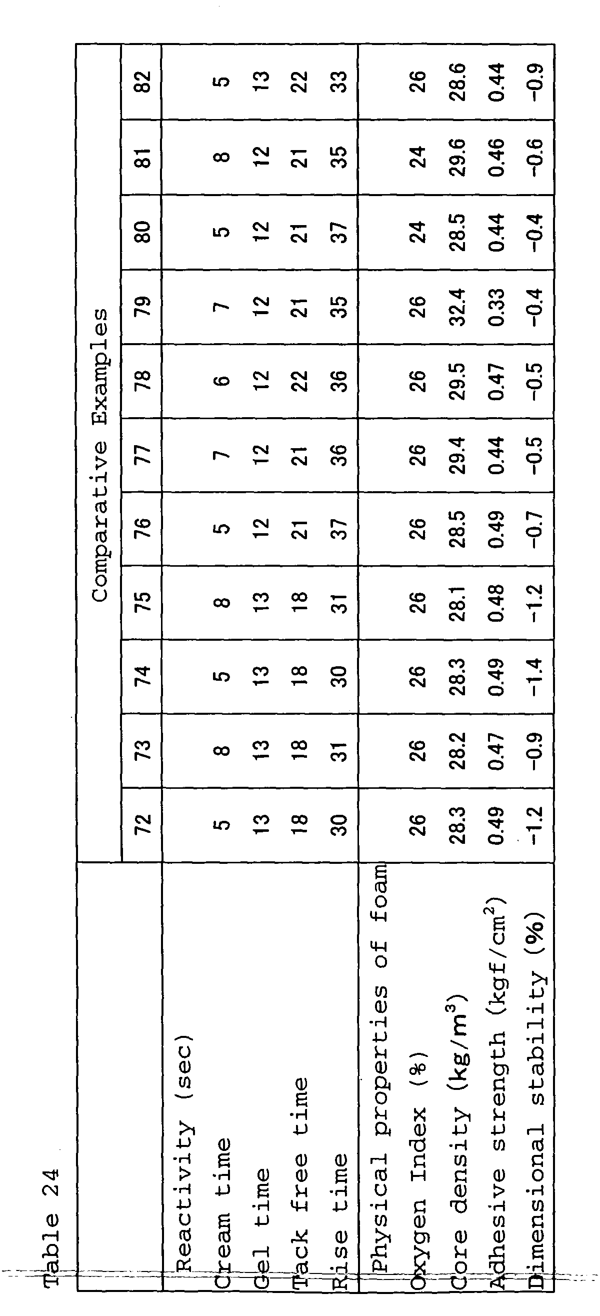

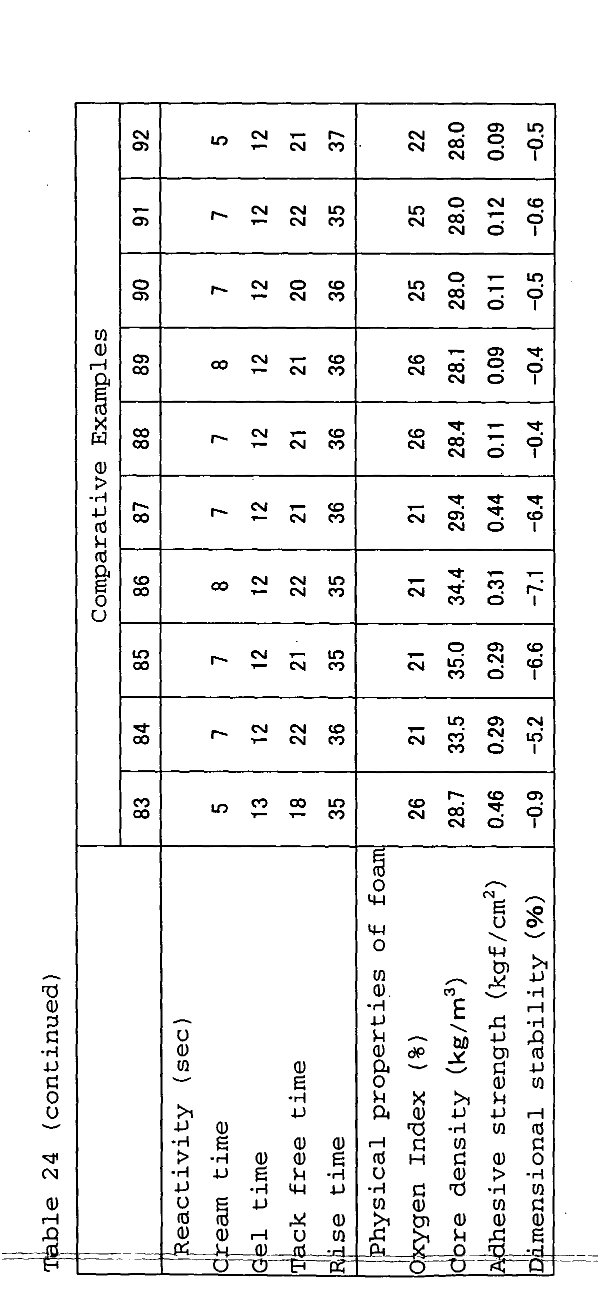

As is evident from Tables 22 and 24, it is possible to produce foams excellent in flame retardancy, adhesive strength and dimensional stability by using amine compounds of the present invention as catalysts.

Namely, Examples 65 to 71 and 73 to 76 are examples wherein rigid polyisocyanurate foams were produced by using the catalysts of the present invention and 1,1,1,3,3-pentafluoropropane (HFC-245fa) as a blowing agent. In each Example, a rigid polyisocyanurate foam excellent in flame retardancy, adhesive strength and dimensional stability, was obtained.

Further, Examples 78 to 89 are examples wherein rigid polyisocyanurate foams were produced by using catalysts of the present invention and 1,1,1,3,3-pentafluorobutane (HFC-365mfc) or 1,1-dichloro-1-fluoroethane (HCFC-141b) as a blowing agent. In each Example, a rigid polyisocyanurate foam excellent in flame retardancy, adhesive strength and dimensional stability was obtained.

Examples 72 is an example wherein the composition of the polyisocyanurate catalyst in the catalyst composition of the present invention exceeded 90 wt%, whereby a slight decrease in adhesive strength is observed. On the other hand, Example 77 is an example wherein the composition of the polyisocyanurate catalyst in the catalyst composition of the present invention was less than 10 wt%, a slight decrease in the flame retardancy and dimensional stability of the foam is observed. Accordingly, it is evident that the composition comprising from 10 to 90 wt% of an aliphatic amine compound of the above formula (1) and from 90 to 10 wt% of the polyisocyanurate catalyst, is advantageous from the viewpoint of the cost.

Whereas, Comparative Examples 72 to 83 are examples wherein rigid polyisocyanurate foams were produced by means of catalyst compositions comprising an amine compound other than the aliphatic amine compound of the present invention and the polyisocyanurate catalyst, whereby the foams were inferior in the flame retardancy, adhesive strength and dimensional stability.

Further, Comparative Examples 84 to 87 are examples wherein rigid polyisocyanunate foams were produced by using only the aliphatic amine compounds as catalysts, whereby large amounts of the catalysts were required, and the foams were inferior in the flame retardancy and dimensional stability. Further, Comparative Examples 88 to 91 are examples wherein rigid polyisocyanurate foams were produced by using only the polyisocyanurate catalyst (trimerization catalyst) without using an aliphatic amine compound, whereby the foams were inferior in the adhesive strength and dimensional stability.

Example 90 and Comparative Example 92 are examples wherein a rigid polyisocyanurate foam was produced without using a flame retardant and using 1,1,1,3,3-pentafluoropropane (HFC-245fa) as a blowing agent. In the case of Example 90 wherein the catalyst composition of the present invention was used, a rigid polyisocyanurate foam was obtained which was excellent in flame retardancy, adhesive strength and dimensional stability as compared with Comparative Example 92 wherein a catalyst composition comprising an amine compound other than the amine compound of the present invention and the polyisocyanurate catalyst, was used.

### EXAMPLES 91 to 100

A polyol, a blowing agent and a foam stabilizer were mixed in a blend ratio as identified in Table 25 to prepare Premix A. 24.0 g of Premix A was taken into a 0.5 L polyethylene cup, and a catalyst as identified in Table 25 was added in an amount such that the reactivity as represented by the following gel time would be 29 to 30 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 250, and immediately stirred by a stirrer at 6,000 rpm for 5 seconds. The reactivity during foaming of the mixed and stirred liquid, was measured. Then, using a foam freely foamed by the same operation as described above, the oxygen index, core density, adhesive strength and dimensional stability were evaluated.

The results of Examples 91 to 100 are shown in Table 26.

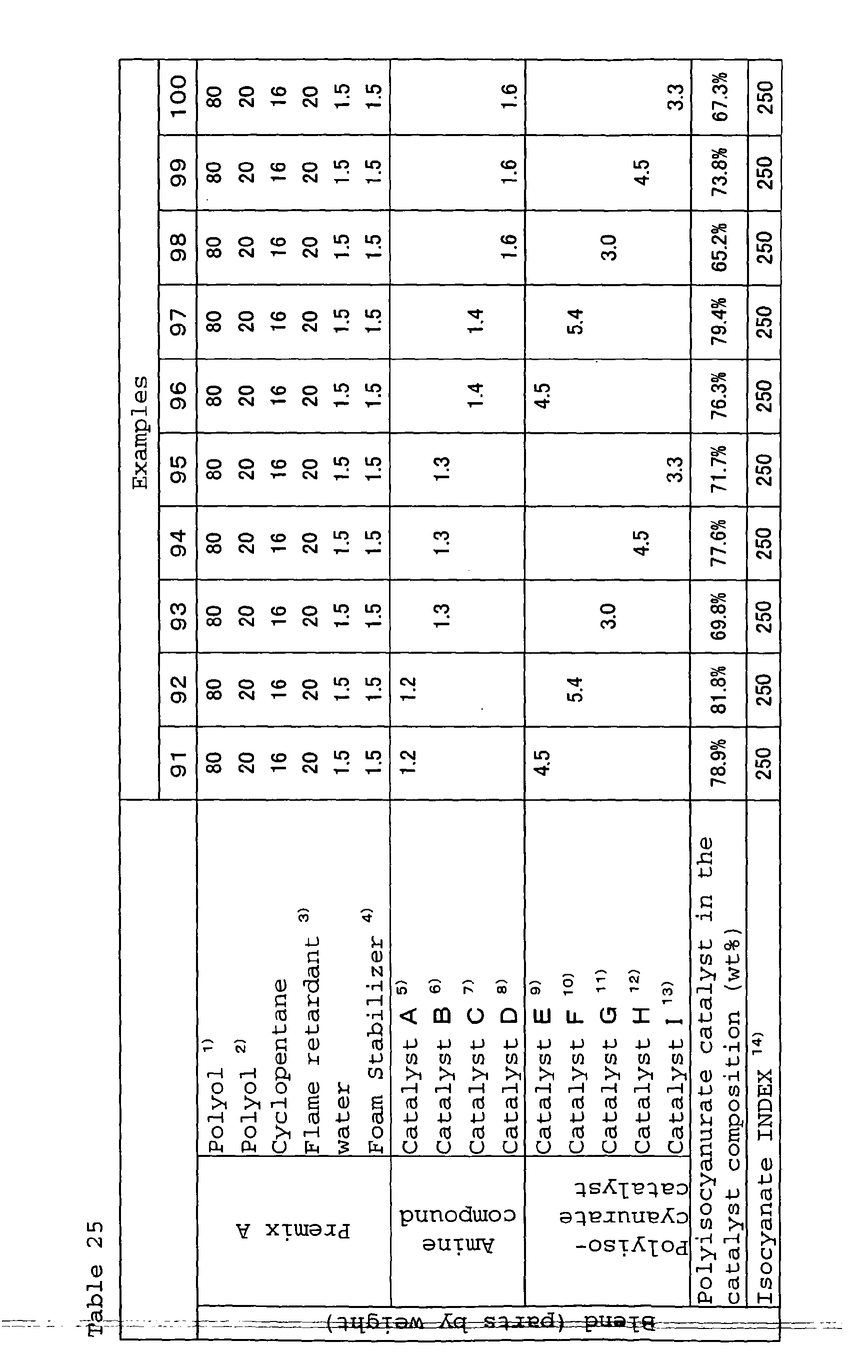

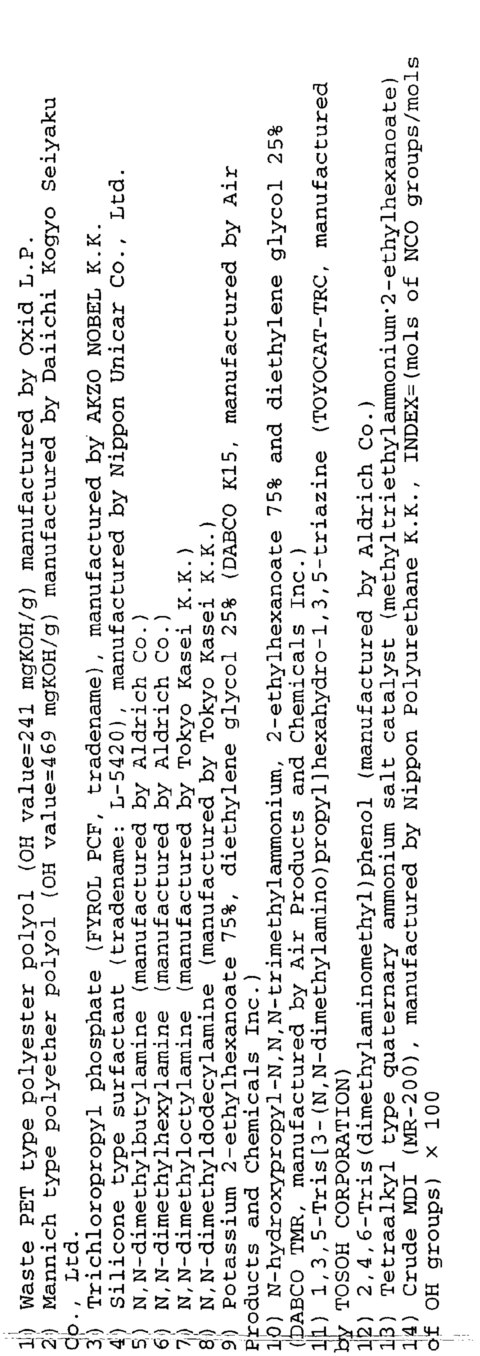

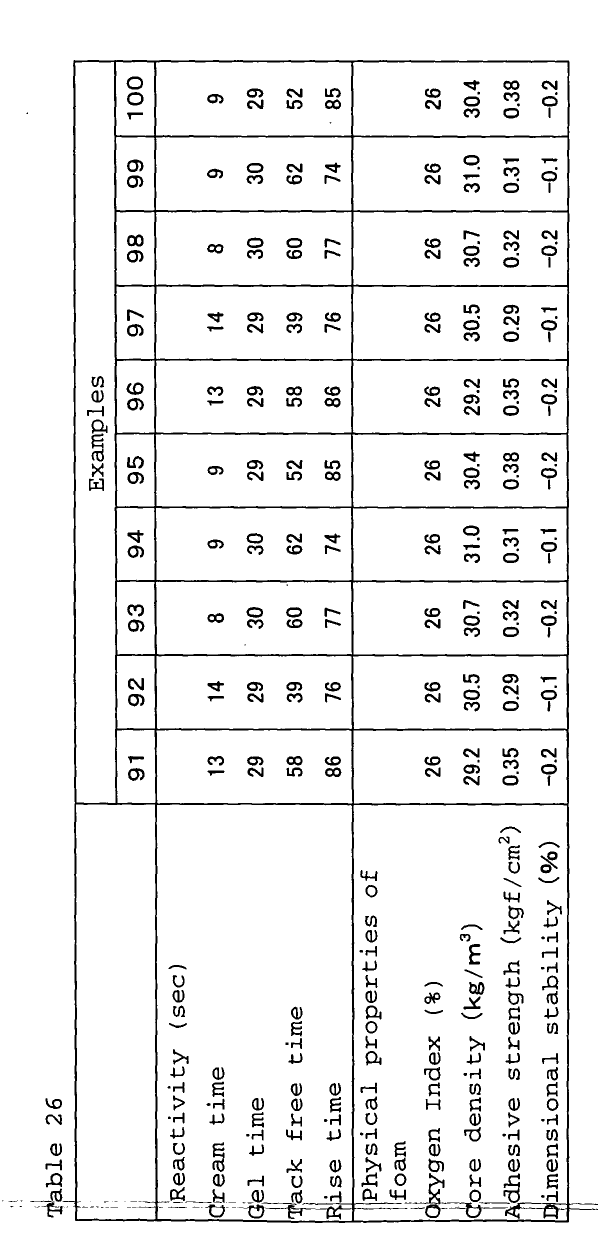

### COMPARATIVE EXAMPLES 93 to 103

A polyol, a blowing agent and a foam stabilizer were mixed in a blend ratio as identified in Table 27 to prepare Premix A. 24.0 g of Premix A was taken into a 0.5 L polyethylene cup, and a catalyst as identified in Table 27 was added in an amount such that the reactivity as represented by the following gel time would be 29 to 30 seconds, whereupon the temperature was adjusted to 20°C. A polyisocyanate liquid (MR-200) having the temperature adjusted to 20°C in a separate container, was put into the cup of Premix A in such an amount that the isocyanate index [isocyanate groups/OH groups (molar ratio) × 100)] would be 250, and immediately stirred by a stirrer at 6,000 rpm for 5 seconds. The reactivity during foaming of the mixed and stirred liquid, was measured. Then, using a foam freely foamed by the same operation as described above, the oxygen index, core density, adhesive strength and dimensional stability were evaluated.

The results of Comparative Examples 93 to 103 are shown in Table 28.

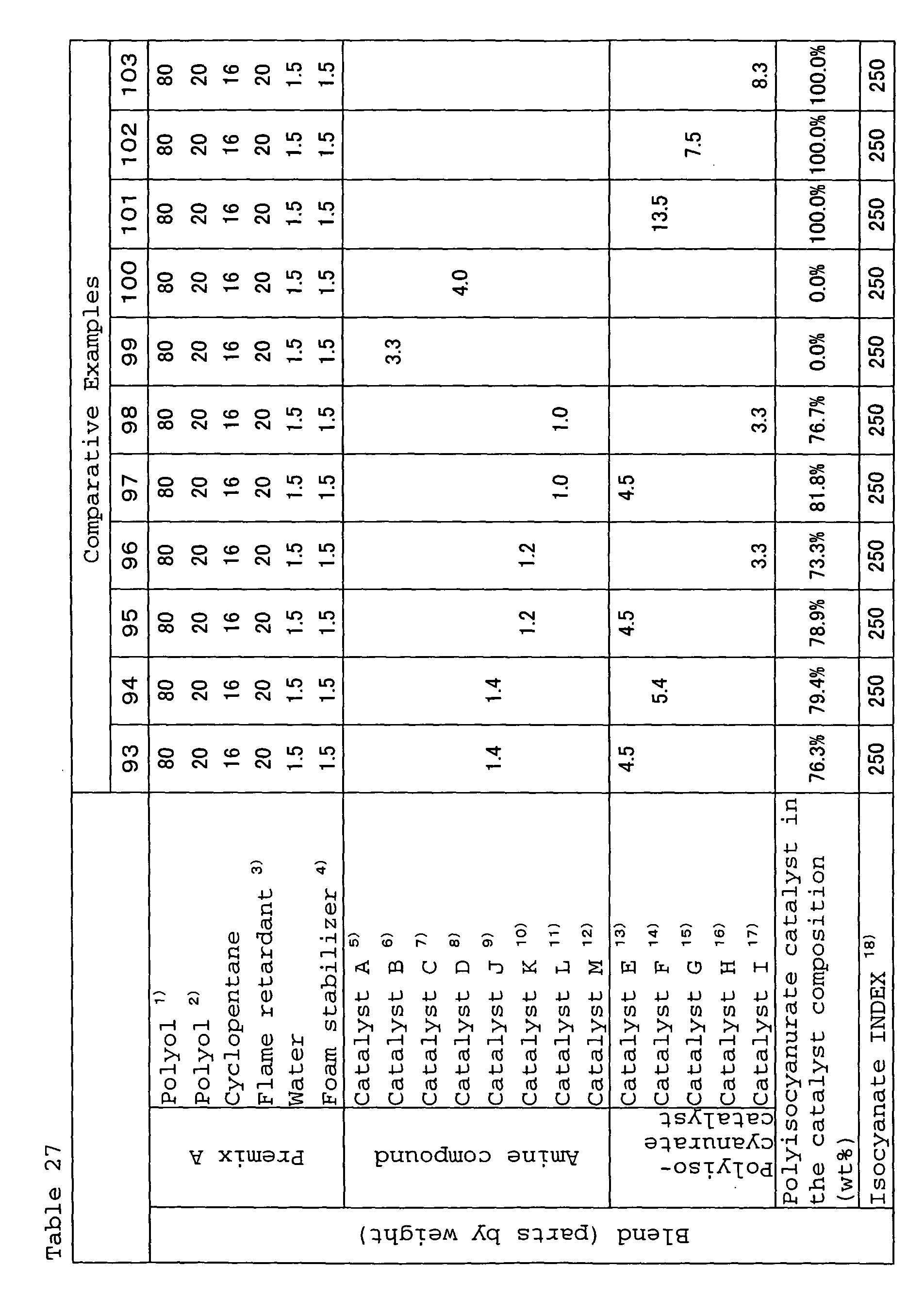

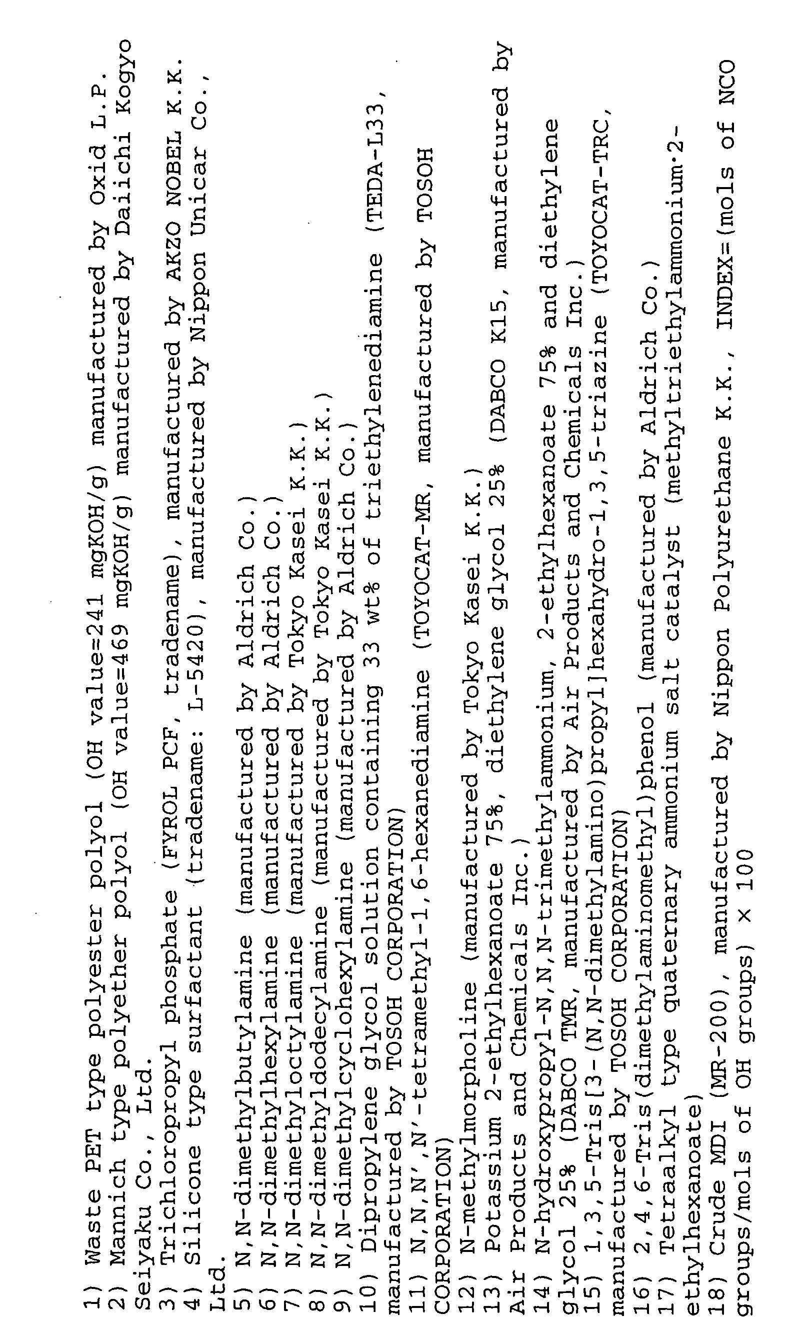

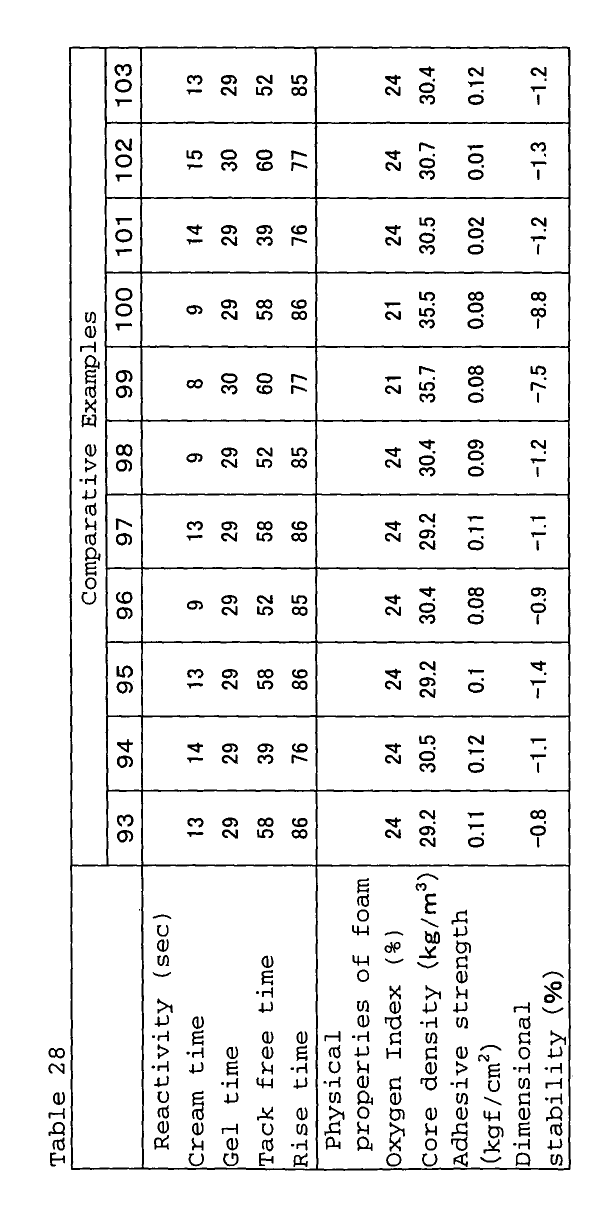

As is evident from Tables 26 and 28, it is possible to produce foams excellent in flame retardancy, adhesive strength and dimensional stability by using amine compounds of the present invention as catalysts.

Namely, Examples 91 to 100 are examples wherein rigid polyisocyanurate foams were produced by using the catalysts of the present invention and cyclopentane as a blowing agent. In each Example, a rigid polyisocyanurate foam excellent in flame retardancy, adhesive strength and dimensional stability, was obtained.

Whereas, Comparative Examples 93 to 98 are examples wherein rigid polyisocyanurate foams were produced by using a catalyst composition comprising an amine compound other than the amine compound of the present invention and the polyisocyanurate catalyst, whereby the foams were inferior in flame retardancy, adhesive strength and dimensional stability.

Further, Comparative Examples 99 and 100 are examples wherein rigid polyisocyanurate foams were produced by using only aliphatic amine compounds as catalysts, whereby large amounts of the catalysts were required, and the foams were inferior in flame retardancy, adhesive strength and dimensional stability. Further, Comparative Examples 101 to 103 are examples wherein rigid polyisocyanurate foams were produced by using only the polyisocyanurate catalyst as the catalyst without using an amine compound of the present invention, whereby the foams were inferior in adhesive strength and dimensional stability.

The entire disclosures of Japanese Patent Application No. 2002-205506 filed on July 15, 2002, Japanese Patent Application No. 2002-245644 filed on August 26, 2002, Japanese Patent Application No. 2002-261282 filed on September 6, 2002 and Japanese Patent Application No. 2003-110020 filed on April 15, 2003 including specifications, claims and summaries are incorporated herein by reference in their entireties.

The present invention relates to:
(1) a catalyst for producing a rigid polyurethane foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises:
   (A) an aliphatic amine compound and at least one amine compound selected from the group consisting of triethylenediamine, N,N,N',N'-tetramethyl-1,6-hexanediamine and N,N-dimethylcyclohexylamine: or
   (B) an amine compound having an alkyl ether group and/or an aryl ether group in its molecule;
(2) a catalyst for producing a rigid polyisocyanurate foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises an aliphatic amine compound and a polyisocyanurate catalyst;
(3) a process for producing a rigid polyurethane foam excellent in the adhesive strength and flame retardancy of the foam, by means of the above-mentioned catalyst for forming a rigid polyurethane foam and, as a blowing agent, at least one blowing agent selected from the group consisting of 1,1,1,3,3-pentafluoropropane (HFC-245fa), 1,1,1,3,3-pentafluorobutane (HFC-365mfc) and a low boiling point hydrocarbon; and
(4) a process for producing a rigid polyisocyanurate foam excellent in the flame retardancy, adhesive strength and dimensional stability of the foam, by means of the above-mentioned catalyst for producing a rigid polyisocyanurate foam and, as a blowing agent, at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

## Claims

1. A catalyst for producing a rigid polyurethane foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises:
(A) an amine compound of the following formula (1): 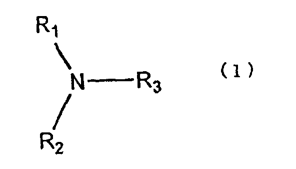 wherein each of R₁, R₂ and R₃ which are independent of one another, is a C₁₋₂₀ alkyl group, and at least one amine compound selected from the group consisting of triethylenediamine, N,N,N',N'-tetramethyl-1,6-hexanediamine and N,N-dimethylcyclohexylamine; or
(B) an amine compound having an alkyl ether group and/or an aryl ether group in its molecule.

2. The catalyst for producing a rigid polyurethane foam according to Claim 1, wherein in the formula (1), each of R₁, R₂ and R₃ which are independent of one another, is a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

3. The catalyst for producing a rigid polyurethane foam according to Claim 1, wherein the amine compound of the formula (1) is at least one amine compound selected from the group consisting of trimethylamine, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine and dimethylhexadecylamine.

4. The catalyst for producing a rigid polyurethane foam according to any one of Claims 1 to 3, wherein the composition of the amine compound of the formula (1) and said at least one amine compound selected from the group consisting of triethylenediamine, N,N,N',N'-tetramethyl-1,6-hexanediamine and N,N-dimethylcyclohexylamine, comprises from 10 to 95 wt% of the amine compound of the formula (1) and from 90 to 5 wt% of said at least one amine compound selected from the group consisting of triethylenediamine, N,N,N',N'-tetramethyl-1,6-hexanediamine and N,N-dimethylcyclohexylamine.

5. A catalyst for producing a rigid polyisocyanurate foam by means of at least one blowing agent selected from the group consisting of 1,1,1,3,3-pentafluoropropane (HFC-245fa), 1,1,1,3,3-pentafluorobutane (HFC-365mfc) and a low boiling point hydrocarbon, which comprises an aliphatic amine compound of the following formula (1): 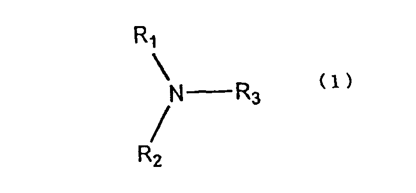 wherein each of R₁, R₂ and R₃ which are independent of one another, is a C₁₋₂₀ alkyl group, and a polyisocyanurate catalyst.

6. The catalyst for producing a rigid polyisocyanurate foam according to Claim 5, wherein in the formula (1), each of R₁, R₂ and R₃ which are independent of one another, is a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

7. The catalyst for producing a rigid polyisocyanurate foam according to Claim 5, wherein the amine compound of the formula (1) is at least one amine compound selected from the group consisting of dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine and dimethylhexadecylamine.

8. The catalyst for producing a rigid polyisocyanurate foam according to any one of Claims 5 to 7, wherein the polyisocyanurate catalyst is at least one polyisocyanurate catalyst selected from the group consisting of organic metal type catalysts such as alkali metal salts of carboxylic acids, alkaline earth metal salts of carboxylic acids, metal alcoholates, metal phenolates and metal hydroxides, tertiary amines, tertiary phosphines, onium salt compounds of phosphorus and quaternary ammonium salts.

9. The catalyst for producing a rigid polyisocyanurate foam according to any one of Claims 5 to 8, wherein the composition of the aliphatic amine compound of the formula (1) and the polyisocyanurate catalyst, comprises from 10 to 90 wt% of the aliphatic amine compound of the formula (1) and from 90 to 10 wt% of the polyisocyanurate catalyst.

10. A process for producing a rigid polyurethane foam, which comprises reacting a polyol with a polyisocyanate in the presence of an amine catalyst and a blowing agent, wherein the amine catalyst is:
(A) a catalyst composition comprising an amine compound of the following formula (1): 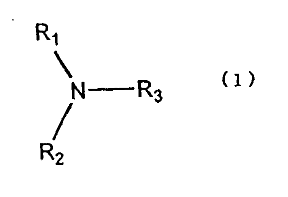 wherein each of R₁, R₂ and R₃ which are independent of one another, is a C₁₋₂₀ alkyl group, and at least one compound selected from the group consisting of triethylenediamine, N,N,N',N'-tetramethyl-1,6-hexanediamine and N,N-dimethylcyclohexylamine; or
(B) a catalyst comprising an amine compound having an alkyl ether group and/or an aryl ether group in its molecule; and the blowing agent is:
at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

11. The process for producing a rigid polyurethane foam according to Claim 10, wherein in the formula (1), each of R₁, R₂ and R₃ which are independent of one another, is a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

12. The process for producing a rigid polyurethane foam according to Claim 10, wherein the amine compound of the formula (1) is at least one amine compound selected from the group consisting of trimethylamine, dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine and dimethylhexadecylamine.

13. The process for producing a rigid polyurethane foam according to any one of Claims 10 to 12, wherein the composition of the amine compound of the formula (1) and said at least one amine compound selected from the group consisting of triethylenediamine, N,N,N',N'-tetramethyl-1,6-hexanediamine and N,N-dimethylcyclohexylamine, comprises from 10 to 95 wt% of the amine compound of the formula (1) and from 90 to 5 wt% of said at least one amine compound selected from the group consisting of triethylenediamine, N,N,N',N'-tetramethyl-1,6-hexanediamine and N,N-dimethylcyclohexylamine.

14. The process for producing a rigid polyurethane foam according to any one of Claims 10 to 13, wherein the low boiling point hydrocarbon is a hydrocarbon having a boiling point of from -30 to 90°C.

15. The process for producing a rigid polyurethane foam according to Claim 14, wherein the hydrocarbon having a boiling point of from -30 to 90°C, is at least one hydrocarbon selected from the group consisting of propane, butane, 2-methylpropane, pentane, cyclopentane, 2-methylbutane, 2,2-dimethylpropane, cyclopropane, hexane, 2-methylpentane, 3-methylpentane, 2,2-dimethylbutane, cyclohexane, 2,4-dimethylpropane, 3,3-dimethylpropane and 2,2,3-trimethylbutane.

16. The process for producing a rigid polyurethane foam according to any one of Claims 10 to 15, wherein the amine catalyst is used in an amount of from 0.01 to 20 parts by weight per 100 parts by weight of the polyol.

17. The process for producing a rigid polyurethane foam according to any one of Claims 10 to 16, wherein a foam stabilizer is used as an auxiliary agent.

18. The process for producing a rigid polyurethane foam according to any one of Claims 10 to 17, wherein a cross-liking agent and/or a chain extender is used as an auxiliary agent.

19. The process for producing a rigid polyurethane foam according to any one of Claims 10 to 18, wherein a flame retardant is used as an auxiliary agent.

20. A process for producing a rigid polyisocyanurate foam, which comprises reacting a polyol with a polyisocyanate in the presence of a catalyst and a blowing agent, wherein the catalyst is a catalyst composition comprising an aliphatic amine compound of the following formula (1): 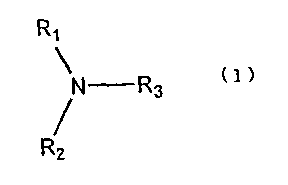 wherein each of R₁, R₂ and R₃ which are independent of one another, is a C₁₋₂₀ alkyl group, and a polyisocyanurate catalyst, and the blowing agent is at least one blowing agent selected from the group consisting of 1,1,1,3,3-pentafluoropropane (HFC-245fa), 1,1,1,3,3-pentafluorobutane (HFC-365mfc) and a low boiling point hydrocarbon.

21. The process for producing a rigid polyisocyanurate foam according to Claim 20, wherein in the formula (1), each of R₁, R₂ and R₃ which are independent of one another, is a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a heptadecyl group or a hexadecyl group.

22. The process for producing a rigid polyisocyanurate foam according to Claim 20, wherein the aliphatic amine compound of the formula (1) is at least one amine compound selected from the group consisting of dimethylethylamine, dimethylpropylamine, dimethylbutylamine, dimethylpentylamine, dimethylhexylamine, dimethylheptylamine, dimethyloctylamine, dimethylnonylamine, dimethyldecylamine, dimethylundecylamine, dimethyldodecylamine, dimethyltridecylamine, dimethyltetradecylamine, dimethylpentadecylamine and dimethylhexadecylamine.

23. The process for producing a rigid polyisocyanurate foam according to Claim 20, wherein the polyisocyanurate catalyst is at least one polyisocyanurate catalyst selected from the group consisting of organic metal type catalysts such as alkali metal salts of carboxylic acids, alkaline earth metal salts of carboxylic acids, metal alcoholates, metal phenolates and metal hydroxides, tertiary amines, tertiary phosphines, onium salt compounds of phosphorus and quaternary ammonium salts.

24. The process for producing a rigid polyisocyanurate foam according to any one of Claims 20 to 23, wherein the composition of the aliphatic amine compound of the formula (1) and the polyisocyanurate catalyst, comprises from 10 to 90 wt% of the aliphatic amine compound of the formula (1) and from 90 to 10 wt% of the polyisocyanurate catalyst.

25. The process for producing a rigid polyisocyanurate foam according to any one of Claims 20 to 24, wherein the catalyst composition comprising the aliphatic amine of the formula (1) and the polyisocyanurate catalyst, is used in an amount of from 0.01 to 40 parts by weight per 100 parts by weight of the polyol.

26. The process for producing a rigid polyisocyanurate foam according to any one of Claims 20 to 25, wherein a foam stabilizer is used as an auxiliary agent.

27. The process for producing a rigid polyisocyanurate foam according to any one of Claims 20 to 26, wherein a cross-liking agent and/or a chain extender is used as an auxiliary agent.

28. The process for producing a rigid polyisocyanurate foam according to any one of Claims 20 to 27, wherein a flame retardant is used as an auxiliary agent.
